(19) Europäisches Patentamt
European Patent Office
Office européen des brevets

(11) **EP 4 725 786 A1**

(12) **EUROPEAN PATENT APPLICATION**
published in accordance with Art. 153(4) EPC

(43) Date of publication:
**15.04.2026 Bulletin 2026/16**

(21) Application number: **24850967.1**

(22) Date of filing: **05.08.2024**

(51) International Patent Classification (IPC):
**B60W 50/14** (2020.01)        **G08G 1/14** (2006.01)
**G08G 1/017** (2006.01)        **G08G 1/137** (2006.01)

(52) Cooperative Patent Classification (CPC):
**B60W 30/06; B60W 50/14; B60W 60/00;
G08G 1/017; G08G 1/137; G08G 1/14;
H04W 4/024; H04W 4/40**

(86) International application number:
**PCT/CN2024/109831**

(87) International publication number:
**WO 2025/031322 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.08.2023 CN 202310990651**

(71) Applicant: **Huawei Technologies Co., Ltd.
Shenzhen, Guangdong 518129 (CN)**

(72) Inventors:
• **WANG, Shangkai**
  **Shenzhen, Guangdong 518129 (CN)**
• **LIU, Xiaolong**
  **Shenzhen, Guangdong 518129 (CN)**
• **QIU, Huizhen**
  **Shenzhen, Guangdong 518129 (CN)**
• **LUO, Zhenhui**
  **Shenzhen, Guangdong 518129 (CN)**

(74) Representative: **Thun, Clemens
  Mitscherlich PartmbB
  Karlstraße 7
  80333 München (DE)**

(54) **POSITIONING METHOD, AND SYSTEM AND RELATED APPARATUS**

(57)    A positioning method is provided, including the following steps: When detecting that a vehicle (200) travels to a first elevator in a parking lot, a terminal (100) displays a first control, first prompt information, and a first traveling trajectory, where the first traveling trajectory indicates the vehicle (200) to travel into a first vacant parking space, and the first prompt information is used to prompt a user to get off the vehicle at a first elevator. The terminal (100) receives a first input for the first control, and sends a first message to the vehicle (200) in response to the first input, where the first message indicates the vehicle (200) to travel into the first vacant parking space based on the first traveling trajectory. In this way, after traveling into the parking lot, the vehicle (200) automatically proceeds to the vacant parking space based on the first traveling trajectory. This saves user's time in searching for a parking space for parking in the parking lot and improves parking efficiency. A system and a related apparatus for implementing the positioning method are further provided.

S401: A terminal 100 detects traveling into a parking lot of a building 10, and collects a traveling trajectory of the terminal 100 that departs from an entry of the parking lot, radio signal fingerprints at a plurality of positions on the traveling trajectory of the terminal 100, and a vacant parking space near the traveling trajectory of the terminal 100

S402: The terminal 100 obtains, from a server 300 based on collected data, one or more traveling trajectories indicating a vehicle 200 to proceed to vacant parking spaces in the building 10

S403: The terminal 100 displays the one or more traveling trajectories that are provided by the server 300 and that indicate the vehicle 200 to proceed to the vacant parking spaces, position information of the vacant parking spaces, and vacant parking space prompt information, where the vacant parking space prompt information is used to prompt a user to proceed to the vacant parking space based on the traveling trajectory

FIG. 4

**Description**

This application claims priority to Chinese Patent Application No. 202310990651.9, filed with the China National Intellectual Property Administration on August 7, 2023 and entitled "POSITIONING METHOD, SYSTEM, AND RELATED APPARATUS", which is incorporated herein by reference in its entirety.

**TECHNICAL FIELD**

This application relates to the terminal field, and in particular, to a positioning method, a system, and a related apparatus.

**BACKGROUND**

In current traveling scenarios, many users choose to travel by vehicle. After driving a vehicle to a destination, the user needs to search for a parking space for parking in a parking lot of the destination. When a lot of vehicles are parked in the parking lot, the user needs to spend more time in searching for a vacant parking space. Currently, parking space systems are deployed in some parking lots to resolve a problem of parking difficulties. However, construction and maintenance of the parking space systems require high costs, and application scenarios are limited.

After getting off the vehicle, the user needs to proceed to an elevator and take the elevator to another floor. When the user is unfamiliar with a layout of the parking lot, it takes some time to search for the elevator. When the user wants to leave, the user needs to return to search for the vehicle. Some parking lots have large areas and complex structures. If the user does not remember a floor number, a parking space number, or a parking position of the vehicle, it is difficult for the user to find the vehicle of the user, and it usually takes a large amount of time to search for the vehicle. Currently, the user can use a global positioning system (global positioning system, GPS) to search for the position of the vehicle. However, in many parking lots, especially in underground parking lots, a GPS signal received by user equipment is very poor, and the user equipment even cannot receive the GPS signal. In this case, it is difficult to locate a correct position. Therefore, the user usually needs to spend a large amount of time to search for the elevator and the vehicle, and user experience is poor.

Therefore, when the user arrives inside an unfamiliar building, it is inconvenient to find the parking space, the elevator, or the vehicle.

**SUMMARY**

This application provides a positioning method, a system, and a related apparatus, so that after traveling into a parking lot, a terminal obtains, from a server based on a collected traveling trajectory and a collected radio signal fingerprint, a first traveling trajectory indicating a vehicle to proceed to a first vacant parking space. The terminal sends the first traveling trajectory to the vehicle, and the vehicle automatically proceeds to the first vacant parking space based on the first traveling trajectory, so that user's time in searching for a parking space for parking in the parking lot is reduced, and parking efficiency is improved.

According to a first aspect, this application provides a positioning method, applied to a terminal. The method includes: displaying a first control, first prompt information, and a first traveling trajectory when it is detected that a vehicle travels to a first elevator in a parking lot, where the first traveling trajectory indicates the vehicle to travel into a first vacant parking space, and the first prompt information is used to prompt a user to get off the vehicle at the first elevator; receiving a first input for the first control; and sending a first message to the vehicle in response to the first input, where the first message indicates the vehicle to travel into the first vacant parking space based on the first traveling trajectory. In this way, after detecting that the vehicle travels into the parking lot, the terminal displays the first traveling trajectory that guides the user to the first vacant parking space. The terminal may further send the first message to the vehicle, to indicate the vehicle to proceed to the first vacant parking space based on the first traveling trajectory. The user does not need to drive the vehicle, and the vehicle automatically proceeds to the first vacant parking space.

In a possible implementation, after sending the first message to the vehicle, the method further includes: receiving a second message of the vehicle, where the second message indicates that the vehicle has traveled into the first vacant parking space; and displaying second prompt information in response to the second message, where the second prompt information is used to prompt that the vehicle is parked in the first vacant parking space. In this way, the user may determine a parking status of the vehicle based on content displayed on the terminal, and does not need to worry about whether the vehicle is correctly parked in the first vacant parking space.

In a possible implementation, after sending the first message to the vehicle, the method further includes: obtaining a second traveling trajectory along which the vehicle departs from the first elevator; determining a position of the vehicle based on the second traveling trajectory; and displaying the first traveling trajectory and a vehicle identifier based on the position of the vehicle, where the vehicle identifier indicates the position of the vehicle on the first traveling trajectory. In this way, the user can view a real-time position of the vehicle based on the content displayed on the terminal. If the vehicle experiences abnormalities such as stalling, the user can discover and handle the abnormalities in time.

In a possible implementation, after displaying the second prompt information, the method further includes: receiving a second input, and displaying a position of the first elevator, the first vacant parking space, and the first traveling trajectory in response to the second input. In this way, when the user returns, by using the first elevator, to a floor on which the vehicle is parked, the terminal may display the first traveling trajectory from the first elevator to the first vacant parking space, to help the user search for the vehicle, and reduce time spent by the user in vehicle finding.

In a possible implementation, displaying the position of the first elevator, the first vacant parking space, and the first traveling trajectory in response to the second input specifically includes: when it is detected that a distance between the terminal and the first elevator is less than a preset distance, displaying the position of the first elevator, the first vacant parking space, and the first traveling trajectory in response to the second input. In this way, the terminal determines that the user is near the first elevator, and displays the first traveling trajectory from the first elevator to the first vacant parking space.

In a possible implementation, displaying the position of the first elevator, the first vacant parking space, and the first traveling trajectory in response to the second input specifically includes: in response to the second input, sending, to the vehicle, a message used to notify the vehicle to proceed to the first elevator based on the first traveling trajectory, and displaying the position of the vehicle, the position of the first elevator, the first vacant parking space, and the first traveling trajectory. In this way, the vehicle automatically proceeds to the first elevator from the first vacant parking space, and the user does not need to take the vehicle, thereby saving time. The user further determines the real-time position of the vehicle by using the terminal, and checks whether the vehicle arrives at the first elevator, so that the user can get on the vehicle in time when the vehicle arrives, thereby avoiding congestion.

In a possible implementation, the method further includes: displaying third prompt information, where the third prompt information is used to prompt the user to proceed from the first elevator to the first vacant parking space based on the first traveling trajectory. In this way, the user may proceed to a parking position based on the first traveling trajectory, saving time in finding the vehicle.

In a possible implementation, after displaying the position of the first elevator, the first vacant parking space, and the first traveling trajectory, the method further includes: receiving a third input for a first position on the first traveling trajectory; and in response to the third input, displaying a positioning identifier at the first position on the first traveling trajectory, and sending a third message to the vehicle, where the third message is used to notify the vehicle to travel from the first vacant parking space to the first position based on the first traveling trajectory. In this way, the terminal provides a function of selecting a destination position of the vehicle for the user, and the user may select a proper position on the first traveling trajectory, so that the user and the vehicle can arrive at the destination position at the same time, and the user can get on the vehicle in shortest time, thereby saving the time in vehicle finding.

In a possible implementation, the method further includes: receiving a fourth input, and sending a fourth message to the vehicle in response to the fourth input, where the fourth message is used to notify the vehicle to travel from the first vacant parking space to a position of the first elevator based on the first traveling trajectory. In this way, the user may control, by using the terminal, the vehicle to proceed to the first elevator, and the user may get on the vehicle at the first elevator without walking from the first elevator to the first vacant parking space.

In a possible implementation, after sending the fourth message to the vehicle, the method further includes: receiving a fifth message of the vehicle, where the fifth message indicates that the vehicle has arrived at the first elevator; and displaying fourth prompt information in response to the fifth message, where the fourth prompt information is used to prompt that the vehicle has arrived at the first elevator. In this way, after detecting that the vehicle arrives at the first elevator, the terminal notifies the user to get on the vehicle at the first elevator.

In a possible implementation, the method further includes: receiving a fifth input, and displaying an identifier of an elevator in the parking lot, a user identifier, and an identifier of the first vacant parking space in response to the fifth input, where the user identifier indicates a position of the terminal. In this way, the terminal displays a position of each elevator in the parking lot, and regardless of which elevator the user takes to arrive at a parking floor, the user may proceed to the first vacant parking space based on the guide content displayed on the terminal.

In a possible implementation, before displaying the first control, the first prompt information, and the first traveling trajectory, the method further includes: when it is detected that the vehicle travels into the parking lot, obtaining a third traveling trajectory along which the terminal departs from an entry of the parking lot, and collecting radio signal fingerprints at a plurality of positions on the third traveling trajectory; sending the third traveling trajectory and the radio signal fingerprints at the plurality of positions on the third traveling trajectory to a server, where the server is configured to determine, based on the radio signal fingerprints at the plurality of positions, one or more traveling trajectories that intersect or overlap the third traveling trajectory, where the one or more traveling trajectories are used to guide the vehicle to travel into one or more vacant parking spaces, and the one or more traveling trajectories include the first traveling trajectory; and receiving the one or more traveling trajectories sent by the server. In this way, the terminal determines, based on the radio signal fingerprints and the third traveling trajectory, the position of the terminal, and obtains, from the server, the one or more traveling trajectories that guide the vehicle to the vacant parking spaces. The user does not need to search for the vacant parking space in the parking lot, so that the user's time in searching for the parking space is saved.

In a possible implementation, the one or more traveling trajectories further include a fourth traveling trajectory; and when displaying the first control, the first prompt information, and the first traveling trajectory, the method further includes: displaying the fourth traveling trajectory. Before receiving the first input for the first control, the method further includes: receiving a sixth input of selecting the first traveling trajectory. In this way, the user may select a proper traveling trajectory, and control the vehicle to proceed to a vacant parking space in which the user wants to park the vehicle.

In a possible implementation, before displaying the first control, the first prompt information, and the first traveling trajectory, the method further includes: receiving parking information that is of the first vacant parking space and that is sent by the server, where the parking information includes reporting time, a quantity of reporting times, and vacancy density; and calculating a confidence of the first vacant parking space based on the parking information of the first vacant parking space, where the confidence is used to determine whether the vehicle supports autonomous driving into the first vacant parking space. Displaying the first control, the first prompt information, and the first traveling trajectory specifically includes: displaying the first control, the first prompt information, and the first traveling trajectory when it is determined that the confidence of the first vacant parking space is greater than a preset confidence. In this way, before displaying the first traveling trajectory, the terminal calculates the confidence of the first vacant parking space, and determines that there is a high probability that the first vacant parking space is not occupied by another vehicle. This avoids a case in which the vehicle automatically travels to the first vacant parking space and finds that the first vacant parking space is occupied.

In a possible implementation, the method further includes: obtaining, by the terminal, position information that is of a vacant parking space and that is collected by the vehicle in a traveling process, and sending the position information of the vacant parking space to the server, where the position information of the vacant parking space indicates a relative position relationship between a traveling trajectory of the vehicle and the vacant parking space. In this way, when the vehicle travels in the parking lot, position information of a surrounding vacant parking space may be obtained, to help the server update a stored vacant parking space.

According to a second aspect, this application provides a positioning method, applied to a server. In a possible implementation, the method includes: receiving a first traveling trajectory and radio signal fingerprints at a plurality of positions on the first traveling trajectory that are sent by a terminal; determining, based on the radio signal fingerprints at the plurality of positions, one or more traveling trajectories that intersect or overlap the first traveling trajectory, where the one or more traveling trajectories are used to guide the vehicle to travel into one or more vacant parking spaces in the parking lot; and sending the one or more traveling trajectories to the terminal. In this way, the server may provide, for a vehicle that travels into the parking lot, a traveling trajectory indicating the vehicle to proceed to a vacant parking space, to help the user quickly park the vehicle, provide a more efficient parking service for the user, and save time for the user.

In a possible implementation, determining the one or more traveling trajectories that intersect or overlap the first traveling trajectory specifically includes: determining, based on a plurality of elevator zone fingerprint libraries, that radio signal fingerprints at N positions in the plurality of positions on the first traveling trajectory match an elevator zone fingerprint library of a first elevator, where N is greater than or equal to 1, and the elevator zone fingerprint library includes a correspondence between position information within a preset range of an elevator and a radio signal fingerprint; determining a position relationship between the first traveling trajectory and an elevator in the parking lot based on the N positions; and determining, based on the position relationship, the one or more traveling trajectories that intersect or overlap the first traveling trajectory. In this way, the server obtains accurate terminal position information based on the radio signal fingerprints and the elevator zone fingerprint library, and determines, based on a position of the terminal, the position of the first traveling trajectory collected by the terminal. Then, the one or more traveling trajectories that intersect or overlap the first traveling trajectory are determined based on the position of the first traveling trajectory.

In a possible implementation, the method further includes: obtaining a traveling trajectory, radio signal fingerprints at a plurality of positions on the traveling trajectory, and position information of a vacant parking space that are collected by the terminal, where the position information of the vacant parking space indicates a relative position relationship between the vacant parking space and the traveling trajectory; determining position information of the traveling trajectory based on the radio signal fingerprints at the plurality of positions on the traveling trajectory and the elevator zone fingerprint library, where the position information of the traveling trajectory indicates a relative position relationship between the traveling trajectory and an elevator in the parking lot; and storing the position information of the traveling trajectory and the position information of the vacant parking space. In this way, the server obtains updated position information of a vacant parking space from each terminal entering the parking lot, to help a vehicle that subsequently travels into the parking lot find the vacant parking space more quickly.

According to a third aspect, this application provides a terminal, including one or more processors, one or more memories, and a transceiver. The transceiver and the one or more memories are coupled to the one or more processors, the transceiver is configured to collect a radio signal fingerprint, the one or more memories are configured to store a computer-executable program, and when the one or more processors execute the computer-executable program, the terminal is enabled to perform the method in any possible implementation of the first aspect.

According to a fourth aspect, this application provides a computer-readable storage medium, where the computer-readable storage medium stores a computer-executable program, and when the computer-executable program runs on a computer, the computer is enabled to perform the method in any possible implementation of the first aspect.

According to a fifth aspect, this application provides a computer program product. When the computer program product runs on a computer, the computer is enabled to perform the method in any possible implementation of the first aspect.

According to a sixth aspect, this application provides a chip or a chip system, applied to a terminal and including a processing circuit and an interface circuit. The interface circuit is configured to receive code instructions and transmit the code instructions to the processing circuit. The processing circuit is configured to run the code instructions to perform the method in any possible implementation of the first aspect.

## BRIEF DESCRIPTION OF DRAWINGS

FIG. 1 is a diagram of a building 10 according to an embodiment of this application;
FIG. 2 is a diagram of a communication system 20 according to an embodiment of this application;
FIG. 3 is a diagram of constructing an elevator zone fingerprint library according to an embodiment of this application;
FIG. 4 is a schematic flowchart of a positioning method according to an embodiment of this application;
FIG. 5 is a diagram of a scenario in which a vehicle travels into a vacant parking space according to an embodiment of this application;
FIG. 6 is a diagram of a traveling trajectory according to an embodiment of this application;
FIG. 7A to FIG. 7D are diagrams of a group of interfaces according to an embodiment of this application;
FIG. 8 is a diagram of a scenario in which a user proceeds to an elevator according to an embodiment of this application;
FIG. 9A to FIG. 9C are diagrams of another group of interfaces according to an embodiment of this application;
FIG. 10 is a diagram of a scenario according to an embodiment of this application;
FIG. 11 is a schematic flowchart of a positioning method according to an embodiment of this application;
FIG. 12 is a diagram of obtaining a traveling trajectory from a parking position to an elevator position according to an embodiment of this application;
FIG. 13A to FIG. 13C are diagrams of another group of interfaces according to an embodiment of this application;
FIG. 14 is a diagram of a scenario in which a terminal 100 prompts a user to proceed to a parking position according to an embodiment of this application;
FIG. 15A to FIG. 15C are diagrams of another group of interfaces according to an embodiment of this application;
FIG. 16 is a diagram of a scenario in which a vehicle 200 automatically proceeds to an elevator according to an embodiment of this application;
FIG. 17 is a diagram of constructing a parking lot road network according to an embodiment of this application;
FIG. 18 is a diagram of obtaining a floor on which a terminal is located according to an embodiment of this application;
FIG. 19 is a diagram of obtaining a parking space according to an embodiment of this application;
FIG. 20 is a parking lot map according to an embodiment of this application;
FIG. 21A to FIG. 21C are diagrams of another group of interfaces according to an embodiment of this application;
FIG. 22A to FIG. 22E are diagrams of another group of interfaces according to an embodiment of this application;
FIG. 23A to FIG. 23C are diagrams of another group of interfaces according to an embodiment of this application;
FIG. 24A to FIG. 24C are diagrams of another group of interfaces according to an embodiment of this application; and
FIG. 25 is a diagram of a hardware structure of a terminal 100 according to an embodiment of this application.

## DESCRIPTION OF EMBODIMENTS

The technical solutions according to embodiments of this application are clearly and completely described in the following with reference to the accompanying drawings. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

First, an application scenario provided in embodiments of this application is described.

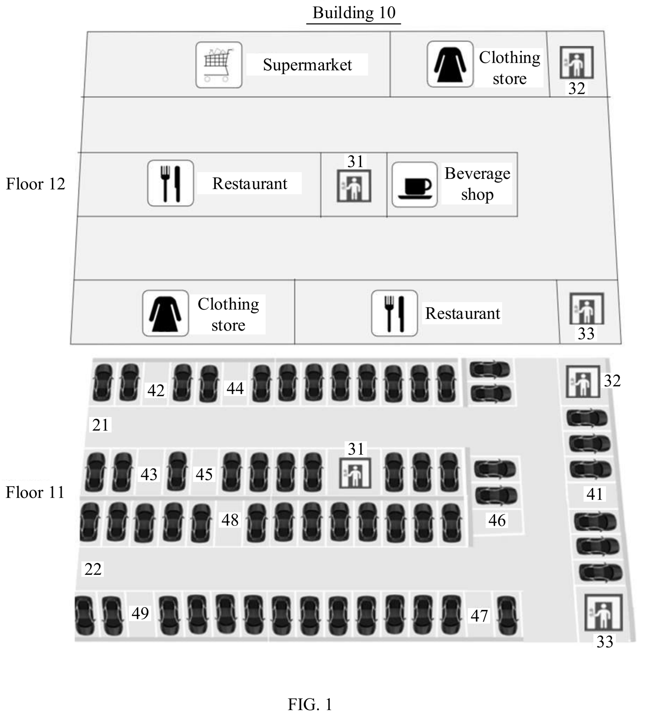

As shown in FIG. 1, a building 10 includes one or more floors. The one or more floors include a non-parking lot floor and a parking lot floor, and the parking lot floor may be used to park vehicles. For example, the one or more floors may include but are not limited to a floor 11, a floor 12, and the like. The floor 12 is the non-parking lot floor, and the floor 11 is the parking lot floor. The floor 11 may include a plurality of parking spaces, and the plurality of parking spaces are used to park vehicles. The plurality of parking spaces include one or more vacant parking spaces that are not occupied by vehicles and one or more non-vacant parking spaces that are occupied by vehicles. The one or more vacant parking spaces may include but are not limited to a parking space 41, a parking space 42, a parking space 43, a parking space 44, a parking space 45, a parking space 46, a parking space 47, a parking space 48, and a parking space 49. It may be understood that a layout of the building 10 shown in FIG. 1 is merely an example. During actual application, the building 10 may include more parking lot floors, more non-parking lot floors, more or fewer elevators, more or fewer vacant parking spaces, and the like. This is not limited in embodiments of this application.

Some floors of the building 10 may include but are not limited to one or more entries. For example, the floor 11 may include but is not limited to an entry 21 and an entry 22. The entry 21 may be used by the vehicle to travel into the floor 11. It should be noted that the one or more entries may also be used as exits, or the building 10 may include one or more exits.

One or more elevators may be further disposed in the building 10. For example, the one or more elevators may include but are not limited to an elevator 31 and an elevator 32. The one or more elevators may be configured to shuttle between different floors of the building 10, and transport a user from a start floor to a destination floor. As shown in FIG. 1, the user drives a vehicle from an entry of a parking lot to a vacant parking space in the parking lot, and the user can proceed to an elevator in the parking lot after getting off the vehicle. Afterward, the user can proceed from the parking lot floor to another floor through the elevator in the parking lot.

It should be noted that the building 10 herein is intended to better describe an example provided in a subsequent embodiment, and is not limited to the building 10. Other buildings including at least one parking lot floor may be used as application scenarios of embodiments of this application. For example, the application scenarios may include but are not limited to a hospital, a shopping mall, an office building, and the like. This is not limited in embodiments of this application.

An embodiment of this application provides a positioning method. A terminal 100 detects that a vehicle 200 travels into the parking lot of the building 10. The terminal 100 may obtain a traveling trajectory of the vehicle 200 after the vehicle 200 departs from the entry of the parking lot, and collect radio signal fingerprints at a plurality of positions on the traveling trajectory of the vehicle 200. The terminal 100 may obtain one or more traveling trajectories from a server 300 based on the traveling trajectory of the vehicle 200 and the radio signal fingerprints at the plurality of positions on the traveling trajectory of the vehicle 200. The server 300 may determine the one or more traveling trajectories based on the traveling trajectory and the radio signal fingerprints that are provided by the terminal 100. The one or more traveling trajectories include a target traveling trajectory. The traveling trajectory may indicate the vehicle 200 to travel into a vacant parking space. The terminal 100 may display the target traveling trajectory.

In this way, the terminal 100 may prompt a user to proceed to the vacant parking space for parking based on the traveling trajectory that is in the parking lot of the building 10 and that is obtained from the server 300, so as to help the user find a parking place more quickly, thereby improving parking efficiency. The terminal 100 may further display vacant parking space prompt information. The vacant parking space prompt information may be used to prompt the user with a position of the vacant parking space and prompt the user to proceed to one or more vacant parking spaces.

Specifically, the server 300 stores an elevator zone fingerprint library, and the elevator zone fingerprint library includes a correspondence between a radio signal fingerprint and a position in a preset range of an elevator. When matching the plurality of radio signal fingerprints provided by the terminal 100 with an elevator zone fingerprint library of a specified elevator, the server 300 may determine positions corresponding to a plurality of radio signal fingerprints that match the elevator zone fingerprint library. The server 300 may determine, based on the plurality of positions, a relative position relationship between the traveling trajectory provided by the terminal 100 and the specified elevator. The server 300 may determine, based on the relative position relationship between the traveling trajectory of the terminal 100 and the specified elevator, one or more traveling trajectories that are in stored traveling trajectories and that overlap the traveling trajectory of the terminal 100. The target traveling trajectory may indicate the vehicle 200 to proceed to the target vacant parking space. The target vacant parking space may be a vacant parking space closest to the vehicle 200, a vacant parking space with a highest confidence, or a vacant parking space with latest update time. For a method for calculating the confidence, refer to subsequent embodiments. Optionally, the terminal 100 may simultaneously display the one or more traveling trajectories. In this way, the user may select a proper traveling trajectory and a proper vacant parking space. In this process, the terminal 100 may further determine a relative position relationship between the specified elevator and the vehicle 200 based on the traveling trajectory of the vehicle 200, the radio signal fingerprints at the plurality of positions on the traveling trajectory of the vehicle 200, and the elevator zone fingerprint library. The terminal 100 may determine a position of the vehicle 200 on the target traveling trajectory based on the relative position relationship between the specified elevator and the vehicle 200.

Then, the terminal 100 may display the target traveling trajectory and a position of the specified elevator after detecting that the user gets off the vehicle in the target vacant parking space, or detecting that the vehicle 200 arrives at the target vacant parking space, or receiving an input of the user for elevator finding. In this way, after the user gets off the vehicle, the terminal 100 may display position information of the elevator, to help the user find the position of the elevator, so that the user can proceed to another floor by taking the elevator. Optionally, the terminal 100 may further display elevator prompt information, to prompt the user to proceed from the target vacant parking space to the specified elevator based on the target traveling trajectory. In this process, the terminal 100 may further determine a relative position relationship between the terminal 100 and the target vacant parking space based on a moving trajectory of the terminal 100 and the target vacant parking space. The terminal 100 may determine a position of the terminal 100 on the target traveling trajectory based on the relative position relationship between the terminal 100 and the target vacant parking space.

The terminal 100 may further display the specified elevator, the target traveling trajectory, and the target vacant parking space after detecting that the user takes the elevator and a distance between the terminal 100 and the specified elevator is less than a preset distance, or after receiving an input for vehicle finding. Content displayed on the terminal 100 may indicate the user to proceed from the specified elevator to the target vacant parking space based on the target traveling trajectory. In this way, the terminal 100 can help the user quickly find the vehicle, so that the user leaves the building 10. Optionally, the terminal 100 may further display vehicle prompt information. The vehicle prompt information may be used to prompt the user to proceed to a parking position of the vehicle based on the target traveling trajectory.

The following describes a communication system 20 according to an embodiment of this application.

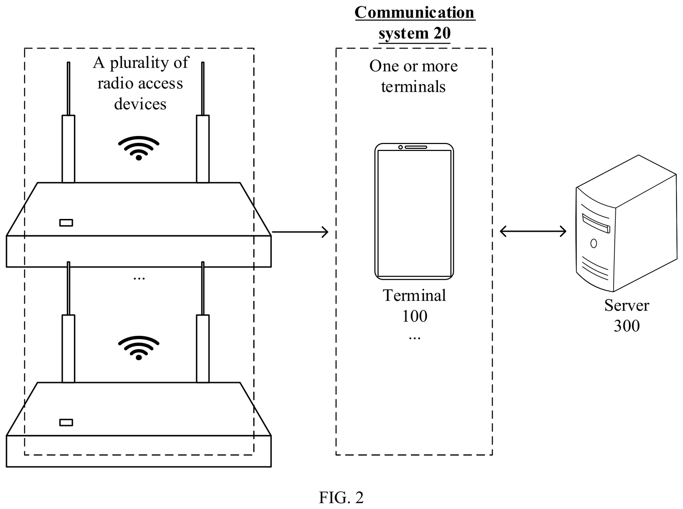

FIG. 2 is a diagram of the communication system 20 according to an embodiment of this application.

As shown in FIG. 2, the communication system 20 may include one or more terminals, a plurality of radio access devices, and a server 300. The one or more terminals include the terminal 100. In this embodiment of this application, the plurality of radio access devices are deployed at positions on floors of a building (for example, the building 10). The terminal may receive, at different positions, signals sent by the radio access devices, and use one or more features of the signal as a radio signal fingerprint.

Because radio signals (or other environment features) have a spatial difference at different positions, the terminal may use radio signal features (or other environment features) at different positions in space as radio signal fingerprints at the positions. In some examples, the radio signal fingerprint may include but is not limited to one or more of the following: an identifier (identifier, ID) of a communication signal like a wireless network, a base station, Bluetooth, or ZigBee, signal strength (received signal strength, RSS), a communication channel, signal round-trip time or signal delay time, information collected by a sensor (for example, a geomagnetic sensor) that has an association relationship with a position, base station information, wireless access point (access point, AP) information, and the like. For example, the wireless network may be a wireless fidelity (wireless fidelity, Wi-Fi) network, a 4th generation mobile communication technology (4th generation mobile communication technology, 4G) network, a 5th generation mobile communication technology (5th generation mobile communication technology, 5G) network, or the like.

It should be noted that the radio signal fingerprints may be of a plurality of types, and any different feature at a different position may be used as a radio signal fingerprint. For example, a multipath structure of a communication signal at a position, whether an access point (access point, AP) or a base station can be detected at a position, received signal strength of a signal that is from an access point or a base station and that is detected at a position, and round-trip time or a delay of a signal at a position during communication can all be used as a radio signal fingerprint, or may be combined as a radio signal fingerprint.

Before implementing the positioning method provided in this embodiment of this application, the server 300 may first obtain a position of a to-be-measured region and a radio signal fingerprint corresponding to the position, and record a correspondence between the position and the radio signal fingerprint into an elevator zone fingerprint library. When collecting a to-be-positioned radio signal fingerprint, the terminal 100 may determine, by using a correspondence that is between a radio signal fingerprint and each position near an elevator and that is recorded in the elevator zone fingerprint library, and a similarity relationship between the collected radio signal fingerprint and each radio signal fingerprint in the elevator zone fingerprint library, a position corresponding to the radio signal fingerprint.

The radio access device may include but is not limited to one or more of a Wi-Fi router device, a Bluetooth low energy device, a radio frequency device, and an internet of things device. In this way, the terminal may obtain different types of fingerprint features from different radio access devices, to jointly implement a positioning operation, and obtain an accurate positioning result by using all available positioning devices in a scenario.

In the following embodiment description, an example in which the radio access device is a Wi-Fi router and the radio signal fingerprint is signal strength of a Wi-Fi signal is used for description. It may be understood that, the strength of the received Wi-Fi signal is not limited to being used as the radio signal fingerprint, and a channel through which the Wi-Fi signal is transmitted may alternatively be used as the radio signal fingerprint. A radio receiving device is not limited to a Wi-Fi router device. The radio access device may alternatively be a Bluetooth low energy device, a radio frequency device, or the like. The radio signal fingerprint may alternatively be a corresponding signal feature.

The one or more terminals may be configured to collect radio signal fingerprints and moving trajectories of the terminals, and send the radio signal fingerprints and the moving trajectories of the terminals to the server 300. The radio signal fingerprints and the moving trajectories of the terminals may be used to construct an elevator zone fingerprint library. The server 300 may be configured to: obtain the radio signal fingerprints and the moving trajectories of the terminals from the one or more terminals, and generate the elevator zone fingerprint library based on the radio signal fingerprints and the moving trajectories of the terminals. Specifically, refer to the following embodiment of constructing the elevator zone fingerprint library. Details are not described herein again.

The one or more terminals may be further configured to collect a traveling trajectory of the vehicle and radio signal fingerprints at a plurality of positions on the traveling trajectory after detecting that the vehicle travels into a parking lot of a building. The one or more terminals may send the moving trajectory of the vehicle and the radio signal fingerprints to the server 300. The server 300 may compare the received radio signal fingerprint with a radio signal fingerprint in the elevator zone fingerprint library based on the provided elevator zone fingerprint library, to determine a position corresponding to the radio signal fingerprint. The server 300 may determine a relative position relationship between the traveling trajectory and each elevator based on position information of the plurality of positions on the traveling trajectory.

The one or more terminals may further obtain position information of a vacant parking space near the traveling trajectory in a process of collecting the traveling trajectory of the vehicle. For example, the one or more terminals may obtain a picture around the vehicle by using a vehicle-mounted camera, recognize a vacant parking space in the picture by using an image recognition algorithm, and therefore determine a relative position relationship between the recognized vacant parking space and the traveling trajectory of the vehicle. The terminal may mark the obtained vacant parking space near the traveling trajectory of the vehicle, and send position information of the vacant parking space to the server 300 when sending data such as the traveling trajectory of the vehicle to the server 300. The server 300 may store each traveling trajectory, a relative position relationship between the traveling trajectory and each elevator, and a vacant parking space corresponding to the traveling trajectory. The traveling trajectory may indicate the vehicle to proceed to the corresponding vacant parking space. When determining, based on the elevator zone fingerprint library and the radio signal fingerprints sent by the terminal, the relative position relationship between the traveling trajectory and each elevator, the server 300 may also determine whether the traveling trajectory intersects a stored traveling trajectory. The server 300 may send one or more traveling trajectories that intersect the stored traveling trajectory and position information of vacant parking spaces corresponding to the one or more traveling trajectories to the terminal. The terminal may display the one or more traveling trajectories after receiving the data sent by the server 300. Optionally, the terminal may further display the vacant parking spaces of the one or more traveling trajectories. In this way, the user may drive the vehicle to the vacant parking space based on the traveling trajectory displayed on the terminal. That two traveling trajectories intersect may also be considered as that the two traveling trajectories have a common anchor, or the two trajectories have an overlapping (coincident) part. This is not limited in embodiments of this application.

Similarly, when the user drives the vehicle to leave the parking lot, the terminal may also record a traveling trajectory of the vehicle and position information of a vacant parking space near the traveling trajectory, and send the traveling trajectory and the position information of the vacant parking space to the server 300. In this way, the server 300 may obtain vacant parking spaces in the parking lot based on the traveling trajectory of the vehicle to the vacant parking space, the traveling trajectory of the vehicle leaving the vacant parking space, and the position information that is of the vacant parking space and that is obtained in the traveling process.

After determining the relative position relationship between the traveling trajectory and each elevator based on the position information of the plurality of positions on the traveling trajectory of the terminal, the server 300 may further send the relative position relationship to the terminal. The terminal may determine a relative position relationship between the vehicle and each elevator based on the relative position relationship between the traveling trajectory and each elevator. The terminal may display the position information of the elevator, to prompt the user to proceed to the elevator from a position of the vehicle.

The terminal may further display position information of the vehicle based on the relative position relationship between the vehicle and each elevator, to prompt the user to proceed from the position of the elevator to the position of the vehicle. Alternatively, the terminal may display the traveling trajectory obtained from the server, to guide the user to proceed from the elevator to the parking position of the vehicle.

In some examples, the terminal may be a portable device, for example, the terminal 100. The terminal 100 may be a mobile phone, a smartwatch, smart glasses, or the like. The terminal may obtain inertia data of the vehicle based on an inertia measurement unit (inertial measurement unit, IMU). Then the inertia data is used to obtain, through calculation, the traveling trajectory of the vehicle by using a vehicle dead reckoning (vehicle dead reckoning, VDR) algorithm. Alternatively, the terminal may obtain the inertia data of the vehicle from a central control terminal of the vehicle, or obtain the traveling trajectory of the vehicle from the central control terminal of the vehicle. In this way, the user may carry a portable device. When driving the vehicle, the user may collect the traveling trajectory of the vehicle and the radio signal fingerprint by using the portable device, to obtain the position information of the vacant parking space in the parking lot and the position information of the vehicle.

After the terminal detects that the user gets off the vehicle at a parking position, the terminal may further collect a moving trajectory of the terminal after the terminal departs from the parking position, and the terminal may determine a relative position relationship between the terminal and the vehicle based on the moving trajectory. The terminal may determine the relative position relationship between the terminal and the elevator based on the relative position relationship between the terminal and the vehicle and the relative position relationship between the vehicle and the elevator. Alternatively, the terminal may determine the relative position relationship between the terminal and the elevator based on the relative position relationship between the terminal and the vehicle and the target traveling trajectory. In this way, after detecting that the user gets off the vehicle, the terminal may obtain a relative position of the terminal relative to the elevator and the vehicle, so that the terminal performs display and guides the user to proceed from the vehicle position to the elevator position.

After obtaining the position information of the elevator, the position information of the target vacant parking space, and the target traveling trajectory, the terminal may display, near the specified elevator, prompt information used to prompt the user to get off the vehicle at the specified elevator, and after detecting that the user gets off the vehicle, send, to the vehicle, an indication message indicating the vehicle to proceed to the target vacant parking space along the target traveling trajectory. When the vehicle travels into the target vacant parking space, the vehicle may send parking prompt information to the terminal, to prompt the user that the vehicle has been parked in the target vacant parking space. Optionally, in a process of proceeding to the vacant parking space, the vehicle may send the position information of the vehicle to the terminal, and the terminal may display the target traveling trajectory, the target vacant parking space, and the position information of the vehicle, so as to prompt the user with a real-time position of the vehicle. In this way, the user may get off the vehicle near the elevator, and does not need to drive to the vacant parking space or walk to the elevator from the parking position. The user may get off the vehicle at the elevator and then proceed to another floor, and the vehicle automatically proceeds to the vacant parking space for parking, thereby saving time spent by the user on parking.

Optionally, the terminal may provide a function of controlling the vehicle to proceed from the parking position to a target position. After the terminal receives an input of the user for vehicle finding, the terminal may indicate the vehicle to travel from the parking position to the target position based on a target traveling route. The target position may be a position of a specified elevator, a position closest to the terminal on the target traveling trajectory, or a position selected by the user on the target traveling trajectory. In this way, when the user is near the target traveling trajectory, the vehicle may automatically proceed from the parking position to a position of the user based on the traveling route by using a vehicle finding function provided by the terminal, and the user does not need to take the vehicle in person, thereby saving time. Optionally, the target traveling trajectory may alternatively be a traveling trajectory provided by another vehicle, a distance between the traveling trajectory of the another vehicle and the parking position is less than a preset distance (for example, 1 meter), and a distance between the traveling trajectory of the another vehicle and the target position is less than a preset distance. In this way, a traveling route provided by the another vehicle can ensure that when the vehicle travels along the route, the vehicle does not encounter a case in which the vehicle travels to a dead corner or collides with another obstacle, or does not know how to turn. After receiving the input for vehicle finding, the terminal may control the vehicle to travel along the traveling route to the target position (for example, the position of the terminal), so that the user leaves the parking lot, and time in vehicle finding is reduced.

In some examples, the terminal may be a vehicle-mounted device, for example, the vehicle 200. The vehicle 200 may be a central display device or the like. The terminal may obtain the inertia data of the vehicle based on the inertia measurement unit, and then obtain the traveling trajectory of the vehicle by calculating the inertia data by using the VDR algorithm. After obtaining the target traveling trajectory from the server 300, the terminal may display a traveling trajectory to the target vacant parking space and vacant parking space prompt information. The vacant parking space prompt information may be used to prompt the user to proceed to the vacant parking space based on the traveling trajectory. The terminal may further send the target traveling trajectory, the position information of the target vacant parking space, the position information of the elevator, and the position information of the vehicle to the portable device (for example, a mobile phone or a smartwatch) when detecting that the user gets off the vehicle. The portable device may display the target traveling trajectory and elevator prompt information. The elevator prompt information may be used to prompt the user to proceed from the target vacant parking space (namely, the parking position) to the elevator position based on the target traveling trajectory.

Optionally, the portable device may collect a moving trajectory after departure from the parking position, determine a position of the portable device, and display position information of the portable device. In this way, the user may be assisted in determining a specific position of the user on a parking lot floor. The portable device may further display the position information of the vehicle and vehicle prompt information. The vehicle prompt information may be used to prompt the user to proceed to the parking position. Optionally, the portable device may collect a moving trajectory after departure from the elevator position on the parking lot floor, determine the position of the portable device, and display the position information of the portable device.

After obtaining the position information of the elevator, the position information of the target vacant parking space, and the target traveling trajectory, the terminal may display, near the specified elevator, the prompt information used to prompt the user to get off the vehicle at the specified elevator, and after detecting that the user gets off the vehicle, send, to the vehicle, an indication message indicating the vehicle to proceed to the target vacant parking space along the target traveling trajectory. The terminal may further send the target traveling trajectory, the position information of the elevator, the position information of the target vacant parking space, and the position information of the vehicle to the portable device, so that the portable device displays a real-time position of the terminal. The terminal may further send, to the portable device after traveling into the target vacant parking space, an indication message indicating that the vehicle has been successfully parked in the target vacant parking space. The portable device may display, based on the indication message, prompt information used to prompt the user that the vehicle has been parked in the target vacant parking space.

It should be noted that a communication connection, for example, a peer to peer (peer to peer, P2P) connection, may not need to be established between the radio access device and the terminal, and the terminal may also receive a signal sent by the radio access device. It may be understood that, when the radio access device establishes a communication connection to a part or all of the one or more terminals, the terminal is not affected to obtain the radio signal fingerprint provided by the radio access device.

First, in order to accurately implement a user vehicle positioning operation in a parking lot, a radio signal fingerprint library in a building needs to be established in advance. The server 300 may collect cross-floor moving trajectory data and corresponding radio signal fingerprints by using the one or more terminals, to construct the elevator zone fingerprint library. The server 300 may obtain, by using a crowdsourcing technology, data required for constructing the elevator zone fingerprint library. The crowdsourcing technology is a method for obtaining resources by using a large quantity of terminals after obtaining user permission. After obtaining the user permission, the server 300 can use the crowdsourcing technology to collect, without perception of the user, data by using a terminal of the user. The data collected by using the crowdsourcing technology may be referred to as crowdsourcing data.

A quantity of radio access devices deployed in the parking lot floor is usually less than a quantity of radio access devices deployed in a non-parking lot floor. If the server 300 directly generates the fingerprint library by using the radio signal fingerprints of the parking lot floor, data in the fingerprint library may be inaccurate due to low deployment density of the radio access devices on the parking lot floor. In this way, a user moving trajectory across elevators of a plurality of floors may be used to locate an elevator position on each floor. In addition, because more radio access devices are deployed in the non-parking lot floor, a radio signal fingerprint with more accurate positioning may be obtained. A relative relationship between the elevators may be constructed by using cross-floor moving trajectory data based on data of the non-parking lot floor, so that a position of the parking lot floor can be determined, and the server 300 can generate the fingerprint library that can be used for positioning near the elevator.

Specifically, the server 300 may generate the elevator zone fingerprint library by using the following steps.

(1) The server 300 obtains crowdsourcing data. The one or more terminals may collect the crowdsourcing data, and send the crowdsourcing data to the server 300. The one or more terminals may collect the inertia data of the terminals in the building by using inertia measurement units, and the inertia data may be used to obtain moving trajectories of the one or more terminals. In addition, the one or more terminals may further collect radio signal fingerprints at a plurality of positions on the moving trajectories. The one or more terminals may obtain, through scanning at the plurality of positions, communication data sent by the radio access device in the building. The communication data may include but is not limited to one or more of Wi-Fi scanning data, BLE scanning data, scanning data of a mobile base station (4G, 5G, or the like). The one or more terminals may generate radio signal fingerprints based on the communication data obtained through scanning.

The crowdsourcing data may include the inertia data collected by the one or more terminals by using the inertia measurement units and the radio signal fingerprints collected by the terminals by using radio receiving modules. The inertia measurement unit may include but is not limited to one or more of an acceleration transducer (acceleration transducer, ACC), a gyroscope sensor (gyroscope sensor, GYRO), and a magnetometer (magnetometer, MAG). The inertia data may include but is not limited to ACC data, GYRO data, and MAG data. The one or more terminals may send the crowdsourcing data to the server 300.

In some examples, after detecting, by using a positioning technology, that the terminals enter a building range, the one or more terminals may collect the crowdsourcing data and send the crowdsourcing data to the server 300.

It should be noted that, in this embodiment of this application, the server 300 needs to generate the elevator zone fingerprint library based on the cross-floor moving trajectory. When collecting the inertia data, the one or more terminals may first determine whether the collected inertia data includes cross-floor inertia data, that is, whether the moving trajectory generated based on the inertia data is a cross-floor moving trajectory. Then, the one or more terminals send the crowdsourcing data including the cross-floor inertia data to the server 300. For example, the terminal may determine, by using a barometer, an accelerometer, and/or the collected radio signal fingerprint, whether the inertia data is cross-floor inertia data.

In some examples, the terminal includes a barometer. The terminal may determine, by using a value of the barometer, whether the inertia data is cross-floor inertia data. For example, when detecting, within preset duration (for example, 20s), that the value of the barometer changes and a value of the barometer change is greater than a preset barometer difference, the terminal may determine that the user carrying the terminal takes an elevator, that is, determine that the collected inertia data is cross-floor inertia data.

In some examples, the terminal includes an accelerometer. The terminal may determine, based on a change feature of acceleration that is of the terminal and that is obtained by the accelerometer within preset duration (for example, 20s), whether the inertia data is cross-floor inertia data. For example, when the user carrying the terminal takes the elevator to a higher floor, the elevator needs to first accelerate upward and then decelerate downward. The accelerometer may first obtain an acceleration vector in an upward direction within the preset duration, and then obtain an acceleration vector in a downward direction. For another example, when the user carrying the terminal takes the elevator to a lower floor, the elevator needs to accelerate downward, and then decelerate upward. The accelerometer may obtain an acceleration vector in a downward direction within the preset duration, and then obtain an acceleration vector in an upward direction. When obtaining the corresponding acceleration vector by using the accelerometer, the terminal may determine that the inertia data is cross-floor inertia data.

In some examples, the terminal may determine whether the inertia data is cross-floor inertia data by detecting whether a step quantity of the user and a received radio signal fingerprint change. When detecting, within the preset detection duration, that the step quantity of the user remains unchanged and detects that radio signal fingerprints received by the terminal are different, the terminal determines that the inertia data is cross-floor inertia data. When detecting that a step quantity increment of the user within the preset duration is less than a preset step quantity threshold (for example, four steps), the terminal determines that the step quantity of the user remains unchanged. The terminal may detect, by using a pedometer application, whether the step quantity of the user changes. Optionally, the terminal 100 may detect, by using one or more sensors of the IMU, the accelerometer, and the gyroscope, whether the terminal generates displacement in a horizontal direction. When detecting, within the preset detection duration, that the terminal does not generate displacement in the horizontal direction, and detects that the radio signal fingerprints received by the terminal 100 are different, the terminal determines that the inertia data is cross-floor inertia data. For example, when detecting that a movement distance of the terminal in the horizontal direction is less than or equal to a preset movement distance (for example, 1 meter), the terminal may determine that the terminal does not generate displacement in the horizontal direction.

For example, the preset duration includes a moment t1 and a moment t2, the moment t1 is a start moment of the preset duration, and the moment t2 is any moment other than the start moment of the preset duration. The terminal 1 receives, at the moment t1, radio signal fingerprints sent by num1 radio access devices, and receives, at the moment t2, radio signal fingerprints sent by num2 radio access devices. When detecting that an absolute value of a difference between num1 and num2 is greater than a preset difference threshold (for example, 2), the terminal 100 determines that the radio signal fingerprints received by the terminal are different. It should be noted that, the manner of determining whether the radio signal fingerprints received within the preset duration are the same is not limited to the foregoing manner. The terminal may further determine, in another manner, whether the radio signal fingerprints received within the preset duration are the same. This is not limited in embodiments of this application.

In some examples, when detecting, within the preset duration, that the step quantity of the user remains unchanged, and detecting that a modulus value of a geomagnetic vector collected by using the magnetometer of the terminal changes, the terminal may determine that the user takes the elevator. It should be noted that, in a process in which the terminal ascends or descends with the elevator, when the terminal passes through different inter-floor partitions, the modulus value of the magnetometer geomagnetic vector of the terminal 100 may change periodically, for example, a peak value appears. In this way, based on this, the terminal may determine whether the inertia data is cross-floor inertia data.

It should be noted that the foregoing plurality of manners for determining whether the inertia data is cross-floor inertia data are merely examples, and are not limited to the foregoing several manners. The terminal may determine, in another manner, whether the inertia data is cross-floor inertia data.

(2) The server 300 calculates a relative moving trajectory of the terminal based on the inertia data. The server 300 may estimate a heading direction and a step length of the user based on the sensor data by using a pedestrian dead reckoning PDR algorithm, to obtain the relative moving trajectory of the terminal. Then, the server 300 may insert the radio signal fingerprints into the moving trajectory of the user based on collection time, to obtain trajectory data. The trajectory data may represent one or more positions on the moving trajectory and radio signal fingerprints received at the one or more positions.

It should be noted that, the server 300 is not limited to obtaining the trajectory data based on the inertia data and the radio signal fingerprints that are obtained from the one or more terminals. Alternatively, the one or more terminals may obtain the moving trajectories through calculation based on the inertia data, and then obtain the trajectory data based on the moving trajectories and the radio signal fingerprints. The one or more terminals may send the trajectory data to the server 300.

(3) The server 300 determines, based on similarity degrees between radio signal fingerprints corresponding to different moving trajectories, floors to which positions in the trajectory data separately belong. The server 300 may mark floor information for the position in the trajectory data, and then aggregate the trajectory data to obtain the elevator zone fingerprint library. The server 300 may determine similarities between the radio signal fingerprints based on a Euclidean distance, a Jaccard (jaccard) distance, or the like. The elevator zone fingerprint library includes a correspondence between a position near an elevator and a radio signal fingerprint.

For example, an elevator zone fingerprint library of the elevator 31 in the building 10 may include a correspondence between a position within a first range of the elevator 31 on the non-parking lot floor and a radio signal fingerprint, and a correspondence between a position within a second range of the elevator 31 on the parking floor and a radio signal fingerprint. The first range is greater than the second range. For example, the first range may include a circular range with the elevator 31 as a center and a first length (for example, 30 meters) as a radius. For example, the second range may include a circular range with the elevator 31 as a center and a second length (for example, 10 meters) as a radius.

It should be noted that, in order to avoid position ambiguity on the parking lot floor, where the position ambiguity may be a case in which different positions in a region cannot be distinguished because a quantity of radio access devices is small in the region and similarity degrees between radio signal fingerprints collected by the terminal are high, the server 300 may retain only trajectory data within a range in which a radius is a preset radius and an elevator is a center on the parking lot floor. The elevator zone fingerprint library generated by the server 300 includes a correspondence between a position within a specified range on the parking lot floor and a radio signal fingerprint. The specified range is the range in which the elevator is the center and the radius is the preset radius (for example, 10 meters) on the parking lot floor. In this way, an accurate elevator zone fingerprint library can be obtained.

It should be further noted that, in a process in which the server 300 constructs the elevator zone fingerprint library, after obtaining the relative moving trajectory of the terminal through calculation based on the inertia data, the server 300 may determine, based on the radio signal fingerprints, a part that is in the moving trajectory and that belongs to each non-parking lot floor. Because the quantity of radio access devices on the non-parking lot floor is greater than the quantity of radio access devices on the parking lot floor, more radio access devices can be scanned by the terminal at a position on the non-parking lot floor than on the parking lot floor. Therefore, the radio signal fingerprints collected by the terminal on the parking lot floor come from more radio access devices, and the server 300 may determine, based on density of the radio signal fingerprints, whether a position at which the radio signal fingerprint is collected belongs to the parking lot floor or the non-parking lot floor.

Then, the server 300 may determine, based on a cross-floor moving trajectory, a position near the elevator on the moving trajectory. The server 300 may mark a position near an elevator on a moving trajectory of the non-parking lot floor. The server 300 may determine a relative position relationship between moving trajectories of each non-parking lot floor based on similarities between radio signal fingerprints corresponding to the moving trajectories of the floor. The server 300 may splice the moving trajectories of the floor based on the relative position relationship, to form a road network of the non-parking lot floor. The server 300 may determine a relative position relationship between elevators based on a spliced moving trajectory and positions near the elevators on the moving trajectory. In this way, the server 300 may determine relative position information of elevators in the building based on moving trajectories of any non-parking lot floor and corresponding radio signal fingerprints.

It should be further noted that the server 300 can determine, based on the similarity degrees of the radio signal fingerprints, only a relative floor of each position in each moving trajectory, but cannot determine an identifier of a floor to which each position belongs. For example, the server 300 may determine that a part of positions belong to a bottom floor, but cannot determine an identifier of the floor. The server 300 may obtain floor information of each building.

In some examples, the terminal may obtain, by using a vehicle-mounted camera, an image including a floor number in a parking lot. The terminal may recognize an identifier of a floor based on the image including the floor number in the parking lot by using an image recognition algorithm, and determine, based on a similarity between radio signal fingerprints obtained on the floor and the radio signal fingerprints in the crowdsourcing data, a radio signal fingerprint that belongs to the floor and that is in the crowdsourcing data. In this way, the server 300 may determine the identifier of the floor by using the parking lot image obtained by the vehicle.

In some examples, because an entry of a building is usually located on a first floor of the building, the server 300 may determine, based on a moving trajectory of the terminal that enters the building from the entry of the building, that a floor to which the moving trajectory belongs is the first floor, and then determine an identifier of another floor based on a relative height of each floor. Before entering a building, the terminal may obtain position information of the terminal by using a GPS. The server 300 may notify the one or more terminals to determine, before obtaining collected inertial data for indicating a floor, based on GPS signals received on the ground, whether the terminals enter the building from the entry of the building. When determining, based on the GPS signal of the terminal, that the terminal enters the building from the entry of the building, the server 300 may mark the moving trajectory collected by the terminal as a moving trajectory on the first floor of the building, and determine an identifier of another floor of the building based on this. For example, the server 300 may use a parking lot floor closest to the first floor as a basement 1 floor, use a parking lot floor second closest to the first floor as a basement 2 floor, and the like. The server 300 may use a non-parking lot floor closest to the first floor as a second floor, use a non-parking lot floor second closest to the first floor as a third floor, and the like. In this way, the server 300 may obtain floor identifiers of the building.

In some other examples, after determining a relative height relationship between floors of the building based on the moving trajectory in the building, the server 300 may determine, based on the density of the radio signal fingerprints, whether each floor is a non-parking lot floor or a parking lot floor. The server 300 may use a non-parking lot floor closest to the parking lot floor as the first floor, and determine an identifier of another floor based on the relative height relationship between floors.

In some other examples, after detecting that the terminals enter the building, the one or more terminals may display prompt information used to prompt users to enter current floor information. The one or more terminals may obtain the floor information entered by the users, and add the floor information to crowdsourcing data collected on the floor.

In some other examples, the server 300 may obtain the floor information of the building from an operator of the building, or the server 300 may obtain, by using a name of the building, the floor information of the building from web pages related to the building, or the like.

In this way, when performing the step of aggregating the trajectories, the server 300 is not limited to aggregating trajectory data of each floor separately, but aggregates trajectory data of all floors together. The elevator position on each floor is determined based on the elevator trajectory across a plurality of floors. In addition, the elevator zone fingerprint library is constructed based on a high change relationship of the crowdsourcing data and a similarity degree of communication data. According to this method, a fingerprint framework with a large coverage area but low precision is no longer generated on the parking lot floor, but a fingerprint framework that has high precision and that uses each elevator as a center and is only around a preset distance (for example, 10 meters to 20 meters) near the elevator is generated.

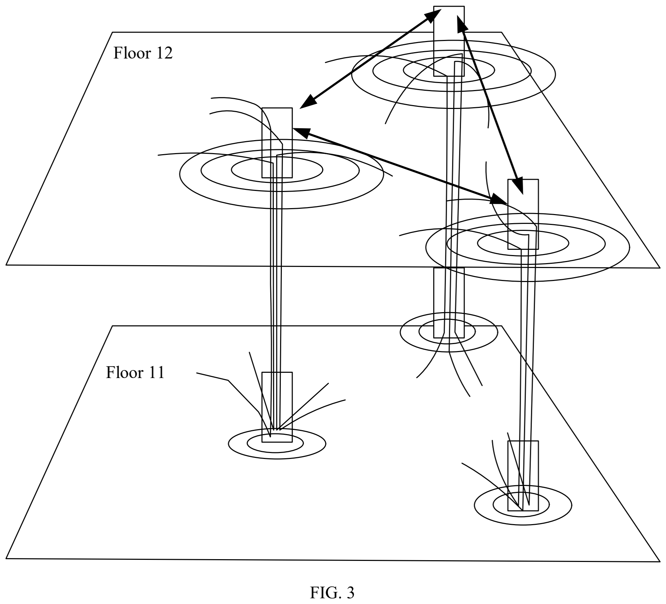

For example, the building 10 shown in FIG. 1 is used as an example to describe how the server 300 generates the elevator zone fingerprint library. The server 300 obtains the crowdsourcing data from the one or more terminals. The server 300 obtains the cross-floor moving trajectory through calculation based on the inertia data in the crowdsourcing data by using an algorithm (for example, the PDR algorithm). For the moving trajectory obtained by the server 300, refer to the dashed line shown in FIG. 3. The server 300 may obtain the trajectory data based on the moving trajectory and the radio signal fingerprints. The server 300 may generate the elevator zone fingerprint library based on the trajectory data. Because the server 300 collects more radio signal fingerprints on the non-parking lot floor, a fingerprint library with a wide range and high precision may be generated. Because the server 300 collects less communication data on the parking lot floor, the server 300 may determine the elevator position on the parking lot floor based on the fingerprint library of the non-parking lot floor, and generate a fingerprint library with a small range and high precision based on the elevator position, as shown in FIG. 3.

In a possible implementation, the terminal 100 detects that the vehicle 200 travels into the building 10. The terminal 100 collects a traveling trajectory of the terminal 100 after the terminal 100 departs from the entry of the parking lot and radio signal fingerprints at a plurality of positions on the traveling trajectory. The terminal 100 sends the traveling trajectory and the radio signal fingerprints to the server 300. The server 300 may determine, based on the traveling trajectory provided by the terminal 100, the radio signal fingerprints provided by the terminal 100, the elevator zone fingerprint library, the stored traveling trajectories, and the stored relative position relationship between the traveling trajectory and the elevator, the one or more traveling trajectories that are in the stored traveling trajectories and that have intersection points with the traveling trajectory of the terminal 100. The server 300 may send the one or more traveling trajectories and position information of vacant parking spaces near the one or more traveling trajectories to the terminal 100. The terminal 100 may display the one or more traveling trajectories and the position information of the vacant parking spaces. In this way, after driving to a strange parking lot, the user may obtain, from the server 300, a vacant parking space in the parking lot and a route to the vacant parking space, so that the user can find the parking space as soon as possible, thereby reducing time spent by the user in searching for the parking space.

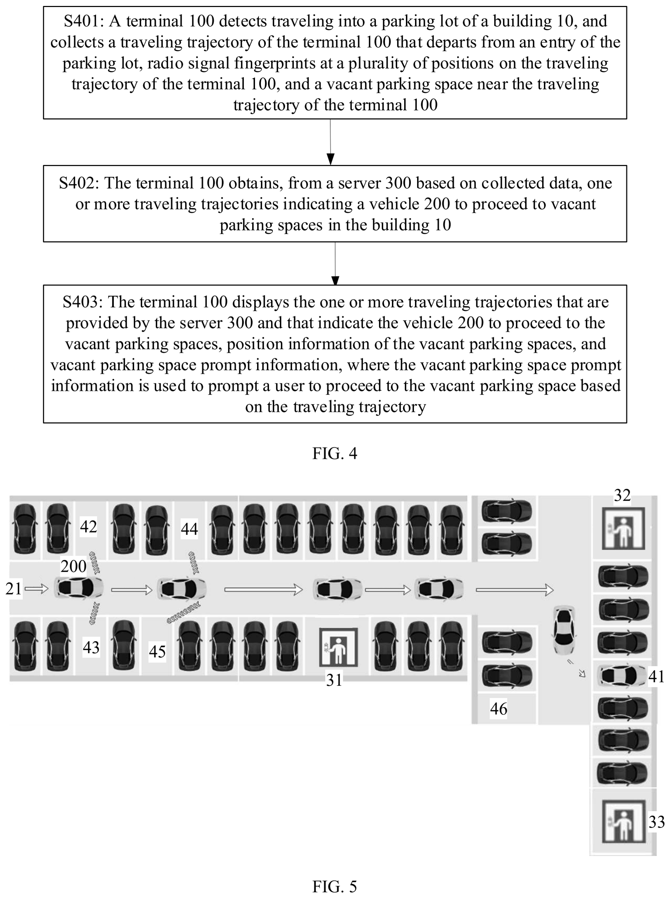

Specifically, as shown in FIG. 4, the terminal 100 may proceed to the vacant parking space in the building 10 by using the following steps.

S401: The terminal 100 detects traveling into the parking lot of the building 10, and collects the traveling trajectory of the terminal 100 that departs from the entry of the parking lot, the radio signal fingerprints at the plurality of positions on the traveling trajectory of the terminal 100, and the vacant parking space near the traveling trajectory of the terminal 100.

Before the vehicle 200 travels into the parking lot, the terminal 100 may determine the position of the terminal 100 by using the GPS, and determine, based on the position of the terminal 100, whether the vehicle 200 travels into the parking lot of the building 10. When determining, by using the GPS, that the terminal 100 is located inside the building 10, the terminal 100 determines that the vehicle 200 travels into the parking lot of the building 10. In this way, when the terminal 100 does not enter the building 10, the terminal 100 may locate the position of the terminal 100 by using the GPS, and determine, based on the position of the terminal 100, whether the terminal 100 enters the building 10.

Optionally, the terminal 100 may further obtain, by using the GPS, position information (for example, a longitude and a latitude of the entry) of the entry into which the vehicle 200 travels, and determine, based on the position information of the entry and the traveling trajectory collected by the terminal 100, the position information of the traveling trajectory collected by the terminal 100. It may be understood that the server 300 may obtain position information of entries that the one or more terminals pass through, traveling trajectories departing from the entries, and position information of vacant parking spaces near the traveling trajectories. The server 300 may provide a stored traveling trajectory from the entry to the vacant parking space for a vehicle traveling into the parking lot. In this way, when the vehicle 200 enters the parking lot through any entry of the parking lot, the server 300 may provide the traveling trajectory from the entry to the vacant parking space for the terminal 100, to help the user quickly park.

It should be further noted that, when the vehicle 200 travels in the parking lot, the terminal 100 may determine the relative position relationship between the traveling trajectory and each elevator based on the collected radio signal fingerprints and the elevator zone fingerprint library, and the terminal 100 may not need to obtain the position information of the entry of the parking lot. In this way, the terminal 100 not only can help the user quickly find the vacant parking space, but also can help the user quickly find the elevator.

In some other examples, the terminal 100 may capture an image in front of the vehicle 200 by using the camera. In addition, the image recognition algorithm is used to recognize whether the captured image is an image of the entry of the parking lot. When the terminal 100 determines that the captured image is the image of the entry of the parking lot, the terminal 100 determines that the vehicle 200 travels into the parking lot. It should be noted that, the method for detecting whether the vehicle 200 travels into the parking lot of the building 10 is not limited to the foregoing method. The terminal 100 may detect, in another manner, whether the vehicle 200 travels into the parking lot. This is not limited in embodiments of this application.

After detecting that the vehicle 200 travels into the parking lot of the building 10, the terminal 100 may collect the traveling trajectory of the terminal 100 after the terminal 100 departs from the entry of the parking lot, and may collect the radio signal fingerprints at the plurality of positions on the traveling trajectory. The terminal 100 may collect the traveling trajectory by using the inertia measurement unit, and collect the radio signal fingerprints by using a wireless communication module. For details, refer to the foregoing embodiments. Details are not described herein again.

S402: The terminal 100 obtains, from the server 300 based on the collected data, one or more traveling trajectories indicating the vehicle 200 to proceed to the vacant parking spaces in the building 10.

After collecting the radio signal fingerprints at the plurality of positions on the traveling trajectory, the terminal 100 may send the radio signal fingerprints to the server 300. When determining, based on the radio signal fingerprints at the plurality of positions and a plurality of elevator zone fingerprint libraries, that at least one of the plurality of radio signal fingerprints on the moving trajectory matches one of the elevator zone fingerprint libraries, the server 300 may determine that the terminal 100 is located near an elevator corresponding to the elevator zone fingerprint library, and may obtain, from the elevator zone fingerprint library, position information of a position corresponding to the at least one radio signal fingerprint. The server 300 may determine, based on the position information of the position corresponding to the at least one radio signal fingerprint, the relative position relationship between the traveling trajectory collected by the terminal 100 and each elevator in the building 10. When determining that a similarity between the radio signal fingerprint and any radio signal fingerprint in the elevator zone fingerprint library is greater than a preset similarity threshold (for example, 80%), the server 300 determines that the radio signal fingerprint matches the elevator zone fingerprint library.

In some examples, the terminal 100 may first determine, by using the GPS, the position of the terminal 100, and the terminal 100 may send the position of the terminal 100 and the radio signal fingerprints to the server 300 together. The server 300 may match the radio signal fingerprints provided by the terminal 100 with an elevator zone fingerprint library of the position of the terminal 100. In this way, time required for the server 300 to match the fingerprint can be reduced.

It may be understood that on different floors, quantities, deployment positions, device identifiers, and the like of radio access devices are different, and the terminal 100 receives different radio signal fingerprints on different floors. The position information of the one or more positions may indicate that the terminal 100 is near the elevator corresponding to the elevator zone fingerprint library, a floor on which the terminal 100 is located, and a specific position of the terminal 100 on the floor.

The terminal 100 may send the traveling trajectory to the server 300. The server 300 may determine, based on similarities between stored radio signal fingerprints at a plurality of positions on the one or more traveling trajectories and the radio signal fingerprints provided by the terminal 100, a traveling trajectory that is in the one or more traveling trajectories and that intersects or overlaps the traveling trajectory of the terminal 100. The traveling trajectory that intersects or overlaps the traveling trajectory of the terminal 100 may indicate the vehicle 200 to proceed to the vacant parking space in the building 10. The server 300 may send the determined traveling trajectory and position information of the vacant parking space near the traveling trajectory to the terminal 100. The position information of the vacant parking space may indicate a relative position relationship between the vacant parking space and the traveling trajectory. The traveling trajectory may be used to guide the vehicle to a corresponding vacant parking space.

It should be noted that the server 300 may collect, through crowdsourcing, the one or more traveling trajectories of the vehicle, the radio signal fingerprints at the plurality of positions on the one or more traveling trajectories, and the position information of the vacant parking spaces near the one or more traveling trajectories by using one or more terminals. For example, in a process of collecting the traveling trajectory of the vehicle, the terminal may obtain, through recognition, a vacant parking space near the traveling trajectory by using an image that is around the vehicle and that is captured by the camera, and determine position information of the vacant parking space. Then, the server 300 may determine the relative position relationship between the traveling trajectory of the vehicle and each elevator based on the radio signal fingerprints at the plurality of positions on the traveling trajectory of the vehicle and the elevator zone fingerprint library of the building 10. In conclusion, the server 300 may obtain the one or more traveling trajectories in the building 10 through crowdsourcing, relative position relationships between the one or more traveling trajectories and each elevator in the building 10, and relative position relationships between each traveling trajectory and one or more vacant parking spaces.

In some examples, the server 300 may determine the position information of the plurality of positions on the traveling trajectory of the terminal 100 based on the radio signal fingerprints at the plurality of positions on the traveling trajectory of the terminal 100. The server 300 may determine a relative position relationship between the traveling trajectory of the terminal 100 and each elevator in the building 10 based on relative position relationships between the plurality of positions on the traveling trajectory of the terminal 100 and the elevator. After determining the relative position relationship between the traveling trajectory of the terminal 100 and each elevator in the building 10, the server 300 may compare the traveling trajectory of the terminal 100 with the one or more stored traveling trajectories, to determine a traveling trajectory that has an anchor point with the traveling trajectory of the terminal 100. The server 300 may send the determined traveling trajectory and position information of a vacant parking space of the traveling trajectory to the terminal 100.

In some examples, after determining that the radio signal fingerprint matches an elevator zone fingerprint library, the terminal 100 may send the traveling trajectory to the server 300. In this way, the terminal 100 may not need to repeatedly upload the traveling trajectory before passing through the elevator, thereby saving transmission resources.

It should be noted that when collecting the traveling trajectory, the terminal 100 may also collect the position information of the vacant parking space near the traveling trajectory. In this way, the server 300 may collect position information of a vacant parking space in the parking lot of the building 10 by using each terminal that enters the parking lot floor of the building 10, to help a user who drives a vehicle to enter the building 10 search for a nearby vacant parking space.

S403: The terminal 100 displays the one or more traveling trajectories that are provided by the server 300 and that indicate the vehicle 200 to proceed to the vacant parking spaces, position information of the vacant parking spaces, and vacant parking space prompt information, where the vacant parking space prompt information is used to prompt the user to proceed to the vacant parking space based on the traveling trajectory.

After receiving the traveling trajectories and the position information of the vacant parking space that are sent by the server 300, the terminal 100 may display the one or more traveling trajectories and the position information of the vacant parking space that are provided by the server 300. The terminal 100 may further display the vacant parking space prompt information, where the vacant parking space prompt information is used to prompt the user to drive the vehicle 200 to the vacant parking space based on the traveling trajectory. The traveling trajectory provided by the server 300 intersects or overlaps the traveling trajectory of the terminal 100.

In some examples, the terminal 100 may receive a user input of selecting any one of the plurality of traveling trajectories provided by the server 300, and hide, in response to the input, a traveling trajectory other than the traveling trajectory in the plurality of traveling trajectories.

In some other examples, when receiving the plurality of traveling trajectories provided by the server 300, the terminal 100 may display only the target traveling trajectory in the plurality of traveling trajectories. The target traveling trajectory is a traveling trajectory that is in the plurality of traveling trajectories and that is used to guide the vehicle 200 to the target vacant parking space. The target vacant parking space is a vacant parking space closest to the terminal 100, and/or a vacant parking space with a highest confidence value, and/or a vacant parking space with latest recording time. In some other examples, the server 300 may send only the target traveling trajectory to the terminal 100.

In some examples, after receiving the traveling trajectory provided by the server 300, the terminal 100 displays a partial route segment that is from the position of the terminal 100 to the vacant parking space and that is of the traveling trajectory. Specifically, because there is an overlapping part between the traveling trajectory provided by the server 300 and the traveling trajectory that the terminal 100 passes through, the terminal 100 may determine, based on the traveling trajectory that the terminal 100 passes through and the traveling trajectory provided by the server 300, a traveling trajectory from the position of the terminal 100 to the vacant parking space. The vehicle 200 may proceed to the vacant parking space based on the traveling trajectory that is displayed on the terminal 100 and that is from the position of the terminal 100 to the position of the vacant parking space.

In some examples, when the building 10 includes a plurality of parking lot floors, the traveling route provided by the server 300 may be a cross-floor traveling route. The terminal 100 may determine, from the server 300 based on the collected radio signal fingerprints, a floor on which the terminal 100 is located. The terminal 100 may display, based on the floor on which the terminal 100 is located, a traveling route that is on the floor on which the terminal 100 is located and that is of the traveling trajectory.

The following describes a plurality of steps shown in FIG. 4 with reference to application scenarios.

For example, as shown in FIG. 5, after detecting that the vehicle 200 travels into the parking lot of the building 10, the terminal 100 may collect a traveling trajectory departing from the entry 21, and collect radio signal fingerprints at a plurality of positions on the traveling trajectory. For specific descriptions in which the terminal 100 detects that the vehicle 200 travels into the building 10, and collects the traveling trajectory and the radio signal fingerprints, refer to the foregoing embodiments. Details are not described herein again.

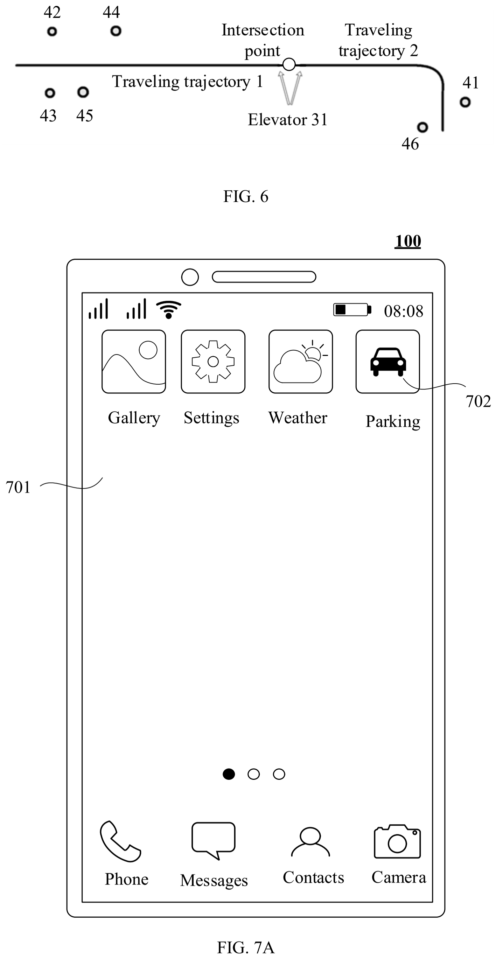

The terminal 100 may send the radio signal fingerprints to the server 300. After matching the radio signal fingerprints provided by the terminal 100 with an elevator zone fingerprint library of an elevator in the building 10, the server 300 may determine position information of positions corresponding to the radio signal fingerprints. The server 300 may determine, based on the traveling trajectory of the terminal 100 and the stored traveling trajectories, one or more traveling trajectories that partially overlap or intersect with the traveling trajectory of the terminal 100 in the stored traveling trajectories, and position information of vacant parking spaces near the one or more traveling trajectories. Herein, for the traveling route collected by the terminal 100, refer to a traveling trajectory 1 shown in FIG. 6. The traveling trajectory sent by the server 300 to the terminal 100 may be a traveling trajectory 2 shown in FIG. 6. There is an intersection point between the traveling trajectory 1 and the traveling trajectory 2, and the intersection point is located near the elevator 31. Vacant parking spaces near the traveling trajectory 2 include a parking space 41 and a parking space 46.

It should be noted that, when passing through a vacant parking space, the terminal 100 may determine a relative position relationship between a nearby vacant parking space and the traveling trajectory collected by the terminal 100, and simultaneously send position information of the vacant parking space near the traveling trajectory to the server 300 when sending the traveling trajectory collected by the terminal 100 to the server 300. In this way, the server 300 may obtain, through crowdsourcing, traveling trajectories and position information of vacant parking spaces that are provided by the terminals, and update vacant parking spaces in the building 10, so that when a subsequently arrived user drives a vehicle into the building 10, a traveling trajectory prompting the user to proceed to a vacant parking space may be obtained from the server 300.

For example, the terminal 100 may display a desktop 701 shown in FIG. 7A. The desktop 701 may include a plurality of application icons (for example, a parking application icon 702 and a gallery application icon). The parking application icon 702 may be used to trigger the terminal 100 to display an interface of the parking application. Optionally, a status bar is further displayed on the top of the desktop 701. The status bar may include but is not limited to information such as a communication signal strength indicator (for example, a 4G/5G communication signal strength indicator or a Wi-Fi communication signal strength indicator), a battery level, time, and a Bluetooth indicator (not shown in the figure). Optionally, there may be a dock (dock) region at the bottom of the desktop 701, and the dock region may include one or more dock icons (for example, a phone application icon, a messages application icon, a contacts application icon, and a camera application icon).

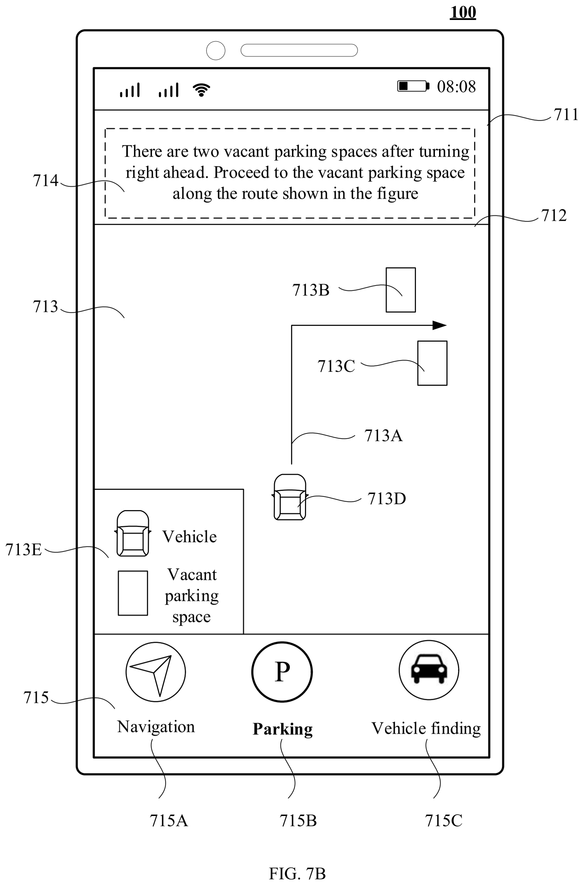

After receiving the traveling trajectory and the position information of the vacant parking space that are provided by the server 300, after the terminal 100 receives an input for the parking application icon 702, the terminal 100 may display, in response to the input, an interface 711 shown in FIG. 7B.

As shown in FIG. 7B, the interface 711 may include but is not limited to a display region 712. The display region 712 may include but is not limited to a display region 713 and prompt information 714. The display region 713 may include but is not limited to a trajectory 713A and one or more vacant parking space identifiers. The trajectory 713A may indicate the user to proceed, based on a route indicated by the trajectory 713A, to a vacant parking space corresponding to the vacant parking space identifier. The one or more vacant parking space identifiers may include but are not limited to a vacant parking space identifier 713B and a vacant parking space identifier 713C. The trajectory 713A is obtained by the terminal 100 based on the traveling trajectory 1 and the traveling trajectory 2 shown in FIG. 6. The vacant parking space identifier 713B may indicate a parking space 41 shown in FIG. 6, and the vacant parking space identifier 713C may indicate a parking space 46 shown in FIG. 6.

Optionally, the display region 713 may further include a vehicle identifier 713D. The vehicle identifier 713D may indicate the position of the terminal 100. The terminal 100 may determine the position of the terminal 100 based on the collected traveling trajectory and the position information that are of the plurality of positions on the traveling trajectory and that are obtained from the server 300.

Optionally, the display region 713 may further include a display region 713E, and the display region 713E may be used to display a correspondence between each identifier and a text description. As shown in the display region 713E in FIG. 7B, a vehicle identifier (for example, a vehicle identifier 713D) corresponds to a text description "Vehicle". A vacant parking space identifier (for example, the vacant parking space identifier 713B and the vacant parking space identifier 713C) corresponds to a text description "Vacant parking space". In this way, the terminal 100 may prompt the user with a meaning of each identifier by using a text description.

The prompt information 714 may be used to prompt the user to proceed to a vacant parking space along the trajectory 713A shown in the display region 713. The prompt information 714 may be text prompt information, animation prompt information, image prompt information, and/or voice prompt information. For example, the prompt information 714 may be text prompt information: "There are two vacant parking spaces after turning right ahead. Proceed to the vacant parking space along the route shown in the figure". In this way, the user can find a position of the vacant parking space based on the information prompted on the terminal 100, thereby improving parking efficiency of the user.

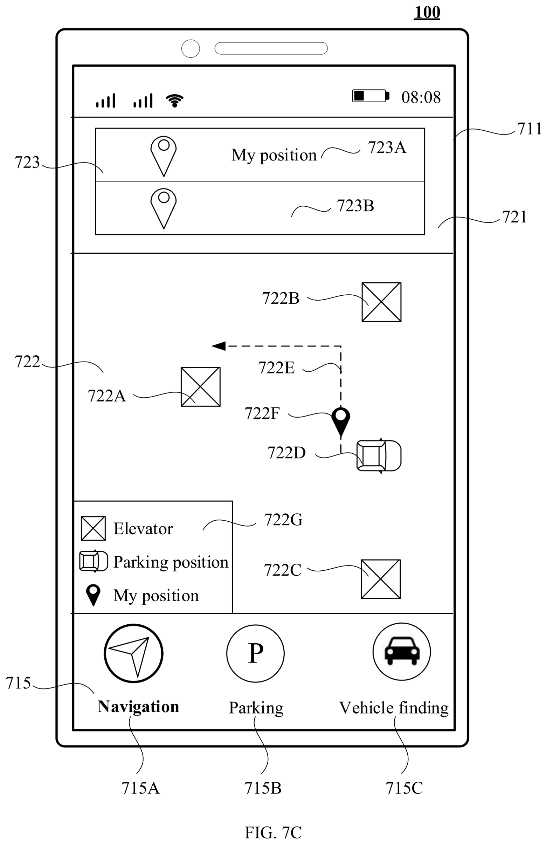

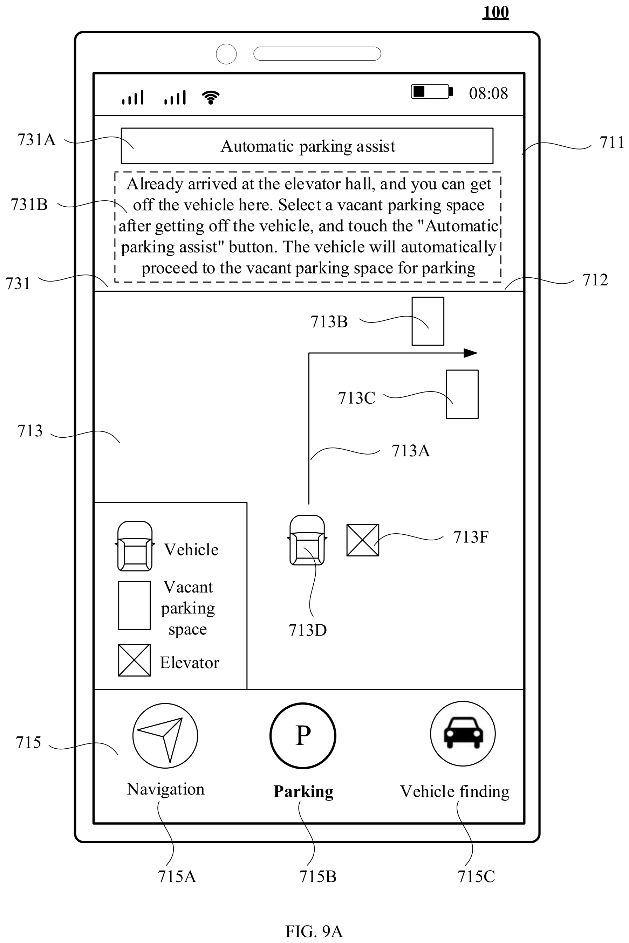

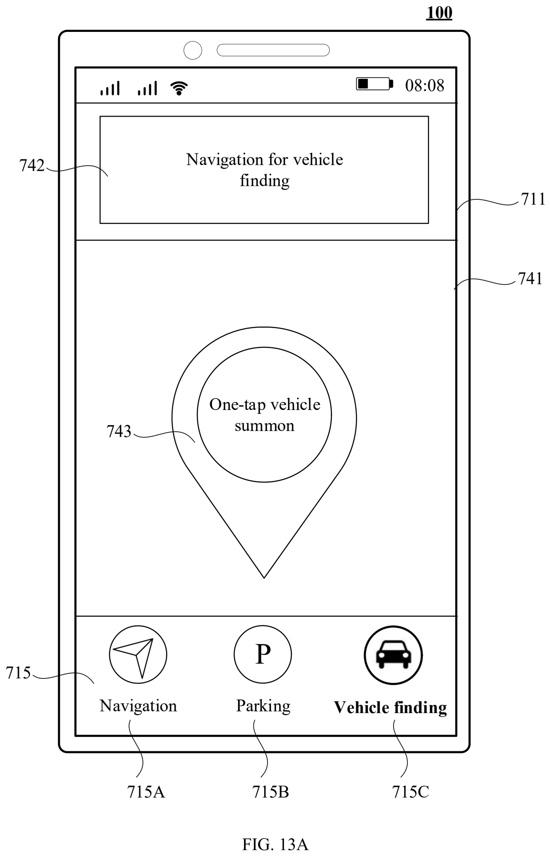

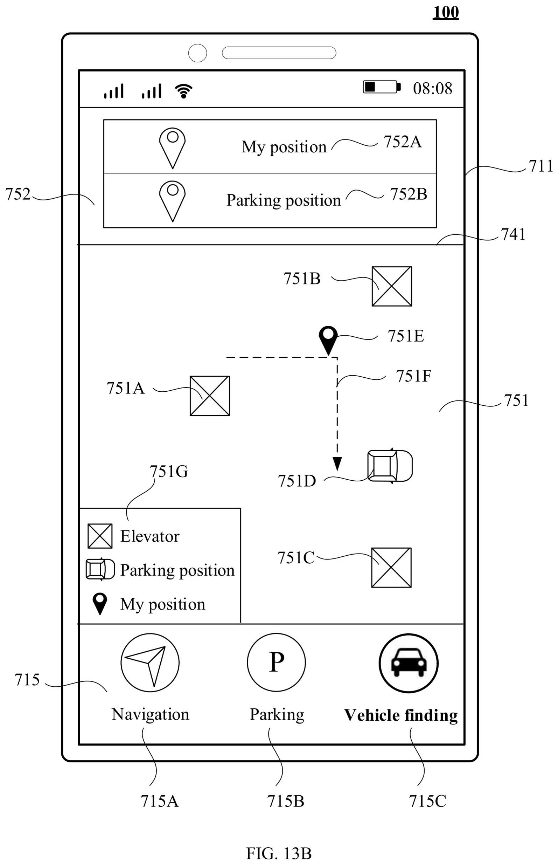

Optionally, the interface 711 may further include a display region 715, and the display region 715 may include one or more function controls. The one or more function controls may be used to trigger the terminal 100 to display a display region including function information corresponding to the function controls. For example, the one or more function controls may include but are not limited to a control 715A, a control 715B, and a control 715C. The control 715A may be used to trigger the terminal 100 to display a display region including navigation function information used to prompt the user to proceed to an elevator position, for example, a display region 722 shown in FIG. 7C. The control 715B may be used to trigger the terminal 100 to display a display region including parking function information used to prompt the user to proceed to a vacant parking space, for example, a display region 712 shown in FIG. 7B and a display region 712 shown in FIG. 9A. The control 715C may be used to trigger the terminal 100 to display a display region including vehicle finding function information used to prompt the user to proceed to a parking position, for example, a display region 741 shown in FIG. 13A or a display region 741 shown in FIG. 13B. In the interface 711 shown in FIG. 7B, the control 715B is in a selected state, and the terminal 100 displays the display region 712 including content of a parking function.

It should be noted that, when detecting that the position of the terminal 100 overlaps a vacant parking space corresponding to a vacant parking space identifier, the terminal 100 may send, to the server 300, a message indicating that the vacant parking space corresponding to the vacant parking space identifier is occupied. After receiving the message sent by the terminal 100, the server 300 may update the vacant parking space occupied by the vehicle 200 to a non-vacant parking space. The server 300 may cancel storage of position information of the vacant parking space. When there is only one vacant parking space near the traveling trajectory and the space is occupied by the terminal 100, the server 300 may further cancel storage of the traveling trajectory. In this way, after helping the user park the vehicle, the server 300 may set the parking space in which the user parks the vehicle to a non-vacant parking space, and update information about vacant parking spaces in the building 10. When another vehicle travels into the parking lot of the building 10, even if the vehicle 200 has not arrived at the vacant parking space for parking, the another vehicle that has just traveled in is not prompted to proceed to the vacant parking space occupied by the vehicle 200.

In a possible implementation, the terminal 100 may determine the relative position relationship between the terminal 100 and the elevator based on the traveling trajectory collected by the terminal 100 and the radio signal fingerprints at the plurality of positions on the traveling trajectory. After detecting that the user gets off the vehicle at the parking position, the terminal 100 may display the position information of the elevator based on the relative position relationship between the terminal 100 and the elevator. In this way, when the user proceeds to an unfamiliar place, after detecting that the user gets off the vehicle, the terminal 100 displays position information of an elevator, to help the user proceed to the elevator, so that the user can proceed to another floor by taking the elevator as soon as possible, thereby saving time consumed by the user in searching for the elevator.

Specifically, the server 300 may determine, based on the radio signal fingerprints provided by the terminal 100, relative position relationships between the plurality of positions on the traveling trajectory of the terminal 100 and an elevator. The server 300 stores the relative position relationship between the elevators. The server 300 may determine the relative position relationship between the traveling trajectory and each elevator based on the relative position relationship between the traveling trajectory and an elevator and the relative position relationship between the elevators in the building. When sending the position information of the vacant parking space and the like to the terminal 100, the server 300 may send the relative position relationship between the traveling trajectory of the terminal 100 and each elevator to the terminal 100. When detecting that the user gets off the vehicle, the terminal 100 may determine a relative position relationship between the parking position and the elevator based on the relative position relationship between the traveling trajectory collected by the terminal 100 and the elevator. In this way, when the user wants to return to the parking position, the terminal 100 may display, based on the relative position relationship between the parking position and the elevator, prompt information used to prompt the user to proceed to the elevator position from the parking position.

Alternatively, the terminal 100 may display the target traveling trajectory, the target vacant parking space, and the position of the specified elevator that are obtained from the server 300. In this way, because the user drives the vehicle from the specified elevator to the target vacant parking space based on the target traveling trajectory, after the user gets off the vehicle at the target vacant parking space, the user can return to the specified elevator based on the target traveling trajectory. This helps the user find the elevator and the user does not need to search for an elevator hall again after getting off the vehicle.

In some examples, the terminal 100 may record the step quantity of the user by using the pedometer application. When detecting that the step quantity of the user increases, the terminal 100 may determine that the user has got off the vehicle. It should be noted that, because some pedometer applications detect the step quantity of the user based on data obtained by a sensor like an IMU, detecting a change of the step quantity of the user and determining of whether the user gets off the vehicle are not limited to being performed by the pedometer application. The terminal 100 may alternatively detect, by using a sensor like an IMU, an accelerometer, or a gyroscope, whether the user gets off the vehicle.

In some other examples, the terminal 100 establishes a communication connection to a head unit terminal (for example, a central control terminal) of the user vehicle. When a distance between the terminal 100 and the head unit terminal exceeds a preset distance, the terminal 100 disconnects the communication connection to the head unit terminal. When detecting that the communication connection to the head unit terminal is disconnected, the terminal 100 may determine that the user gets off the vehicle. Optionally, the head unit terminal of the vehicle may detect an open state of a door of the vehicle. When detecting that the door is open and then closed, the head unit terminal may determine that the user gets off the vehicle. Alternatively, a sensor (for example, a pressure sensor or a gravity sensor) is disposed in a driving seat of the vehicle, and the head unit terminal of the vehicle may detect, by using the sensor, that the user leaves the driving seat, and confirm that the user gets off the vehicle.

Optionally, the terminal 100 may also display the position information of the elevator and elevator prompt information when detecting that the position of the terminal 100 overlaps the position of the vacant parking space provided by the server 300. For example, when detecting that the traveling trajectory collected by the terminal 100 intersects the vacant parking space corresponding to the vacant parking space identifier, the terminal 100 may determine that the position of the terminal 100 overlaps the position of the vacant parking space provided by the server 300.

For example, after displaying the interface 711 including the display region 712 shown in FIG. 7B, the terminal 100 detects that the user gets off the vehicle at the parking space 41 corresponding to the vacant parking space identifier 713B, and the terminal 100 may display the interface 711 shown in FIG. 7C. Herein, the parking position is the parking space 41.

For example, as shown in FIG. 7C, the interface 711 includes a display region 721. The display region 721 includes the display region 722. The display region 722 may indicate the relative position relationship between each elevator and the parking position.

The display region 722 may include but is not limited to one or more elevator identifiers. The one or more elevator identifiers may include an elevator identifier 722A, an elevator identifier 722B, and an elevator identifier 722C. The one or more elevator identifiers indicate positions of elevators in the parking lot.

The display region 722 may further include a vehicle identifier 722D and/or a user identifier 722F. The vehicle identifier 722D may indicate the position of the vehicle, namely, the parking position. The user identifier 722F may indicate the position of the terminal 100. For example, the terminal 100 may collect a moving trajectory of the user after the user gets off the vehicle, and the terminal 100 may determine a real-time position of the terminal 100 based on the parking position and the moving trajectory of the user after the user gets off the vehicle. For descriptions of collecting the moving trajectory by the terminal 100, refer to the foregoing embodiments. Details are not described herein again. In this way, the user may determine a direction and a distance between the user and each elevator by observing the user identifier 722F.

Optionally, the display region 722 may further display a trajectory 722E. The trajectory 722E may indicate a route from the parking position to an elevator that the vehicle passes by. The server 300 may determine, based on a radio signal fingerprint collected by the terminal 100 near the elevator, a relative position relationship between a position corresponding to the radio signal fingerprint and the elevator. The terminal 100 may determine, based on the traveling trajectory collected by the terminal 100, a position near the elevator on the traveling trajectory. The terminal 100 may display a partial trajectory that is from the position near the elevator to the parking position and that is of the traveling trajectory. Herein, the elevator is the elevator 31 of the building 10. In this way, the terminal 100 may display the partial traveling trajectory, to help the user return from the parking space 41 to the elevator 31 based on a traveling route of the vehicle 200 traveling from the elevator 31 to the parking space 41. In some examples, the terminal 100 may display only an identifier of an elevator near the traveling trajectory collected by the terminal 100.

Optionally, the display region 722 may further include a display region 722G. The display region 722G may be used to display a correspondence between each identifier and a text description. As shown in the display region 722G in FIG. 7C, a vehicle identifier (for example, a vehicle identifier 722D) corresponds to a text description "Vehicle". An elevator identifier (for example, the elevator identifier 722A, the elevator identifier 722B, and the elevator identifier 722C) corresponds to a text description "Elevator". A user identifier (for example, the user identifier 722F) corresponds to a text description "My position". In this way, the terminal 100 may prompt the user with a meaning of each identifier by using a text description.

Optionally, the display region 721 shown in FIG. 7C may further include an address bar 723. The address bar 723 includes a start address 723A and a destination address 723B. Herein, the start address 723A may be displayed with text information: "My position", indicating that the start position is the position of the user. Because the terminal 100 has not received an input of selecting the destination address by the user, the destination address 723B is not displayed with text information.

Optionally, the terminal 100 may further display the elevator prompt information on the interface 711 shown in FIG. 7C. The elevator prompt information may be used to prompt the user to proceed from the parking position to the position of the elevator corresponding to the position information of the elevator based on content shown in the display region 722.

Optionally, when the terminal 100 displays the display region 712 shown in FIG. 7B, after receiving an input of the user for the control 715A, the terminal 100 may display, in response to the input, the interface 711 shown in FIG. 7C. When the terminal 100 does not detect that the user gets off the vehicle, the terminal 100 may not display the vehicle identifier 722D.

In some examples, the terminal 100 may display navigation prompt information after detecting that the user gets off the vehicle at the parking position. The terminal 100 may obtain the navigation prompt information based on the position of the terminal 100, the parking position, and the traveling trajectory collected by the terminal 100. The terminal 100 may prompt, based on a relative position of the terminal 100 on the traveling trajectory, the user to proceed along the traveling trajectory to the position of the elevator near the traveling trajectory. The terminal 100 may determine the position of the terminal 100 based on a moving trajectory collected after departure from the parking position. In this way, the terminal 100 may provide a detailed navigation prompt based on the traveling trajectory collected by the user, and guide the user step by step to the position of the elevator.

In some other examples, the terminal 100 displays one or more elevator identifiers. When receiving an input of the user for an elevator identifier of an elevator near the traveling trajectory, the terminal 100 may display navigation prompt information in response to the input. When receiving an input of the user for an elevator identifier of another elevator, the terminal 100 may display guide prompt information in response to the input. The another elevator is an elevator other than the elevator near the traveling trajectory in the building. The guide prompt information may be guide information that prompts the user to proceed toward a specified direction by a specified distance. The specified direction is a direction that is of the elevator corresponding to the selected elevator identifier and that is relative to the position of the terminal 100, and the specified distance is a straight-line distance that is between the elevator corresponding to the selected elevator identifier and the position of the terminal 100 and that is obtained through calculation by the terminal 100 based on the two positions. In this way, the user may determine, based on the guide information, the direction of the selected elevator and the distance between the elevator and the user. The user can plan a route to the elevator based on a layout of the parking lot within a sight range.

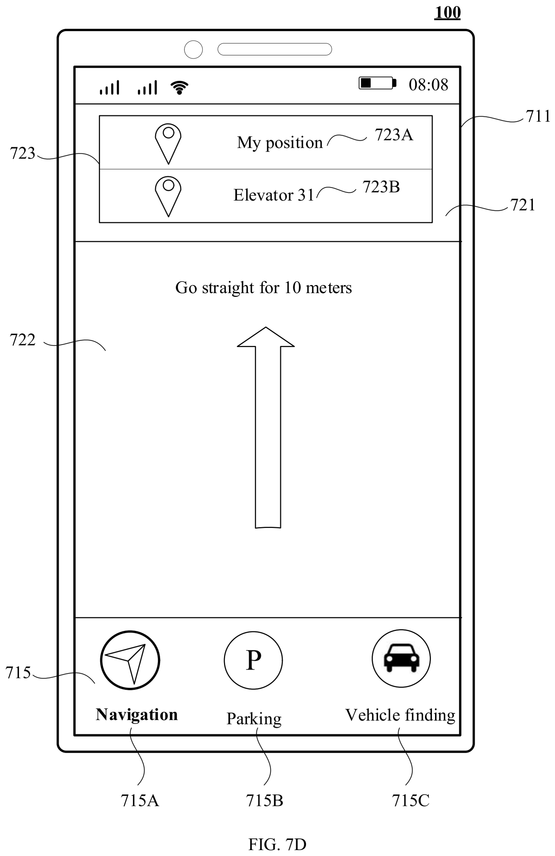

For example, after receiving an input (for example, tapping) of the user for the elevator identifier 722A, the terminal 100 may display, in response to the input, an interface 711 shown in FIG. 7D.

As shown in FIG. 7D, navigation prompt information is displayed in the display region 722. The terminal 100 may obtain the navigation prompt information based on a specific position of the terminal 100 on a traveling trajectory corresponding to the trajectory 722E. Herein, the terminal 100 detects that the position of the terminal 100 is a position corresponding to the user identifier 722F shown in FIG. 7C, and determines, based on a route indicated by the trajectory 722E, to first prompt the user to move forward for a distance, then prompt the user to turn left, and finally prompt the user to move forward for a distance to arrive at the elevator 31. The navigation prompt information may include but is not limited to text prompt information, animation prompt information, image prompt information, voice prompt information, and the like. The navigation prompt information in the display region 722 may include image prompt information and text prompt information. For example, the image prompt information may be an arrow icon, and the arrow icon may be used to prompt the user with a direction for moving forward. The text prompt information may be: "Go straight for 10 meters", and may be used to prompt the user with a distance for moving forward. Optionally, the display region 721 may further include an address bar 723. Herein, text information in the destination address 723B is "Elevator 31".

For another example, after displaying the interface 711 including the display region 712 shown in FIG. 7B, the terminal 100 detects that the user gets off the vehicle at the parking space 41 corresponding to the vacant parking space identifier 713B, and the terminal 100 may display an interface 711 shown in FIG. 7D.

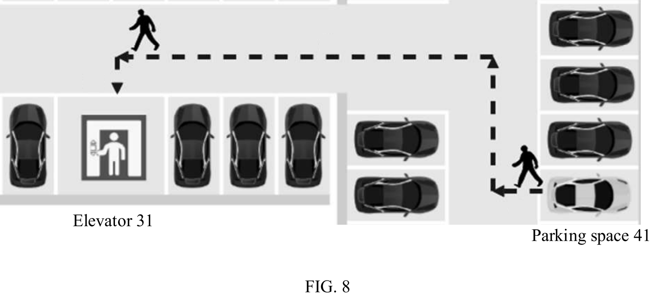

For example, as shown in FIG. 8, after getting off the vehicle, the user may proceed from the parking space 41 to the elevator 31 based on content shown in FIG. 7C and FIG. 7D. In this way, the terminal 100 may provide a navigation function for the user, so that the user can proceed to the elevator hall based on the content displayed on the terminal 100.

In some examples, when the plurality of traveling trajectories provided by the server 300 include a traveling trajectory of passing through the target vacant parking space and an elevator other than the specified elevator, the terminal 100 may display the traveling trajectory of passing through the target vacant parking space and the elevator other than the specified elevator. In this way, the terminal 100 may display, to the user, traveling trajectories that help the user proceed to a plurality of elevators, and the user may select an elevator that the user wants to proceed to.

In some examples, when the terminal 100 proceeds to the elevator from the parking position along the target traveling trajectory, the terminal 100 may receive an input of the user, identify a vacant parking space near the target traveling trajectory, and send position information that is of the vacant parking space and that is collected by the terminal 100 to the server 300. In this way, the server 300 may update vacant parking spaces on the target traveling route based on the vacant parking space reported by the user, thereby improving reliability of the vacant parking spaces stored by the server 300.

In some examples, the terminal 100 may display the parking prompt information after receiving the target traveling trajectory sent by the server 300. The parking prompt information may be used to prompt the user to get off the vehicle at the elevator. After detecting that the user gets off the vehicle, the terminal 100 may notify the vehicle 200 to proceed to the target vacant parking space based on the target traveling trajectory. In this way, when being in a specified range of the specified elevator (for example, a range of the elevator zone fingerprint library), the terminal 100 may prompt the user to get off the vehicle, so that the user can take the elevator after getting off the vehicle. In addition, the terminal 100 may control the vehicle 200 to automatically proceed to the vacant parking space and perform a parking operation, and the user does not need to drive the vehicle to the vacant parking space, and then walk from the parking position to the elevator after the parking, thereby greatly reducing parking time.

It should be noted that, this is not limited to the terminal 100. The server 300 may send the target traveling trajectory to the vehicle 200. The vehicle 200 may display or broadcast the parking prompt information, and after detecting that the user gets off the vehicle, the vehicle 200 proceeds to the target vacant parking space for parking. It may be understood that, because the user cannot view the content displayed by the vehicle 200 after getting off the vehicle, the vehicle 200 may send the position information of the parking position (namely, the target vacant parking space) to the terminal 100 after parking. In this way, the terminal 100 may display the position information of the parking position after receiving the input of the user for vehicle finding, to help the user search for the vehicle.

In some examples, after determining the one or more traveling trajectories that have an overlapping part with the traveling trajectory provided by the terminal 100 (or the vehicle 200), the server 300 may determine, based on one or more types of parking information of the vacant parking spaces near the one or more traveling trajectories, whether the vehicle 200 can automatically proceed to the vacant parking space. The one or more types of parking information may include but are not limited to information such as reporting time, a quantity of reporting times, and vacancy density. The report time is a time point at which the server 300 most recently receives the position information of the vacant parking space, that is, latest refresh time of the vacant parking space. The quantity of reporting times is a quantity of times that the server 300 receives the position information of the vacant parking space within preset duration. The vacancy density is a quantity of vacant parking spaces in a preset range. The server 300 may determine a confidence of a vacant parking space based on the one or more types of parking information. The confidence of the vacant parking space may be used to determine whether the vehicle 200 can perform an automatic parking assist operation. A shorter time interval between the reporting time of the vacant parking space and system time of the vehicle 200 indicates a larger confidence value of the vacant parking space. A longer time interval between the reporting time of the vacant parking space and the system time of the vehicle 200 indicates a smaller confidence value of the vacant parking space. A larger quantity of reporting times of the vacant parking space indicates a larger confidence value of the vacant parking space. A smaller quantity of reporting times of the vacant parking space indicates a smaller confidence value of the vacant parking space. Larger vacancy density indicates a larger confidence value of the vacant parking space. Smaller vacancy density indicates a smaller confidence value of the vacant parking space. In this way, the shorter time interval between the reporting time of the vacant parking space and the system time of the vehicle 200 indicates a higher probability that the vacant parking space is not occupied by another vehicle. Therefore, the vacant parking space with the reporting time closer to the current time has the larger confidence value. A large quantity of reporting times of the vacant parking space indicates that another user tends not to park a vehicle in the vacant parking space. Therefore, the larger quantity of reporting times of the vacant parking space indicates the larger confidence value. The larger vacancy density indicates that there are more vacant parking spaces nearby that are available for parking, and there is a lower probability that the vacant parking space is occupied. Therefore, the larger vacancy density indicates the larger confidence value.

If the confidence of the vacant parking space obtained by the server 300 through calculation is greater than a preset confidence threshold, the vehicle 200 can perform an automatic parking assist operation of parking in the vacant parking space. If the confidence of the vacant parking space obtained by the server 300 through calculation is less than the preset confidence threshold, the vehicle 200 cannot perform the automatic parking assist operation of parking in the vacant parking space.

Optionally, when sending the position information of the vacant parking space and the traveling trajectory to the terminal 100 (or the vehicle 200), the server 300 may send the confidence of the vacant parking space to the terminal 100 (or the vehicle 200). The terminal 100 (or the vehicle 200) may determine, based on the confidence of the vacant parking space, whether the vehicle 200 can automatically proceed to the vacant parking space.

It may be understood that when the vehicle 200 may perform the automatic parking assist operation for a plurality of vacant parking spaces, the vehicle 200 may select a closest vacant parking space to perform the automatic parking assist operation. Alternatively, the vehicle 200 (or the terminal 100) may display identifiers of the plurality of vacant parking spaces, and after receiving an input of the user for an identifier of any vacant parking space, perform, in response to the input, the automatic parking assist operation for the vacant parking space corresponding to the identifier. In this way, the vehicle 200 can automatically proceed to the closest vacant parking space for parking, or proceed to the vacant parking space in which the user tends to park for parking. Optionally, the vehicle 200 may perform the automatic parking assist operation after detecting that the user gets off the vehicle.

When the vehicle 200 proceeds to the vacant parking space based on the traveling trajectory provided by the server 300, the vehicle 200 may send, to the server 300, a message indicating that the vacant parking space is occupied. The message may include an identifier of the vacant parking space and/or position information of the vacant parking space. The server 300 may identify the parking space as being occupied by the vehicle. In this way, a case in which a vacant parking space is occupied by another vehicle in a process in which the vehicle proceeds to the vacant parking space can be avoided.

In some examples, when the vehicle 200 sends, to the server 300, a message indicating that the vacant parking space is occupied, if the server 300 has received a message indicating that the vacant parking space is occupied by another vehicle, the server 300 may send position information of a remaining vacant parking space near the vacant parking space to the vehicle 200. The vehicle 200 may automatically proceed to the remaining vacant parking space based on the traveling trajectory provided by the server 300. Optionally, when there is no remaining vacant parking space near the occupied vacant parking space, the vehicle 200 may send, to the terminal 100, prompt information used to prompt the user to return to the parking lot, and return to a position at which the user gets off the vehicle. In this way, when the vehicle 200 cannot automatically proceed to the vacant parking space, the vehicle 200 may return to the position at which the user gets off the vehicle, and prompt the user to proceed to the position of the vehicle 200, so that the user parks the vehicle 200 in the parking lot.

It should be noted that, on the way to the vacant parking space based on the traveling trajectory, the vehicle 200 may obtain position information of a vacant parking space near the traveling trajectory, and send the position information of the vacant parking space to the server 300. In this way, the server 300 may update a vacant parking space near the traveling trajectory.

It should be further noted that, when proceeding from the position at which the user gets off the vehicle to the vacant parking space, the vehicle 200 may collect the traveling trajectory of the vehicle 200. The traveling trajectory of the vehicle 200 may indicate a relative position relationship between the vehicle 200 and the position at which the user gets off the vehicle. The vehicle 200 may report the collected traveling trajectory to the terminal 100. The terminal 100 may display the position information of the vehicle 200 based on the traveling trajectory of the vehicle 200. In this way, the user may determine the position of the vehicle 200 based on the content displayed on the terminal 100. After traveling into the target vacant parking space, the vehicle 200 may exit an automatic parking assist mode, stop, and shut off.

In some examples, a formula for calculating a confidence of a vacant parking space is as follows:

$$\text{Confidence} = w_t \cdot \max(T_{thr} + t_{Latest} - t, 0) + w_n \cdot n + w_d \cdot d$$

Herein, $T_{thr}$ is a critical time parameter, and a value of $T_{thr}$ is a fixed value, for example, $T_{thr}$ may be 60 minutes; $t_{Latest}$ indicates reporting time of the vacant parking space, expressed in minutes; t may be system time of the server 300, expressed in minutes; n may be a quantity of reporting times of a vacant parking space within preset duration (for example, 60 minutes); and d may be a quantity of vacant parking spaces in a preset range of the vacant parking space. For example, the preset range may be a region in which the vacant parking space is a circle center and a radius is 30 meters. It should be noted that the preset range herein is merely an example, and should not constitute a specific limitation on the preset range. Herein, $w_t$, $w_n$, and $w_d$ are weights of parameters. For example, $w_t$ may be 0.3, $w_n$ may be 0.3, and $w_d$ may be 0.4. In some other examples, t may be a time point at which the terminal 100 (or the vehicle 200) receives an input of searching for a vacant parking space by the user, or the like. For example, when the confidence of the vacant parking space is greater than a preset confidence threshold (for example, the preset confidence threshold is 60), it indicates that the vehicle 200 may perform the automatic parking assist operation. When the confidence of the vacant parking space is less than the preset confidence threshold (for example, the preset confidence threshold is 60), it indicates that the vehicle 200 cannot perform the automatic parking assist operation.

For example, the terminal 100 displays the desktop 701 shown in FIG. 7A. After receiving an input (for example, tapping) of the user for the parking application icon 702, the terminal 100 may display, in response to the input, an interface 711 shown in FIG. 9A. For some descriptions of the interface 711 shown in FIG. 9A, refer to the embodiment shown in FIG. 7B. Details are not described herein again.

As shown in FIG. 9A, a vacant parking space identifier 713B and a vacant parking space identifier 713C are displayed in the display region 713. The vacant parking space identifier 713B may be used to trigger the vehicle 200 to proceed to a vacant parking space corresponding to the vacant parking space identifier 713B. The vacant parking space identifier 713C may be used to trigger the vehicle 200 to proceed to a vacant parking space corresponding to the vacant parking space identifier 713C. The display region 713 may further include an elevator identifier 713F, and the elevator identifier 713F may be used to prompt the user to proceed to a position of the elevator after getting off the vehicle. Herein, the vehicle identifier 713D is located near the elevator identifier 713F. The display region 712 may further include a display region 731, and the display region 731 includes a control 731A and prompt information 731B. The control 731A may be used to trigger the terminal 100 to notify the vehicle 200 to proceed to a vacant parking space. The prompt information 731B may be used to prompt the user to get off the vehicle at a position corresponding to the elevator identifier 713F, and prompt the user to trigger, by using the control 731A, the vehicle 200 to perform the automatic parking assist operation after getting off the vehicle. For example, the prompt information 731B may be text prompt information: "Already arrived at the elevator hall, and you can get off the vehicle here. Select a vacant parking space after getting off the vehicle, and touch the 'Automatic parking assist' button. The vehicle will automatically proceed to the vacant parking space for parking".

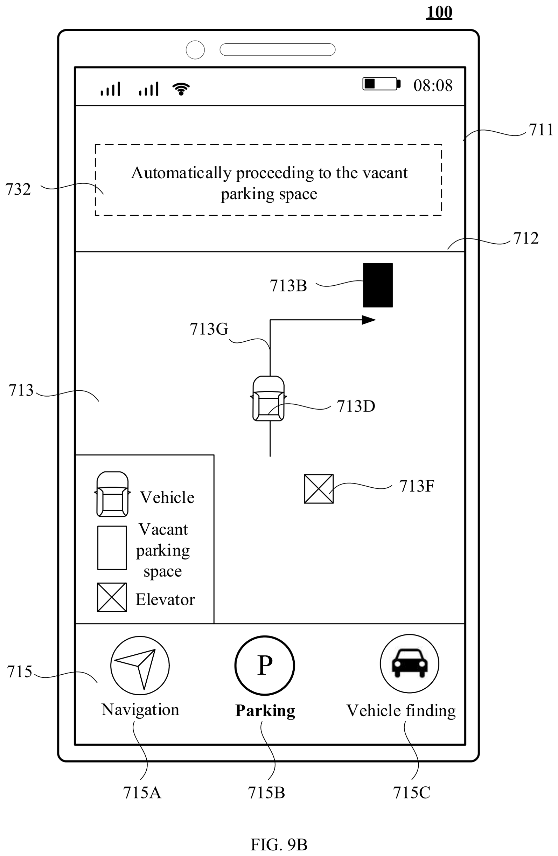

After receiving the input of the user for the vacant parking space identifier 713B shown in FIG. 9B, the terminal 100 may mark the vacant parking space identifier 713B in response to the input. The marked vacant parking space identifier 713B may prompt the user that a vacant parking space corresponding to the vacant parking space identifier 713B has been selected. Optionally, the terminal 100 may further hide the vacant parking space identifier 713C in response to the input for the vacant parking space identifier 713B shown in FIG. 9B.

Then, after receiving the input for the control 731A, the terminal 100 may display, in response to the input, an interface 711 shown in FIG. 9B.

As shown in FIG. 9B, the display region 712 includes prompt information 732, and the prompt information 732 may be used to prompt the user that the vehicle 200 is proceeding to the vacant parking space. For example, the prompt information 732 may be text prompt information: "Automatically proceeding to the vacant parking space". Optionally, the interface 711 may further include a display region 713. For some descriptions of the display region 713, refer to the embodiment shown in FIG. 9A. Details are not described herein again. The display region 713 may further include a route 713G, and the route 713G is a traveling route along which the vehicle 200 departs to the vacant parking space corresponding to the vacant parking space identifier 713B. Herein, the route 713G, the vehicle identifier 713D, and the vacant parking space identifier 713B may indicate a process in which the vehicle 200 proceeds to the vacant parking space.

It should be noted that, in a process of displaying the interface 711 shown in FIG. 9B, the terminal 100 may obtain, from the vehicle 200, a traveling route of the vehicle 200 from the elevator position to the parking position, and the terminal 100 may determine the position information of the vehicle 200 based on the traveling route.

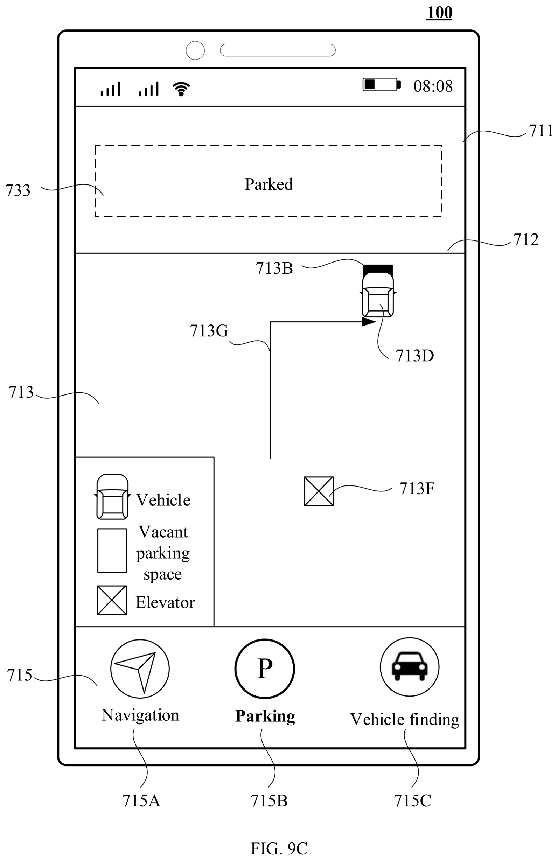

After determining, based on the collected traveling route of the vehicle 200 and the traveling route provided by the server 300, that the vehicle 200 arrives at the vacant parking space 41, the vehicle 200 may be parked in the vacant parking space 41. When determining, based on the traveling route collected by the vehicle 200, that the vehicle 200 has been parked in the vacant parking space 41, the terminal 100 may display an interface 711 shown in FIG. 9C.

As shown in FIG. 9C, the vehicle identifier 713D in the interface 711 overlaps a position of the vacant parking space identifier 713B, it indicates that the vehicle 200 has been parked in the vacant parking space 41. The interface 711 may further include prompt information 733, and the prompt information 733 may be used to prompt the user that the vehicle has been parked in the selected parking space. For example, the prompt information 733 may be text prompt information: "Parked".

Optionally, the terminal 100 may display the display region 731 shown in FIG. 9A. After receiving an input (for example, double-tapping) of the user for the vacant parking space identifier, the terminal 100 may notify, in response to the input, the vehicle 200 to proceed to the parking space corresponding to the vacant parking space identifier. The terminal 100 may further display prompt information used to prompt the user to select a vacant parking space by using a vacant parking space identifier. In this way, when controlling the vehicle 200 to perform the automatic parking assist operation, the user does not need to touch the control 731A additionally. This is more convenient.

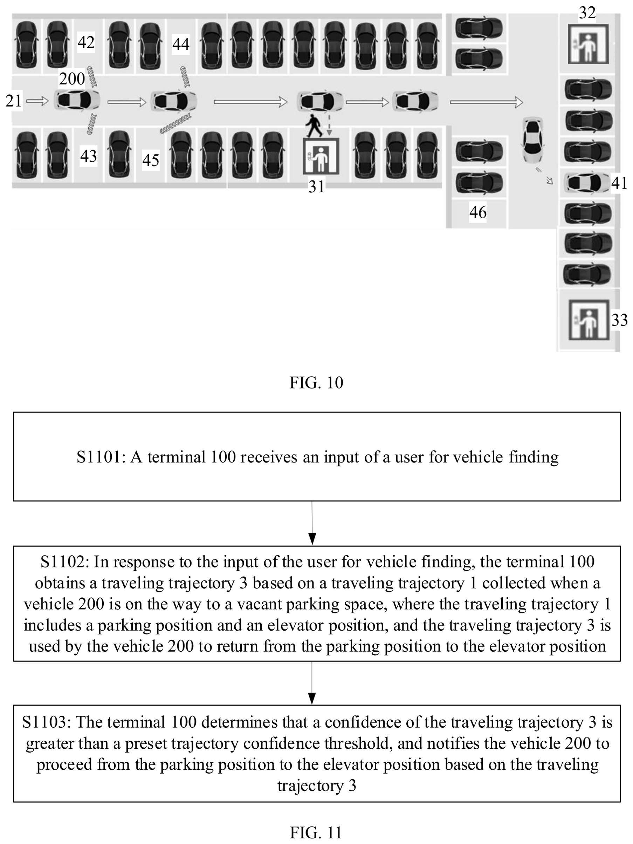

As shown in FIG. 10, the terminal 100 may display the interface 711 shown in FIG. 9A when the vehicle 200 is near the elevator 31. The interface 711 may be used to prompt the user that the vehicle 200 can perform the automatic parking assist operation, and prompt the user with the vacant parking space in which the vehicle 200 can be parked. In this way, after getting off the vehicle, the user may control, by using the terminal 100, the vehicle 200 to proceed to the vacant parking space. Then, the terminal 100 may display the interface 711 shown in FIG. 9B after receiving an input of the user for parking the vehicle 200 in the vacant parking space 41. For example, the input for parking the vehicle 200 in the vacant parking space 41 may be a combination of an input for the vacant parking space identifier 713B in the interface shown in FIG. 9A and an input for the control 731A.

It should be noted that the foregoing describes, by using the interface displayed on the terminal 100 as an example, specific steps of how the vehicle 200 performs the automatic parking assist operation. This is not limited to the terminal 100. The vehicle 200 may also display the interface used to provide the automatic parking assist function, so that the user can select the vacant parking space in the process of driving the vehicle 200. The vehicle 200 may further perform the automatic parking assist operation after detecting that the user gets off the vehicle.

In a possible implementation, the terminal 100 may determine the relative position relationship between the terminal 100 and the elevator based on the traveling trajectory collected by the terminal 100 and the radio signal fingerprints at the plurality of positions on the traveling trajectory. After detecting that the user gets off the vehicle at the parking position, the terminal 100 may determine the relative position relationship between the parking position and the elevator based on the relative position relationship between the terminal 100 and the elevator. After receiving the input of the user for vehicle finding (or searching for the vehicle), the terminal 100 may display, in response to the input, the position information of the parking position and the vehicle prompt information based on the relative position relationship between the elevator and the parking position. The vehicle prompt information may be used to prompt the user to proceed from the elevator to the parking position. In this way, after the user returns to the floor on which the vehicle is parked, the user may find, based on the content displayed on the terminal 100, the position at which the vehicle is parked. Even if the user forgets the parking position, the user does not need to search for the parking position of the vehicle in the parking lot, thereby saving time for the user in vehicle finding.

In some examples, after receiving the input of the user for vehicle finding, the terminal 100 may notify, in response to the input, the vehicle 200 to return to the position of the elevator based on the traveling trajectory collected when the vehicle 200 travels from the elevator to the vacant parking space. In this way, the user can remotely control the vehicle to arrive at the elevator, and the user does not need to take the vehicle in person, thereby saving time for picking up the vehicle. In addition, the user may control the vehicle to return to vicinity of the elevator in advance. Before the user arrives at the elevator, the vehicle may wait for the user to get on the vehicle near the elevator, so that the user can get on the vehicle and proceed to another place when returning to the parking lot floor through the elevator. In some examples, the terminal 100 may determine, based on a length of the traveling trajectory of the vehicle 200 from the elevator to the vacant parking space, whether the vehicle 200 can proceed from the parking position to the elevator position. When the length of the traveling trajectory from the elevator to the vacant parking space is less than a preset length, it is determined that the vehicle 200 can proceed from the parking position to the elevator position. In this way, it can be ensured that the vehicle 200 correctly arrives at the elevator position, and a case in which the vehicle 200 arrives at an incorrect position based on the traveling trajectory because the traveling trajectory is excessively long and a deviation between the traveling trajectory collected by the vehicle 200 and the traveling trajectory of the vehicle 200 is excessively large is avoided. For example, as shown in FIG. 11, in the positioning method provided in embodiments of this application, a procedure in which the terminal 100 notifies the vehicle 200 to proceed to the elevator position includes the following steps.

S1101: The terminal 100 receives the input of the user for vehicle finding.

In some examples, the terminal 100 may provide a vehicle finding function control, and the vehicle finding function control may be used to trigger the terminal 100 to perform step S1102 and step S1103. The input of the user for vehicle finding may be an input for the vehicle finding function control.

S1102: In response to the input of the user for vehicle finding, the terminal 100 obtains a traveling trajectory 3 based on the traveling trajectory 1 collected when the vehicle 200 is on the way to the vacant parking space, where the traveling trajectory 1 includes the parking position and the elevator position, and the traveling trajectory 3 is used by the vehicle 200 to return from the parking position to the elevator position.

When the vehicle 200 is driven by the user to the parking position, the terminal 100 may collect the traveling trajectory of the vehicle 200. Alternatively, the vehicle 200 may collect the traveling trajectory of the vehicle 200, and send the traveling trajectory to the terminal 100. When the vehicle 200 is automatically on the way to the parking position, the vehicle 200 may collect the traveling trajectory of the vehicle 200, and send the traveling trajectory to the terminal 100 after parking.

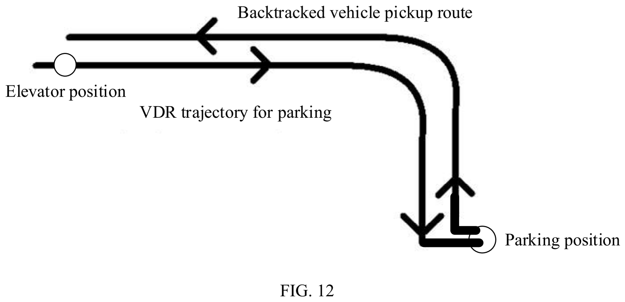

After receiving the input of the user for vehicle finding, the terminal 100 may obtain, in response to the input, the traveling trajectory 3 through backtracking based on the traveling trajectory 1. For example, if a VDR trajectory obtained when the vehicle 200 proceeds from the elevator 31 to the vacant parking space 41 for parking is the traveling trajectory 1, the traveling trajectory 3 obtained by the terminal 100 is a backtracked vehicle pickup route shown in FIG. 12.

S1103: The terminal 100 determines that a confidence of the traveling trajectory 3 is greater than a preset trajectory confidence threshold, and notifies the vehicle 200 to proceed from the parking position to the elevator position based on the traveling trajectory 3.

In some examples, the terminal 100 may determine, based on a length between a start position and a destination position on the traveling trajectory 3, whether the confidence of the traveling trajectory 3 is greater than the preset trajectory confidence threshold. For example, when the length between the start position and the destination position on the traveling trajectory 3 is greater than a preset length (for example, 20 meters), it is determined that the confidence of the traveling trajectory 3 is less than the preset trajectory confidence threshold. When the length between the start position and the destination position on the traveling trajectory 3 is less than the preset length, it is determined that the confidence of the traveling trajectory 3 is greater than the preset trajectory confidence threshold. For example, the start position is the parking position, and the destination position is the elevator position.

It may be understood that, when being on the way from the parking position to the elevator position, the vehicle 200 may collect position information of a vacant parking space near the traveling trajectory 3, and send the traveling trajectory 3 and the position information of the vacant parking space to the server 300.

In some other examples, after receiving the input of the user for vehicle finding, the terminal 100 may display the target traveling trajectory provided by the server 300. The target traveling trajectory may indicate the user to proceed from the specified elevator to the target vacant parking space in which the vehicle 200 is parked. Optionally, the terminal 100 may display the target traveling trajectory only when detecting that a distance between the position of the terminal 100 and the position of the specified elevator is less than a preset distance (for example, 3 meters) after receiving the input of the user for vehicle finding.

In some other examples, after receiving the input of the user for vehicle finding, the terminal 100 may display the position information of the terminal 100, the position information of the parking position, and the position information of each elevator provided by the server 300 when detecting that the distance between the position of the terminal 100 and the position of the specified elevator is greater than the preset distance (for example, 3 meters). In this way, when the user proceeds to the parking floor by taking an elevator other than the specified elevator, the user may also determine, by using the terminal 100, how to proceed to the parking position.

In some other examples, the vehicle 200 automatically proceeds from the specified elevator to the target vacant parking space based on the target traveling trajectory, or a length of a target traveling trajectory between the specified elevator and the target vacant parking space in the target traveling trajectory is less than a preset length. After receiving the input of the user for vehicle finding, the terminal 100 may send, to the vehicle 200, an indication message indicating the vehicle 200 to proceed from the target vacant parking space to the specified elevator based on the target traveling trajectory.

The following describes a vehicle finding procedure in an embodiment of this application with reference to an interface diagram.

For example, the terminal 100 stores the traveling trajectory of the vehicle 200 from the entry of the parking lot to the parking position. The terminal 100 may display the desktop 701 shown in FIG. 7A. After receiving an input of the user for the parking application icon 702, the terminal 100 may display an interface 711 shown in FIG. 13A.

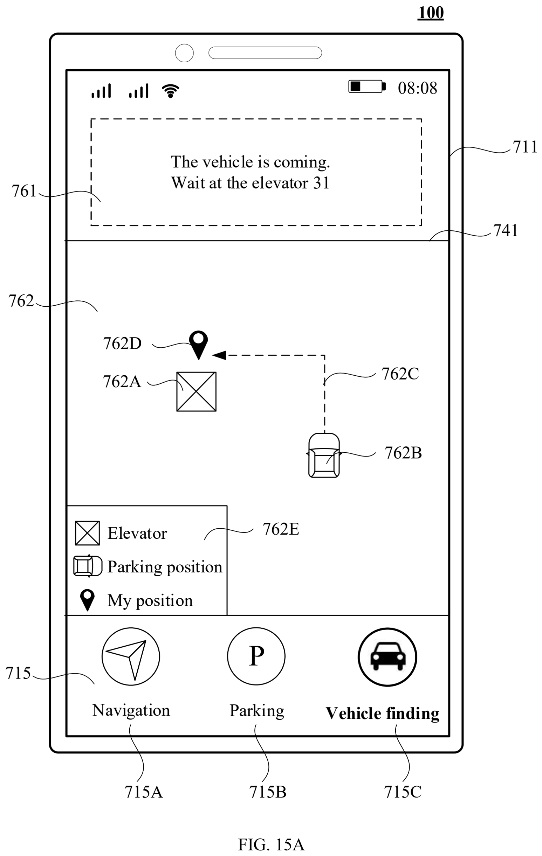

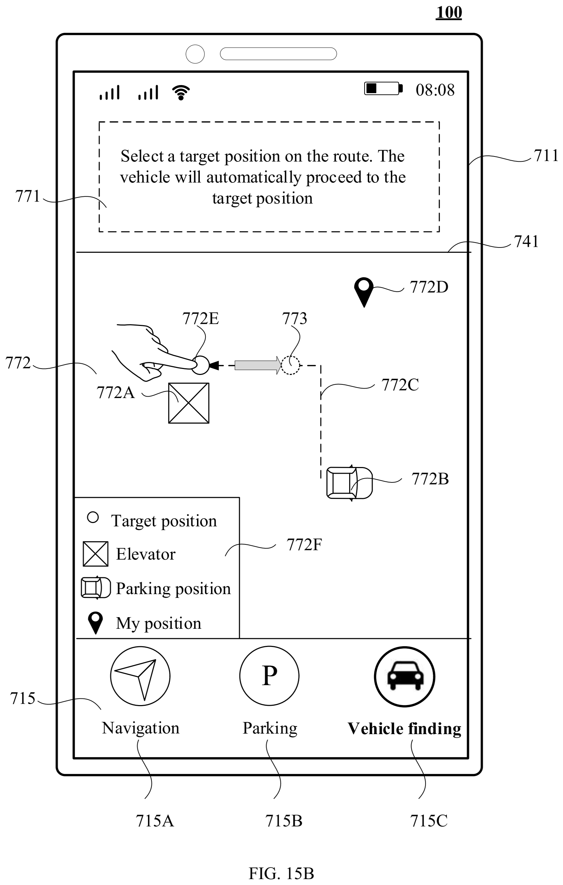

As shown in FIG. 13A, the interface 711 includes a display region 741. The display region 741 includes display content of the vehicle finding function provided by the terminal 100. Herein, the display region 741 may include but is not limited to a control 742 and a control 743. The control 742 may be used to trigger the terminal 100 to display content used to prompt the user to proceed from the elevator position to the parking position. For example, the terminal 100 may display an interface 711 shown in FIG. 13B. The control 743 may be used to trigger the terminal 100 to display content in which that the vehicle 200 proceeds from the parking position to a specified position is described. For example, when the specified position is the elevator position, the terminal 100 may display an interface 711 shown in FIG. 15A. When the specified position is a position set by a user input received by the terminal 100, the terminal 100 may display an interface 711 shown in FIG. 15B. The terminal 100 has obtained the traveling trajectory of the vehicle 200 from the entry of the parking lot to the parking position. Therefore, after receiving the input for the parking application icon 702, the terminal 100 may determine, in response to the input, that the user wants to find the vehicle, and display an interface 711 shown in FIG. 13A.

Optionally, the interface 711 shown in FIG. 13A may further include a display region 715. For details, refer to the embodiment shown in FIG. 7B. Details are not described herein again. In the interface 711 shown in FIG. 13A, a control 715C is in a selected state, and the terminal 100 displays a display region 741 including content of the vehicle finding function.

After receiving an input of the user for a control 742, the terminal 100 may display, in response to the input, the interface 711 shown in FIG. 13B. As shown in FIG. 13B, the display region 741 includes a display region 751. The display region 751 may include but is not limited to one or more elevator identifiers. The one or more elevator identifiers may include but are not limited to an elevator identifier 751A, an elevator identifier 751B, and an elevator identifier 751C. The display region 751 may further include a vehicle identifier 751D. In this way, the terminal 100 may display a relative position relationship between the vehicle and the elevator, and the user may proceed from the elevator position to the parking position based on the relative position relationship. In some examples, the terminal 100 may display only an elevator identifier corresponding to an elevator within a preset range of the position of the terminal 100.

Optionally, the display region 751 may further include a user identifier 751E and/or a trajectory 751F. A direction of the trajectory 751F is from the elevator identifier 751A to the vehicle identifier 751D. Optionally, the display region 751 may further include a display region 751G. For a description of the display region 751, refer to the description of the display region 721 in FIG. 7C. Details are not described herein again.

Optionally, the interface 711 may further include an address bar 752. The address bar 752 may include a start address 752A and a destination address 752B. Specifically, for a description of the address bar 752, refer to the description of the address bar 723 in FIG. 7C. Details are not described herein again.

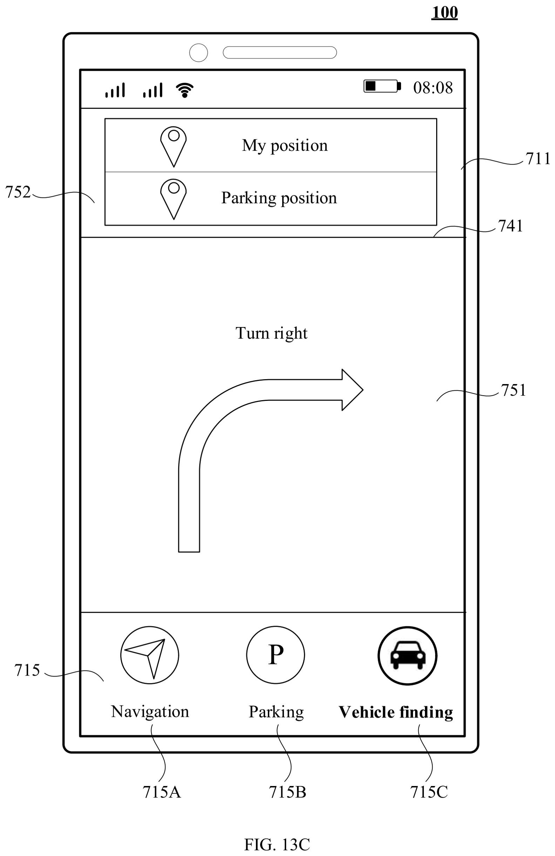

Alternatively, after receiving the input of the user for the control 742, the terminal 100 may display, in response to the input, an interface 711 shown in FIG. 13C. As shown in FIG. 13C, the interface 711 includes a display region 741. The display region 741 may include but is not limited to a display region 751. The display region 751 may include navigation information used to prompt the user to proceed to the parking position. For example, when the user is at a position indicated by the user identifier 751E shown in FIG. 13B, prompt information prompting the user to turn right may be displayed in the display region 751. The prompt information includes text prompt information: "Turn right" and image prompt information, and the image prompt information includes a right-turn arrow shown in FIG. 13C. Optionally, the interface 711 may further include a display region 715. Optionally, the display region 741 may further include an address bar 752. Specifically, for a description of the interface 711 shown in FIG. 13C, refer to the embodiment shown in FIG. 7D. Details are not described herein again.

Optionally, the terminal 100 may display, on the interface 711 shown in FIG. 13B, the display content of the display region 751 shown in FIG. 13C. For example, the terminal 100 may display, in an upper left corner of the display region 751 shown in FIG. 13B, the display content of the display region 751 shown in FIG. 13C.

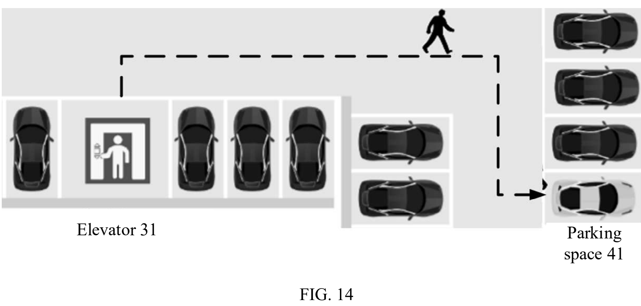

For example, the vehicle 200 is parked in the parking space 41, and the user is located at the elevator 31. The terminal 100 may display the display content shown in FIG. 13B or FIG. 13C, to help the user proceed from the elevator 31 to the parking space 41, as shown in FIG. 14.

The terminal 100 displays the interface 711 shown in FIG. 13A. After receiving an input of the user for the control 743, the terminal 100 may perform, in response to the input, step S1102 shown in FIG. 11. When detecting that the confidence of the traveling trajectory 3 is larger than the preset trajectory confidence threshold, the terminal 100 may notify the vehicle 200 to proceed from the parking position to the elevator position, and display the interface 711 shown in FIG. 15A.

As shown in FIG. 15A, the interface 711 includes a display region 741. The display region 741 includes prompt information 761. The prompt information 761 may be used to prompt the user that the vehicle 200 is proceeding from the parking position to the elevator position. For example, the prompt information 761 may be text prompt information: "The vehicle is coming. Wait at the elevator 31".

In some examples, the display region 741 may further include a display region 762. The display region 762 may be used to display the position information of the vehicle 200. The display region 762 may include an elevator identifier 762A and a vehicle identifier 762B. The elevator identifier 762A and the vehicle identifier 762B may indicate a distance between the vehicle 200 and the elevator 31.

Optionally, the display region 762 may further include a trajectory 762C, and the trajectory 762C may indicate a route from the vehicle 200 to the elevator 31.

Optionally, the display region 762 may further include a user identifier 762D, and the user identifier 762D may indicate a position of the user. In this way, the user may determine, based on the user identifier 762D, whether the position of the user is near the elevator 31, to help the user determine the position of the user.

Optionally, the display region 762 may further include a display region 762E. For a description of the display region 762E, refer to description of the display region 722G in FIG. 7C. Details are not described herein again.

Optionally, the interface 711 shown in FIG. 15A may further include a display region 715. For a description of the display region 715, refer to the embodiment shown in FIG. 7B. Details are not described herein again. In the interface 711 shown in FIG. 15A, a control 715C is in a selected state, and the terminal 100 displays the display region 741 including the content of the vehicle finding function.

It may be understood that, after the vehicle 200 autonomously drives to a target position, an autonomous driving function may be disabled, and the user drives the vehicle 200 to another position.

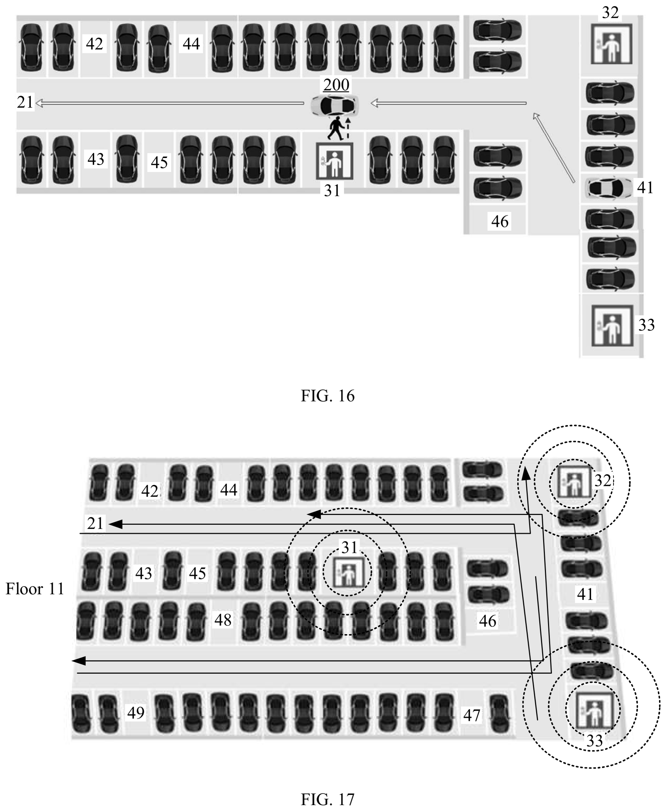

For example, after receiving the traveling trajectory 3 sent by the terminal 100, the vehicle 200 may proceed from the parking position (the vacant parking space 41) to the elevator position (the elevator 31) based on the traveling trajectory 3. After the vehicle 200 arrives at the elevator position, the vehicle 200 may be driven by the user to the entry 21 after detecting that the user gets on the vehicle, as shown in FIG. 16.

In some examples, when detecting that the confidence of the traveling trajectory 3 is greater than the preset trajectory confidence threshold, the terminal 100 may display the traveling trajectory 3. The terminal 100 may, in response to an input of selecting a specified position on the traveling trajectory 3 by the user, notify the vehicle 200 to proceed from the parking position to the specified position based on the traveling trajectory 3. In this way, the user may select a most convenient position on the traveling trajectory 3 for getting on the vehicle, so that the vehicle 200 automatically proceeds to the specified position, and the user can conveniently get on the vehicle.

For example, when receiving an input of the user for the control 743 shown in FIG. 13A, the terminal 100 may display, in response to the input, the interface 711 shown in FIG. 15B.

As shown in FIG. 15B, the display region 741 includes a display region 772. The display region 772 is used to display the traveling trajectory 3 obtained by the terminal 100 by performing step S1102 shown in FIG. 11. The display region 772 includes a trajectory 772C and a target position identifier 772E, the target position identifier 772E is located on the trajectory 772C, and the trajectory 772C may be used to represent the traveling trajectory 3. The target position identifier 772E may indicate a target position at which the vehicle 200 arrives after departure from the parking position.

In some examples, a position corresponding to the target position identifier 772E may be located at an elevator position on the traveling trajectory 3, or a position corresponding to the target position identifier 772E may be located at a position that is on the traveling trajectory 3 and that is closest to the terminal 100. In this way, the terminal 100 may set, by default, the position corresponding to the target position identifier 772E to be a position on the traveling trajectory 3, so that the vehicle 200 can proceed to the elevator or near the user by default, thereby saving time for the user in picking up the vehicle.

Optionally, the interface 711 shown in FIG. 15B may further include a confirm control and a cancel control. The confirm control may be used to trigger the terminal 100 to notify the vehicle 200 to proceed to the position corresponding to the target position identifier 772E. The cancel control may be used to trigger the terminal 100 to notify the vehicle 200 to pause moving at a current position.

Optionally, the display region 772 may further include an elevator identifier 772A and a vehicle identifier 772B. In this way, the user may determine the position of the vehicle 200 based on a distance between the elevator identifier 772A and the vehicle identifier 772B.

Optionally, the display region 772 may further include a user identifier 772D. In this way, the user may determine the position of the user based on the user identifier 772D, facilitating the user to proceed to the position corresponding to the target position identifier 772E.

Optionally, the display region 772 may further include a display region 772F. The display region 772F may be used to display a correspondence between each identifier and a text description. As shown in the display region 772F in FIG. 15B, a target position identifier (for example, the target position identifier 772E) corresponds to a text description "Target position". In this way, the terminal 100 may prompt the user with a meaning of each identifier by using a text description.

Optionally, the display region 741 may further include prompt information 771. The prompt information 771 may be used to prompt the user to select a target position of the vehicle 200. For example, the prompt information 771 may be text prompt information: "Select a target position on the route. The vehicle will automatically proceed to the target position". Optionally, the interface 711 may further include a display region 715. For a description of the display region 715, refer to the embodiment shown in FIG. 15A. Details are not described herein again.

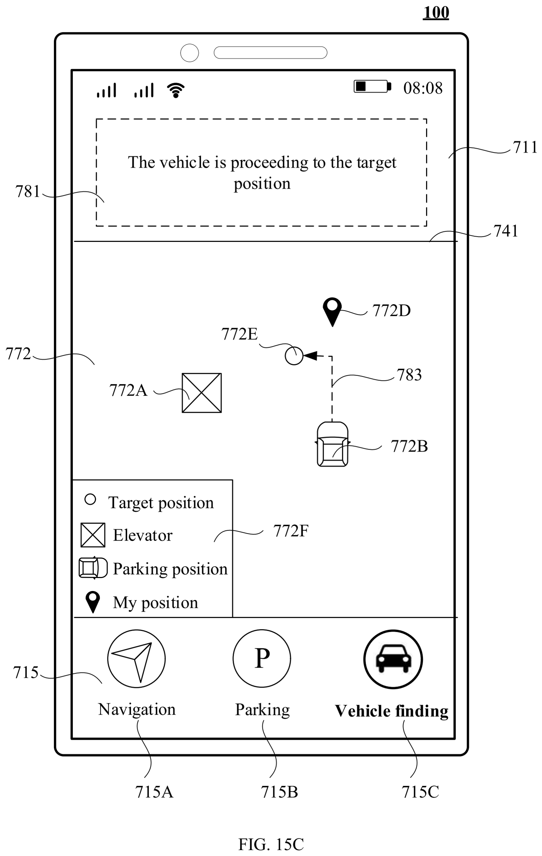

After receiving an input of sliding, by the user, the target position identifier 772E shown in FIG. 15B to a position 773, the terminal 100 may display, in response to the input, a target position identifier 772E shown in FIG. 15C.

As shown in FIG. 15C, the display region 772 may further include a trajectory 783, and the trajectory 783 may indicate a trajectory of the vehicle 200 to a position corresponding to the target position identifier 772E. The interface 711 may further include prompt information 781, and the prompt information 781 may be used to prompt the user that the vehicle 200 is proceeding to the position corresponding to the target position identifier 772E. For example, the prompt information 781 may be text prompt information: "The vehicle is proceeding to the target position". In this way, when the user is located at the position corresponding to the user identifier 772D shown in FIG. 15B, the user may move the target position identifier 772E shown in FIG. 15B to the position 773, so that when the user proceeds from the position corresponding to the user identifier 772D shown in FIG. 15B to the position corresponding to the user identifier 772D shown in FIG. 15C, the vehicle 200 proceeds from the parking position to the position corresponding to the target position identifier. The user and the vehicle 200 may meet at a same target position, so that time for the user in waiting for the vehicle or time for the vehicle in waiting for the user is saved.

In some examples, after displaying the interface 711 shown in FIG. 7B, the terminal 100 may detect that the user gets off the vehicle. After detecting that the user gets off the vehicle, after receiving the input for the control 715C, the terminal 100 may display, in response to the input, the interface 711 shown in FIG. 13A. Alternatively, in response to the input, when detecting that the confidence of the traveling trajectory 3 is greater than the preset trajectory confidence threshold, the terminal 100 displays the interface 711 shown in FIG. 15A or the interface 711 shown in FIG. 15B. Alternatively, in response to the input, when detecting that the confidence of the traveling trajectory 3 is less than the preset trajectory confidence threshold, the terminal 100 displays the interface 711 shown in FIG. 13B.

In some other examples, after displaying the interface 711 shown in FIG. 7C or FIG. 7D, the terminal 100 may detect that the terminal 100 arrives at the position corresponding to the elevator identifier 722A. After receiving the input for the control 715C, the terminal 100 may display, in response to the input, the interface 711 shown in FIG. 13A. Alternatively, in response to the input, when detecting that the confidence of the traveling trajectory 3 is greater than the preset trajectory confidence threshold, the terminal 100 displays the interface 711 shown in FIG. 15A or the interface 711 shown in FIG. 15B. Alternatively, in response to the input, when detecting that the confidence of the traveling trajectory 3 is less than the preset trajectory confidence threshold, the terminal 100 displays the interface 711 shown in FIG. 13B.

In some other examples, the terminal 100 displays the interface 711 shown in FIG. 9C, and after receiving the input for the control 715C, the terminal 100 displays, in response to the input, the interface 711 shown in FIG. 13A. Alternatively, in response to the input, when detecting that the confidence of the traveling trajectory 3 is greater than the preset trajectory confidence threshold, the terminal 100 displays the interface 711 shown in FIG. 15A or the interface 711 shown in FIG. 15B. Alternatively, in response to the input, when detecting that the confidence of the traveling trajectory 3 is less than the preset trajectory confidence threshold, the terminal 100 displays the interface 711 shown in FIG. 13B.

In a possible implementation, the server 300 may obtain, through crowdsourcing, traveling trajectories collected by a plurality of vehicles, radio signal fingerprints at a plurality of positions on each traveling trajectory, and parking lot image data at the plurality of positions on each traveling trajectory. The server 300 may generate a parking lot map based on the data obtained through crowdsourcing. In this way, when entering the building 10, the terminal 100 may obtain the parking lot map of the building 10 from the server 300 based on the collected radio signal fingerprints, so that the user can proceed to a desired position based on the parking lot map.

Specifically, in embodiments of this application, the parking lot map may be generated by using the following steps.

(1) The server 300 generates a parking lot road network based on a plurality of traveling trajectories, radio signal fingerprints at a plurality of positions on the plurality of traveling trajectories, and an elevator zone fingerprint library of a building.

When head unit terminals of a plurality of vehicles detect that the vehicles enter the building, the head unit terminals may collect traveling trajectories of the vehicles in the parking lot of the building, and collect parking lot image data and radio signal fingerprints at a plurality of locations on the traveling trajectories. The server 300 may obtain, through crowdsourcing, the traveling trajectories and the radio signal fingerprints that are collected by the plurality of vehicles. The server 300 may determine relative position relationships between the plurality of traveling trajectories and an elevator based on the radio fingerprint signals of the plurality of traveling trajectories and the elevator zone fingerprint library, that is, determine relative position relationships between the plurality of traveling trajectories. The server 300 may use the relative position relationship as a constraint condition, and aggregate the traveling trajectories together by using an algorithm, to generate the parking lot road network. Then, the server 300 may obtain longitudes and latitudes of entries/exits of the building by using a map application, and then determine longitudes and latitudes of elevators from the longitudes and the latitudes of the entries/exits along the traveling trajectories based on the traveling trajectories that pass through the entries/exits and the elevators, to obtain a parking lot road network with longitudes and latitudes.

In this process, when collecting the traveling trajectory, the vehicle may further mark a position of an elevator in the parking lot on the traveling trajectory if an identifier of the elevator that the vehicle passes by is determined based on the radio signal fingerprint.

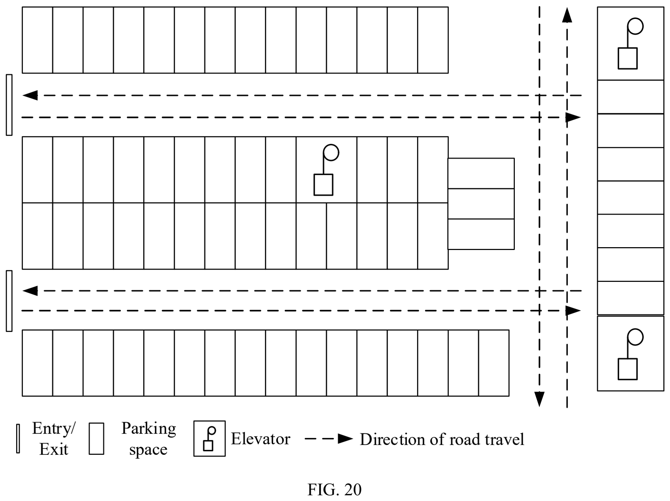

For example, the building 10 shown in FIG. 1 is used as an example. Apart of the traveling trajectories and an elevator zone range of each elevator that are obtained by the server 300 are shown in FIG. 17. Based on this, the server 300 may determine a road network shown by dashed lines, three elevators, and an entry of the parking lot in FIG. 20.

(2) The server 300 obtains floor information of each floor.

When the building includes a plurality of parking lot floors, a floor identifier of each road network is determined.

For example, the server 300 may determine, based on the foregoing method for determining each floor when the elevator zone fingerprint library is generated, and based on radio signal fingerprints on each traveling trajectory and the elevator zone fingerprint library, a floor to which each road network belongs.

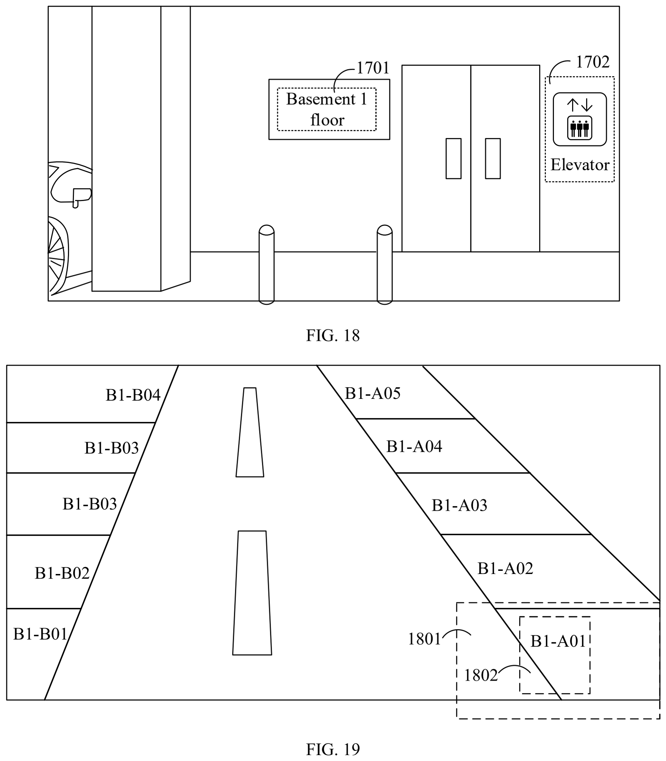

For another example, the vehicle may capture, by using a camera, an image including a floor identifier in the parking lot. When the vehicle passes by the elevator, the vehicle may recognize the elevator and floor information of the elevator or a signboard by using the camera, and send the floor information to the server 300. The server 300 may determine, based on the floor information, floors included in the building and floor identifiers, and determine floor information of the traveling trajectory. For example, FIG. 18 shows a frame of image obtained by the vehicle by using the camera. The vehicle may determine, by using an image recognition algorithm and based on a text in a region 1701 in the image, that the floor is a basement 1 floor. Optionally, the vehicle may further determine, based on an icon and a text in a region 1702 in the image, the position of the elevator.

(3) The server 300 obtains a plurality of navigation-related semantic points of interest (point of interest, POI) in the parking lot. For example, the POI may include a vehicle/pedestrian entry/exit, a staircase, a position of a fire extinguisher, and the like.

The vehicle may determine POI information by using the parking lot image data obtained by the camera. For example, when traveling into the parking lot, the vehicle may recognize the entry/exit of the parking lot by using the parking lot image captured by the camera, and mark a position of the entry/exit of the parking lot on the traveling trajectory of the vehicle. Similarly, when the vehicle passes by another key position, the vehicle may also mark the another key position on the traveling trajectory. The vehicle may send both the traveling trajectory and a mark point on the traveling trajectory to the server 300. The server 300 may determine each key position on the parking lot road network, and determine an absolute longitude and an absolute latitude of each mark point based on the longitudes and the latitudes of the parking lot road network.

(4) The server 300 obtains position information of each parking space in the parking lot.

In a process in which the vehicle travels in the parking lot, the vehicle may recognize, by using the parking lot image captured by the camera, a parking space that the vehicle passes by, and mark a parking space obtained through recognition near the traveling trajectory of the vehicle, and send both the traveling trajectory and a parking space mark to the server 300. The server 300 may add a mark of each parking space to the parking lot road network, and determine an absolute longitude and an absolute latitude of each parking space.

Optionally, the vehicle may further recognize parking space number information of each parking space by using the parking lot image captured by the camera. The vehicle may send the traveling trajectory, the parking space mark, and a parking space number of the parking space to the server 300, and the server 300 may add parking space number information to each parking space mark of the parking lot road network. In this way, when the user parks, the user may directly determine a parking space number for parking based on the parking space number of the parking space, so that the user can intuitively determine a position of each parking space.

For example, FIG. 19 shows a frame of image obtained by the vehicle by using the camera. The vehicle may obtain the parking space in FIG. 19 through recognition by using the image recognition algorithm. For example, a region 1801 includes one parking space. It should be noted that, when another vehicle is parked in the parking space, it may also be determined that a position at which the another vehicle is parked is one parking space. Optionally, the vehicle may further obtain a parking space number of each parking space in FIG. 19 through recognition by using the image recognition algorithm. For example, the vehicle may recognize, through recognition, that a text in a region 1802 in FIG. 19 is "B1-A01", and use the text content as a parking space number of the parking space.

It may be understood that the vehicle may simultaneously perform the foregoing steps in the traveling process, collect various data in the traveling process of the vehicle, and send the collected data to the server 300. When generating the parking lot road network, the server 300 may add the floor information, the elevator identifier, each key position mark, the vacant parking space mark, and the like to the parking lot road network based on the data collected by the vehicle.

For example, the server 300 may generate, by using the foregoing method based on data such as traveling data, a radio signal fingerprint, a POI, and a parking lot image that are collected by each vehicle on a floor 11 of the building 10, a parking lot map shown in FIG. 20. The parking lot map shown in FIG. 20 includes a layout of parking spaces, elevators, roads, and entries/exits on the floor 11 of the building 10. Optionally, the parking lot map generated in FIG. 20 may further display parking space number information of each parking space.

In this way, the server 300 stores parking lot maps that are of buildings and that are constructed through crowdsourcing. The parking lot map can indicate information such as a road network, floor information, an entry/exit of the parking lot, an elevator, and a parking space number in the parking lot. When traveling into a parking lot, another vehicle may determine, based on a traveling trajectory and a radio signal fingerprint that are collected by the vehicle, a parking lot map of a parking lot floor on which the vehicle is located, so that a user can learn a layout of the parking lot and quickly proceed to a destination.

The server 300 may further obtain, through crowdsourcing, position information of vacant parking spaces collected by vehicles, and mark the vacant parking spaces on the parking lot map. Specifically, the terminal (for example, a portable terminal like a central control terminal of a vehicle or a mobile phone) may collect a traveling trajectory of the vehicle, radio signal fingerprints at a plurality of positions on the traveling trajectory, and position information of a vacant parking space near the traveling trajectory when detecting that the vehicle travels into the parking lot.

The terminal may collect inertia data by using a sensor (for example, an inertia measurement unit), and obtain the traveling trajectory by calculating the inertia data by using a specified algorithm (for example, a VDR algorithm). The terminal may collect a wireless signal by using a wireless communication module, extract one or more features of the wireless signal, and use the one or more features as radio signal fingerprints. The terminal may collect parking lot image data by using the camera of the vehicle, obtain, through recognition based on a parking lot image, a vacant parking space in the parking lot image by using an image recognition algorithm, and determine a relative position relationship between the vacant parking space and the traveling trajectory.

The terminal may send the collected data to the server 300, and the server 300 may match the radio signal fingerprint with the wireless signal in the elevator zone fingerprint library, to determine a position corresponding to the radio signal fingerprint. The server 300 may determine a position of the traveling trajectory in the parking lot after determining position information of the plurality of positions on the traveling trajectory based on the radio signal fingerprints. The server 300 may determine a position of each vacant parking space in the parking lot based on the position of the traveling trajectory in the parking lot and the relative position relationship between the vacant parking space and the traveling trajectory, and mark the vacant parking space collected by each vehicle on the parking lot map.

Alternatively, when detecting traveling into a parking lot, the terminal may collect radio signal fingerprints at a plurality of positions and parking lot image data. The terminal may obtain a parking space number of the vacant parking space in the parking lot image by using the image recognition algorithm. The terminal may send the radio signal fingerprints and the parking space number of the vacant parking space to the server 300. The server 300 may match the radio signal fingerprints with the elevator zone fingerprint library, to determine a position of the parking lot in which the terminal is located and a parking lot map corresponding to the parking lot. The server 300 may mark the vacant parking space on the parking lot map based on the parking space number of the vacant parking space. In this way, when the building includes a plurality of parking lot floors, the server 300 may determine, based on the radio signal fingerprints collected by the terminal, a specific floor on which the terminal is located, and send a parking lot map of the floor on which the terminal is located to the terminal. The parking lot map includes a mark of a vacant parking space. The terminal may display the parking lot map including the mark of the vacant parking space, so that the user can perform parking based on the parking lot map.

In this way, the server 300 may update the vacant parking space on the parking lot map by using a vehicle that travels into the parking lot, so as to reduce time for the user in searching for a vacant parking space in the parking lot.

In a possible implementation, when the terminal 100 detects that the vehicle 200 travels into the parking lot of the building 10, the terminal 100 may obtain a traveling trajectory of the vehicle 200 after the vehicle 200 departs from the entry of the parking lot, and collect radio signal fingerprints at a plurality of positions on the traveling trajectory of the vehicle 200. The terminal 100 may determine position information of one or more vacant parking spaces based on the traveling trajectory of the vehicle 200, the radio signal fingerprints at the plurality of positions on the traveling trajectory of the vehicle 200, the elevator zone fingerprint library provided by the server 300, and the parking lot map that includes the mark of the vacant parking space and that is provided by the server 300. The elevator zone fingerprint library includes a correspondence between a radio signal fingerprint and a position within a preset range of an elevator. The terminal 100 may display the parking lot map including the mark of the vacant parking space and vacant parking space prompt information. The vacant parking space prompt information may be used to prompt the user with a position of the vacant parking space. In this way, the terminal 100 may determine the position of the terminal 100 in the parking lot based on the traveling trajectory and the radio signal fingerprints. The server 300 may provide the terminal 100 with a parking lot map of a parking lot floor on which the terminal 100 is located. The terminal 100 may display the obtained parking lot map of the building 10 and the position of the terminal 100, so that the user can determine a position of a vacant parking space on the parking lot map based on the position of the terminal 100 and the parking lot map, and the user can proceed to the vacant parking space based on the parking lot map. This helps the user quickly find a parking place and improve parking efficiency.

It should be noted that, after the vehicle 200 travels into the parking lot, the terminal 100 needs to collect the traveling trajectory of the vehicle 200, and the radio signal fingerprints collected at the plurality of positions on the traveling trajectory. The terminal 100 may send the radio signal fingerprints to the server 300. The server 300 may determine, based on the radio signal fingerprints provided by the terminal 100 and the elevator zone fingerprint library of the building 10, a position corresponding to a radio signal fingerprint within the preset range of the elevator. The terminal 100 may determine the position information of the terminal 100 based on a position that is within the preset range of the elevator and that is on the traveling trajectory and traveling estimation. The position information of the terminal 100 may indicate a specific position of the terminal 100 in the parking lot.

In some examples, the vehicle 200 may send an identifier of the building 10 to the server 300 when traveling into the building 10. After receiving the identifier of the building 10, the server 300 may send the parking lot map of the building 10 to the terminal 100. The parking lot map includes the mark of the vacant parking space. In this way, the terminal 100 may display the parking lot map when traveling into the building 10, to help the user proceed to the vacant parking space.

In some examples, the terminal 100 may recognize, by using the image recognition algorithm, the parking space number of the vacant parking space in the parking lot image captured by the terminal 100. The terminal 100 may determine a position of the terminal 100 in the parking lot based on the parking space number of the vacant parking space.

In some examples, the server 300 may store time for updating the vacant parking space, namely, record time of the vacant parking space, and send the record time of the vacant parking space to the terminal 100. When displaying the parking lot map, the terminal 100 may mark vacant parking spaces in the parking lot by using different marks based on record time of the vacant parking spaces. For example, when the terminal 100 determines that a time difference (for example, 10 minutes) between the record time of the vacant parking space and record time of the terminal 100 is less than a preset time difference, the terminal 100 may mark the vacant parking space by using a first mark. When the terminal 100 determines that the time difference between the record time of the vacant parking space and the record time of the terminal 100 is greater than the preset time difference, the terminal 100 may mark the vacant parking space by using a second mark. The first mark is different from the second mark. It may be understood that the terminal 100 may mark a non-vacant parking space by using a third mark. The third mark is different from the first mark and the second mark. For example, the vacant parking space indicated by the first mark may be a parking space icon filled in a first color (for example, green or black). The vacant parking space indicated by the second mark may be a parking space icon filled in a second color (for example, yellow or gray). The vacant parking space indicated by the third mark may be a parking space icon filled in a third color (for example, white). The first color, the second color, and the third color are different. In this way, the terminal 100 displays the non-vacant parking space and vacant parking spaces with different record time in different display manners, to help the user determine the vacant parking space in the parking lot. Because there is a higher probability that a vacant parking space with earlier record time is occupied by another vehicle, vacant parking spaces with different record time are distinguished by using different marks, so as to help the user preferentially select a vacant parking space with later recording time, thereby avoiding a case in which the vacant parking space is occupied when the user arrives at the vacant parking space.

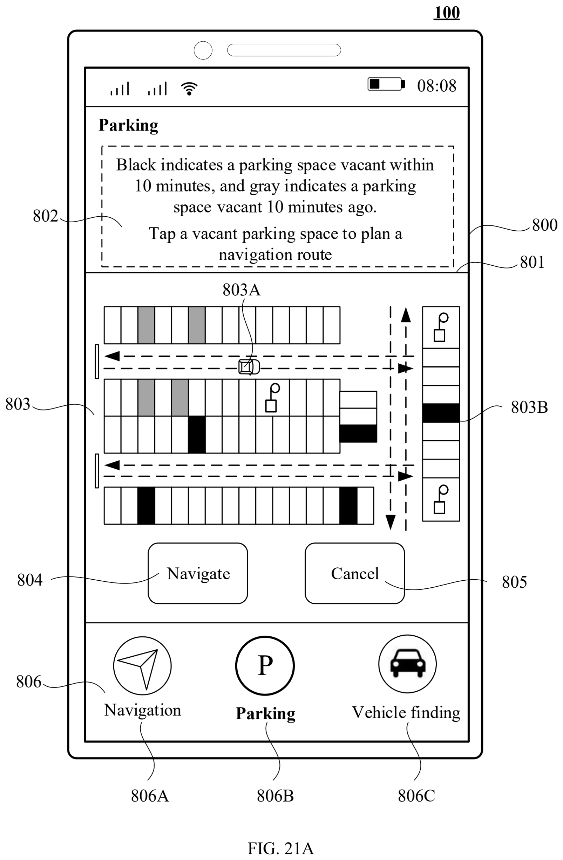

For example, the terminal 100 may display the desktop 701 shown in FIG. 7A. After receiving the input of the user for the parking application icon 702, the terminal 100 may display, in response to the input, an interface 800 shown in FIG. 21A.

It should be noted that before the terminal 100 displays the interface 800 shown in FIG. 21A, the terminal 100 detects that the vehicle 200 travels into the building 10, and the terminal 100 collects a traveling trajectory departing from an entry of the floor 11, and radio signal fingerprints at a plurality of positions on the traveling trajectory. For details, refer to the embodiment shown in FIG. 4. Details are not described herein again. The terminal 100 may obtain a parking lot map of the floor 11 by using the server 300. The parking lot map includes a mark of a vacant parking space and record time of the vacant parking space.

As shown in FIG. 21A, the interface 800 includes a display region 801, and the display region 801 includes a display region 803 and prompt information 802. The display region 801 is used to display display content of a parking function provided by the terminal 100. The parking function is used to help the user park in a vacant parking space in the parking lot. The display region 803 is used to display the parking lot map and the mark of the vacant parking space. The display region 803 includes a vehicle identifier 803A, and the vehicle identifier 803A may indicate a position of the vehicle 200 in the parking lot. In the parking lot map shown in FIG. 21A, the terminal 100 marks, by using black, a vacant parking space whose record time and system time have a time difference less than the preset time difference, namely, a vacant parking space updated within 10 minutes. The terminal 100 marks, by using gray, a vacant parking space whose record time and system time have a time difference greater than the preset time difference, namely, a vacant parking space updated 10 minutes ago. The display region 803 includes one or more vacant parking space identifiers. The one or more vacant parking space identifiers include a vacant parking space identifier 803B, and the vacant parking space identifier 803B is a vacant parking space identifier marked in black.

The display region 801 may further include the prompt information 802. The prompt information 802 may be used to prompt the user with update time of vacant parking spaces in different colors, and prompt the user to navigate to the vacant parking space. For example, the prompt information 802 may be text prompt information: "Black indicates a parking space vacant within 10 minutes, and gray indicates a parking space vacant 10 minutes ago. Tap a vacant parking space to plan a navigation route".

Optionally, the display region 801 may further include a navigation control 804 and a cancel control 805. After receiving an input (for example, tapping) of the user for any vacant parking space identifier, the terminal 100 selects the vacant parking space identifier. The navigation control 804 may be used to trigger the terminal 100 to display a navigation route from the position of the terminal 100 to a position corresponding to the selected vacant parking space identifier. The cancel control 805 may be used to cancel display of the navigation route.

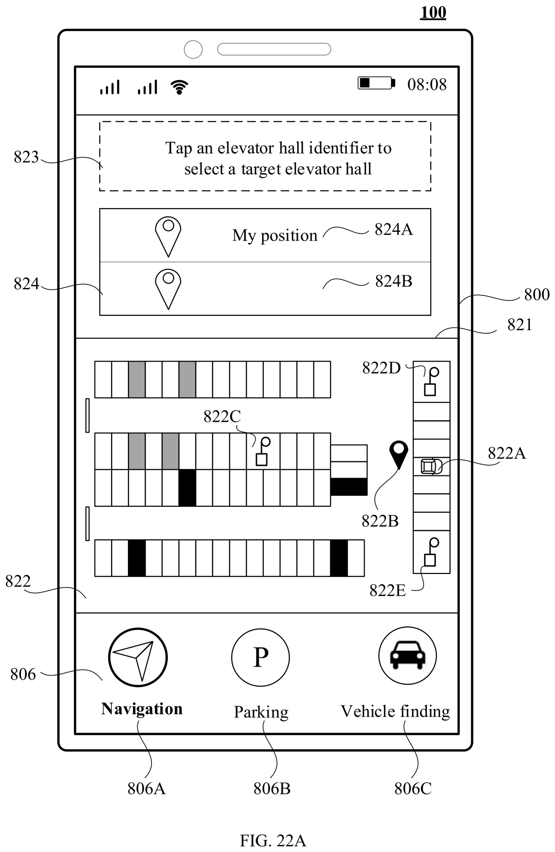

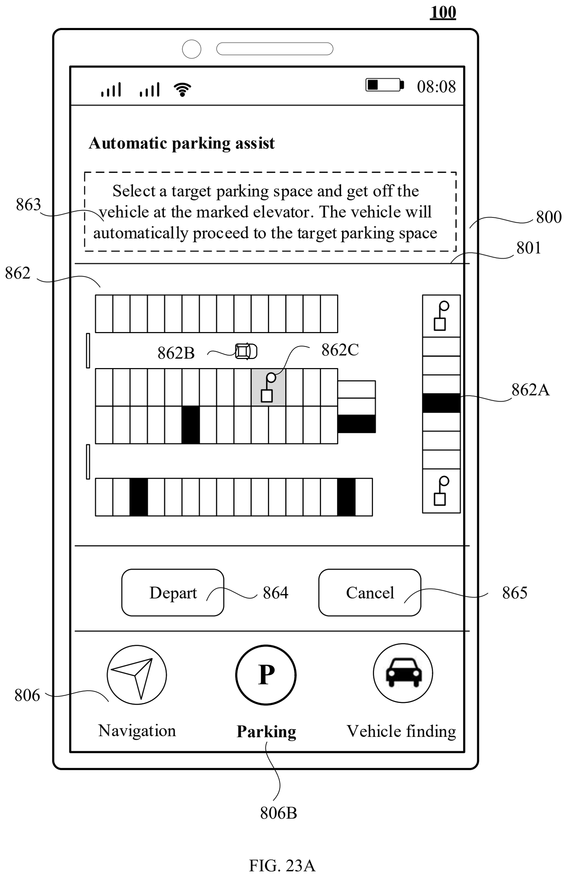

Optionally, the interface 800 may further include a display region 806, and the display region 806 may include one or more function controls. The one or more function controls may be used to trigger the terminal 100 to display a display region including function information corresponding to the function controls. For example, the one or more function controls may include but are not limited to a control 806A, a control 806B, and a control 806C. The control 806A may be used to trigger the terminal 100 to display a display region including navigation function information used to prompt the user to proceed to an elevator position, for example, a display region 821 shown in FIG. 22A. The control 806B may be used to trigger the terminal 100 to display a display region including parking function information used to prompt the user to proceed to a vacant parking space, for example, a display region 801 shown in FIG. 21A. The control 806C may be used to trigger the terminal 100 to display a display region including vehicle finding function information used to search for the vehicle, for example, a display region 801 shown in FIG. 23A. In the interface 800 shown in FIG. 21A, the control 806B is in a selected state, and the terminal 100 displays the display region 801 including content of the parking function.

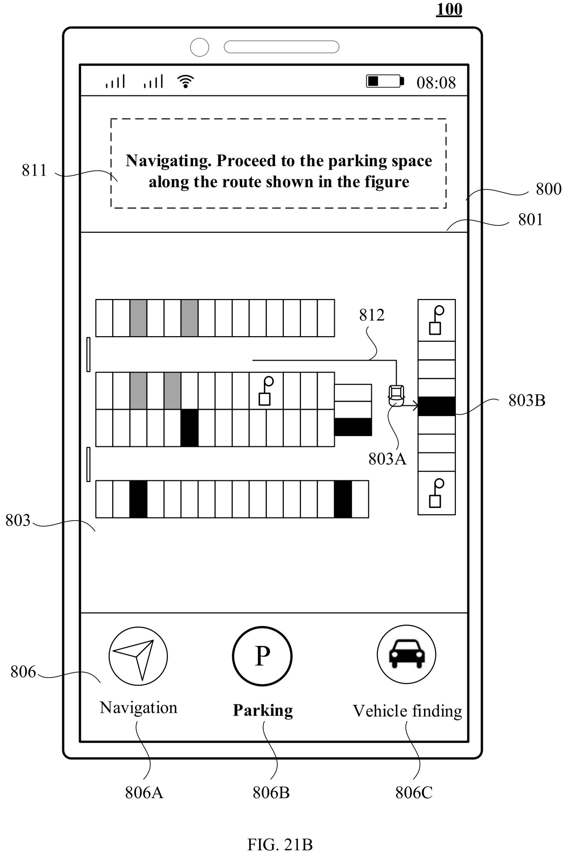

When receiving an input of the user for the vacant parking space identifier 803B in FIG. 21A, the terminal 100 may select the vacant parking space identifier 803B in response to the input. When receiving an input of the user for the navigation control 804, the terminal 100 may display, in response to the input, an interface 800 shown in FIG. 21B.

As shown in FIG. 21B, the display region 803 includes a trajectory 812. A start point of the trajectory 812 is the vehicle identifier 803A shown in FIG. 21A, and an end point of the trajectory 812 is the vacant parking space identifier 803B shown in FIG. 21A. The trajectory 812 may be used to prompt the user to drive the vehicle 200 to a parking space indicated by the vacant parking space identifier 803B. The terminal 100 may determine the position information of the terminal 100 based on the collected traveling trajectory and the radio signal fingerprints at the plurality of positions on the traveling trajectory. The terminal 100 may update a position of the vehicle identifier 803A based on the position information of the terminal 100. Because the position of the vehicle 200 changes, a position of the vehicle identifier 803A shown in FIG. 21B is different from a position of the vehicle identifier 803A shown in FIG. 21A. For some descriptions of the interface 800 shown in FIG. 21B, refer to the embodiment shown in FIG. 21A. Details are not described herein again.

It should be noted that, after receiving an input of selecting the vacant parking space identifier 803B by the user, the terminal 100 may send, to the server 300, a message indicating that a vacant parking space corresponding to the vacant parking space identifier 803B is occupied, and the server 300 may mark the vacant parking space as a non-vacant parking space. In this way, in a process in which the vehicle 200 proceeds to the vacant parking space, a case in which the server 300 sends position information of the vacant parking space to another terminal and a plurality of vehicles proceed to a same vacant parking space at the same time can be avoided.

Optionally, the display region 801 may further include prompt information 811, and the prompt information 811 may be used to prompt the user to proceed to the vacant parking space along the trajectory 812. For example, the prompt information 811 may be text prompt information: "Navigating. Proceed to the parking space along the route shown in the figure".

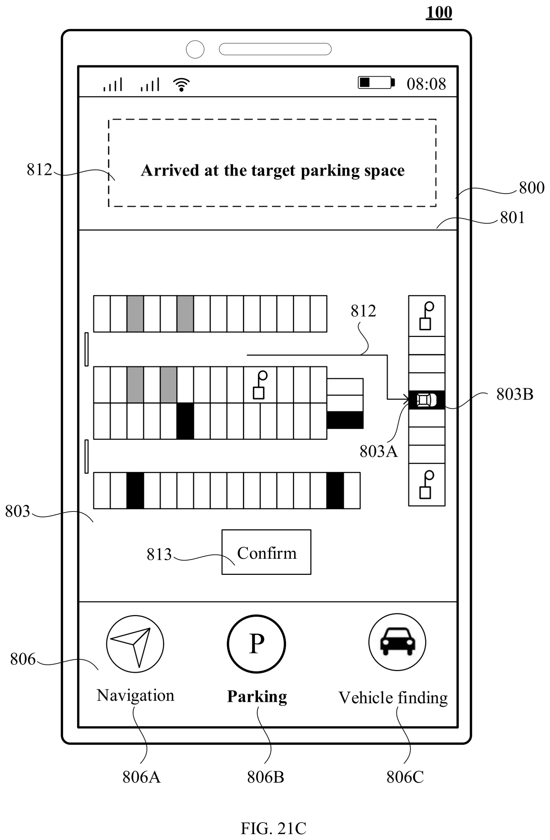

When detecting that a distance between the position of the terminal 100 and a position of the vacant parking space corresponding to the vacant parking space identifier 803B is less than a preset distance (for example, 1 meter), the terminal 100 determines that the vehicle 200 arrives at the vacant parking space corresponding to the vacant parking space identifier 803B. The terminal 100 may display an interface 800 shown in FIG. 21C.

As shown in FIG. 21C, a vehicle identifier 803A in the interface 800 is located on a vacant parking space identifier 803B. The interface 800 may further include prompt information 812, and the prompt information 812 may be used to prompt the user that the user has arrived at the parking position. For example, the prompt information 812 may be text prompt information: "Arrived at the target parking space". Optionally, the interface 800 may further include a confirm control 813. After receiving an input for the confirm control 813, the terminal 100 no longer plans a navigation route after receiving an input of the user for another vacant parking space identifier. In some examples, the confirm control 813 may be used to trigger the terminal 100 to display the display content of the navigation function.

In a possible implementation, after obtaining the parking lot map, the terminal 100 detects that the user gets off the vehicle at the parking position, and the terminal 100 may display the parking lot map and an identifier of the parking position. In this way, the user may proceed from the parking position to another position in the parking lot, for example, the elevator position, based on the parking lot map displayed on the terminal 100.

For example, the terminal 100 displays the interface 800 shown in FIG. 21C. After receiving an input of the user for the control 806A, the terminal 100 may display, in response to the input, an interface 800 shown in FIG. 22A. It should be noted that, this is not limited to the input for the control 806A. The terminal 100 may display the interface 800 shown in FIG. 22A when detecting that the user gets off the vehicle, or the terminal 100 may display the interface 800 shown in FIG. 22A after receiving an input for the confirm control 813 shown in FIG. 21C. This is not limited in embodiments of this application.

As shown in FIG. 22A, the interface 800 includes a display region 821. The display region 821 is used to display display content of the navigation function of the terminal 100. The display region 821 includes a display region 822. The parking lot map of the floor 11 that is of the building 10 and on which the terminal 100 is located is displayed in the display region 822. The display region 822 includes a vehicle identifier 822A, and the vehicle identifier 822A may indicate the parking position. The display region 822 further includes one or more elevator identifiers. The one or more elevator identifiers may include but are not limited to an elevator identifier 822C, an elevator identifier 822D, and an elevator identifier 822E. The one or more elevator identifiers may indicate positions of elevators in the parking lot. In this way, the user may determine, based on relative position relationships between the vehicle identifier 822A and the one or more elevator identifiers, how to proceed to the elevator position from the parking position.

Optionally, the display region 822 may further include a user identifier 822B. The user identifier 822B may indicate a position of the user carrying the terminal 100. After detecting that the user gets off the vehicle, the terminal 100 may collect a moving trajectory of the terminal 100, and obtain, through inference, the position of the terminal 100 based on the parking position and the moving trajectory. In this way, the user may determine a specific position of the user in the parking lot based on the user identifier 822B. Because some users may take a wrong intersection when moving forward based on the map, the user identifier 822B may help the user turn at a correct intersection.

Optionally, the display region 821 may further include an address bar 824. The address bar 824 includes a start address 824A and a destination address 824B. Herein, the start address 824A may be displayed with text information: "My position", indicating that the start position is the position of the user. Because the terminal 100 has not received an input of selecting the destination address by the user, the destination address 824B is not displayed with text information. After receiving an input of the user for an identifier (for example, the elevator identifier 822C) in the display region 822, the terminal 100 may use a position corresponding to the identifier as the destination address, and display a name (for example, the elevator 31) of the identifier in the destination address 824B. Optionally, the display region 821 may further include prompt information 823, and the prompt information 823 may be used to prompt the user to determine the destination address 824B. For example, the prompt information 823 may be text prompt information: "Tap an elevator hall identifier to select a target elevator hall".

Optionally, the interface 800 shown in FIG. 21A may further include a display region 806. For a description of the display region 806, refer to the embodiment of FIG. 21A. Details are not described herein again. Herein, the control 806A in the display region 806 is in a selected state.

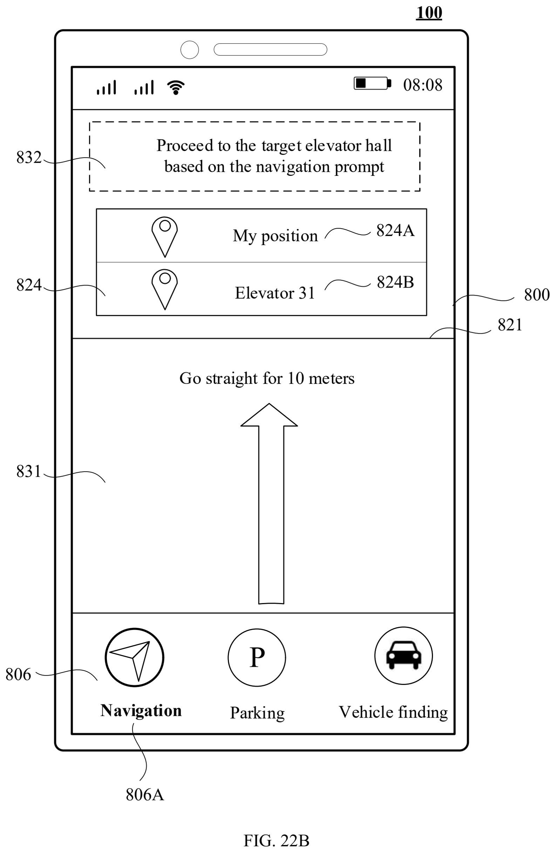

After receiving an input of the user for the elevator identifier 822C, the terminal 100 may display, in response to the input, an interface 800 shown in FIG. 22B. As shown in FIG. 22B, the display region 821 includes a display region 831, and the display region 831 is used to display navigation information from the start address to the destination address. The terminal 100 may determine the navigation information based on a real-time position of the terminal 100 and a route from the start address to the destination address.

For example, the terminal 100 detects that the position of the terminal 100 is a position corresponding to the user identifier 822B shown in FIG. 22A, and the terminal 100 may determine, based on the position of the terminal 100 and a route from the start address, namely, the parking position, to the destination address, namely, the elevator 31, that the user needs to first move forward to a first intersection, turn left at the first intersection, and then move forward for a distance after turning left to arrive at the elevator 31. Therefore, the terminal 100 may display the navigation information shown in the display region 831 in FIG. 22B. For example, the navigation information may include text prompt information: "Go straight for 10 meters" and image prompt information. The image prompt information may be a straight arrow.

Optionally, the display region 821 shown in FIG. 22B may further include an address bar 824, and text information "Elevator 31" is displayed in the destination address 824B. For a description of the address bar 824, refer to the embodiment shown in FIG. 22A. Details are not described herein again.

Optionally, the display region 821 shown in FIG. 22B may further include prompt information 832, and the prompt information 832 may be used to prompt the user to proceed to the destination address based on the navigation information in the display region 831. For example, the prompt information 832 may be text prompt information: "Proceed to the target elevator hall based on the navigation prompt".

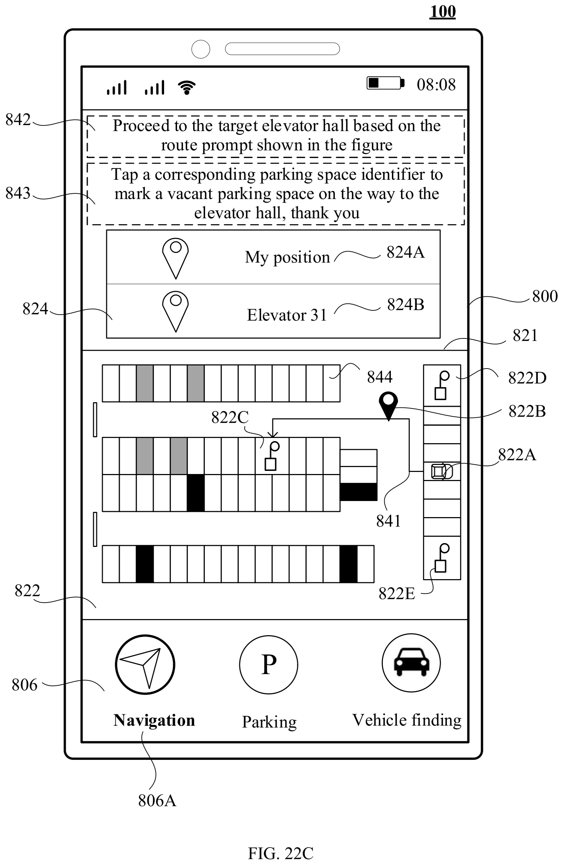

In some other examples, after receiving an input of the user for the elevator identifier 822C shown in FIG. 22A, the terminal 100 may display, in response to the input, an interface 800 shown in FIG. 22C. As shown in FIG. 22C, the display region 822 includes a trajectory 841, and the trajectory 841 is used to guide the user to proceed to the elevator 31 from the parking position. Optionally, the display region 821 may further include an address bar 824, and the text information "Elevator 31" is displayed in the destination address 824B. Optionally, the display region 821 may further include prompt information 842, used to prompt the user to proceed to the destination address based on the trajectory 841. For example, the prompt information 842 may be text prompt information: "Proceed to the target elevator hall based on the route prompt shown in the figure". Optionally, the interface 800 may further include a display region 806, and the control 806A is in a selected state. Optionally, the terminal 100 may display, on the top of the interface 800 shown in FIG. 22C, the navigation information in the display region 831 in FIG. 22B. For some descriptions of the interface 800, refer to the embodiment shown in FIG. 22A. Details are not described herein again.

In some examples, when the terminal 100 proceeds to the elevator from the parking position, the terminal 100 may display the parking lot map. In a process in which the terminal 100 proceeds from the parking position to the elevator, the terminal 100 may receive an input of the user for the parking space identifier in the parking lot map, and mark a vacant parking space in the parking lot on the parking lot map. The terminal 100 may send collected position information (for example, a parking space number of the vacant parking space, and a longitude and a latitude of the vacant parking space) of the vacant parking space to the server 300. In this way, the server 300 may update the vacant parking space in the parking lot with help of the user.

For example, as shown in FIG. 22C, the interface 800 may further include prompt information 843, and the prompt information 843 may be used to prompt the user to mark the vacant parking space. For example, the prompt information 843 may be text prompt information: "Tap a corresponding parking space identifier to mark a vacant parking space on the way to the elevator hall, thank you".

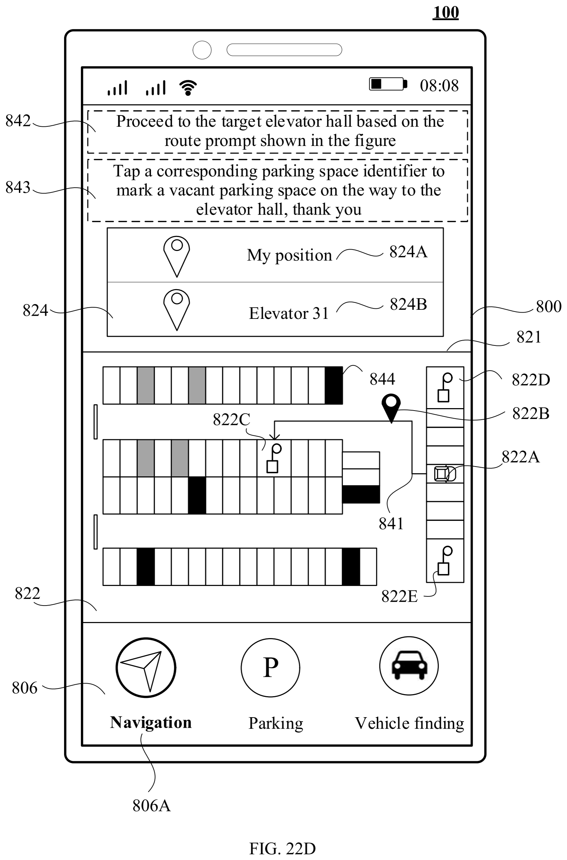

The display region 822 includes a parking space identifier 844. Herein, when walking to a position corresponding to the user identifier 822B shown in FIG. 22C, the user determines that a parking space corresponding to the parking space identifier 844 is a vacant parking space. The user can mark the parking space as a vacant parking space. Specifically, after receiving an input of the user for the parking space identifier 844, the terminal 100 may display, in response to the input, a parking space identifier 844 shown in FIG. 22D. As shown in FIG. 22D, the parking space identifier 844 is marked in black, indicating that a parking space corresponding to the parking space identifier 844 is a vacant parking space updated within 10 minutes.

It may be understood that, after receiving the input for the parking space identifier again, the terminal 100 may cancel marking the parking space as the vacant parking space, and notify the server 300 that the parking space is a non-vacant parking space. In this way, after the user falsely marks a vacant parking space, the user may change the parking space to a non-vacant parking space.

In some examples, the display region 806 shown in FIG. 22C may further include a control 806D (not shown in the figure). The control 806D is used to trigger the terminal 100 to display display content of a check-in function. The display content may include the parking lot map of the parking lot floor on which the terminal 100 is located and the parking space identifier in the parking lot. The check-in function may be used to mark the vacant parking space in the parking lot. In this way, the terminal 100 may provide the user with the check-in function for updating the vacant parking space in the parking lot. The terminal 100 receives a user input, updates the vacant parking space in the parking lot, and sends position information of an updated vacant parking space to the server 300. In a process of walking in the parking lot, the user may encounter some vacant parking spaces, and the user may clearly determine positions of the vacant parking spaces. The server 300 may obtain more vacant parking spaces based on this, to help a driver that subsequently travels into the parking lot perform parking. In some scenarios, a staff member in the parking lot may also use the check-in function to update the vacant parking space in the parking lot, to help the driver perform parking.

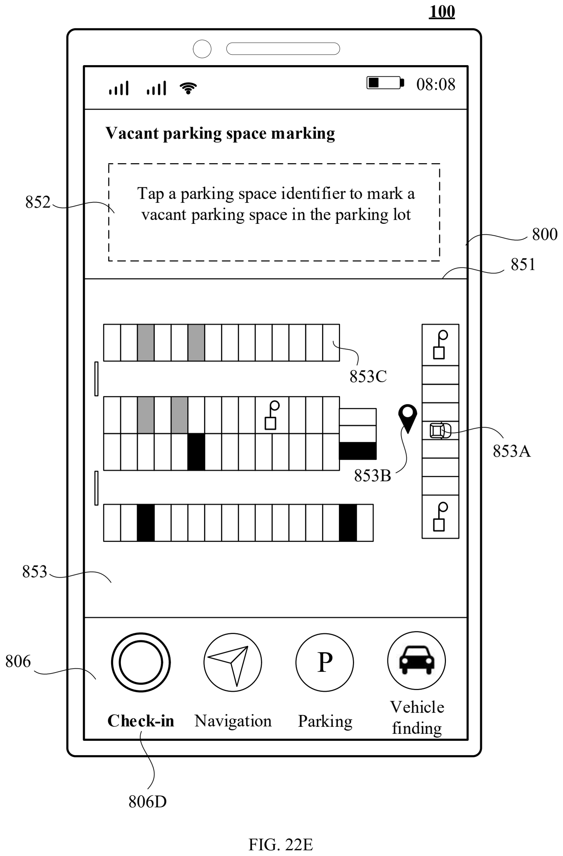

For example, after receiving an input of the user for the control 806D, the terminal 100 may display, in response to the input, an interface 800 shown in FIG. 22E. The control 806D in the display region 806 shown in FIG. 22E is in a selected state.

As shown in FIG. 22E, the display region 851 may be used to display parking space identifiers of the parking lot floor on which the terminal 100 is located. The display region 851 may include a display region 853, and the display region 853 includes the parking space identifiers on the parking lot map. The parking space identifier may be used to trigger the terminal 100 to mark a parking space corresponding to the parking space identifier as a vacant parking space, and may further trigger the terminal 100 to send position information of the vacant parking space to the server 300. For example, the parking space identifier may include a parking space identifier 853C, and the parking space identifier 853C may be used to trigger the terminal 100 to mark the parking space identifier 853C (for example, set the parking space identifier 853C to black), and notify the server 300 that a parking space corresponding to the parking space identifier 853C is a vacant parking space.

The display region 853 may further include a user identifier 853B. The user identifier 853B may indicate the position of the user, so that the user determines a position of a surrounding vacant parking space based on the position of the user.

The display region 851 may further include prompt information 852, used to prompt the user to mark the vacant parking space. For example, the prompt information 852 may be text prompt information: "Tap a parking space identifier to mark a vacant parking space in the parking lot".

Optionally, the display region 853 may further include a vehicle identifier 853A, and the vehicle identifier 853A may also help the user determine the position in the parking lot.

Optionally, the terminal 100 may display only, on the parking lot map, some vacant parking spaces in a preset field of view range. The preset field of view range may be a circular range in which the terminal 100 is used as a center and a preset length (for example, 5 meters) is used as a radius. Alternatively, the terminal 100 may receive a zoom operation of the user on the parking lot map, to zoom in/out the parking lot map. The terminal 100 may further receive a drag operation of the user on a zoomed-in parking lot map, and display some content of the parking lot map. In this way, when an area of the parking lot is large, the terminal 100 displays a map of the entire parking lot. As a result, sizes of parking space identifiers are small, and it is difficult for the user to select a correct parking space identifier. The terminal 100 displays only some vacant parking spaces in the preset field of view range, so that the user can mark the vacant parking spaces.

Optionally, the terminal 100 may display a parking space number of a parking space on a parking space identifier. In this way, the parking space can be determined based on the parking space number, to avoid a case in which an incorrect adjacent parking space is marked.

In a possible implementation, the terminal 100 may display parking prompt information after receiving the parking lot map and the vacant parking space identifier that are sent by the server 300. The parking prompt information may be used to prompt the user to get off the vehicle at the elevator. After detecting that the user gets off the vehicle, the terminal 100 may notify the vehicle 200 to proceed to the vacant parking space based on the parking lot map. In this way, when being in a specified range of an elevator (for example, a range of an elevator zone fingerprint library), the terminal 100 may prompt the user to get off the vehicle, so that the user can take the elevator after getting off the vehicle. In addition, the terminal 100 may control the vehicle 200 to automatically proceed to the vacant parking space and perform a parking operation, and the user does not need to drive the vehicle to the vacant parking space, and then walk from the parking position to the elevator after the parking, thereby greatly reducing parking time.

The server 300 may determine, based on one or more types of parking information of the vacant parking space, whether the vehicle 200 can automatically proceed to the vacant parking space. Specifically, for a description of determining, by the server 300, whether the vehicle 200 can perform an automatic parking assist operation, refer to the embodiment shown in FIG. 9A. Details are not described herein again. After determining one or more vacant parking spaces for which the automatic parking assist operation can be performed by the vehicle 200, the server 300 may send the one or more vacant parking spaces to the terminal 100. The terminal 100 may display identifiers corresponding to the one or more vacant parking spaces, and the one or more vacant parking spaces include a specified vacant parking space. After receiving an input of the user for an identifier corresponding to the specified vacant parking space, the terminal 100 may notify the vehicle 200 to proceed to the specified vacant parking space based on the parking lot map after detecting that the user gets off the vehicle.

For example, the terminal 100 displays the desktop 701 shown in FIG. 7A. After receiving the input for the parking application icon 702, the terminal 100 may display, in response to the input, an interface 800 shown in FIG. 23A. It should be noted that before displaying the interface 800 shown in FIG. 23A, the terminal 100 has obtained the parking lot map from the server 300, and a vacant parking space that is in the parking lot and for which the automatic parking assist operation can be performed.

As shown in FIG. 23A, the interface 800 includes a display region 801. The display region 801 is used to display the display content of the parking function of the terminal 100. The display region 801 includes a display region 862, and the display region 862 is used to display the parking lot map. The display region 862 includes one or more vacant parking space identifiers. The vehicle 200 may autonomously drive to vacant parking spaces corresponding to the one or more vacant parking space identifiers. The one or more vacant parking space identifiers include a vacant parking space identifier 862A. The display region 862 further includes a vehicle identifier 862B, and the vehicle identifier 862B indicates the position of the vehicle 200. The display region 862 further includes one or more elevator identifiers, and the one or more elevator identifiers include an elevator identifier 862C.

The display region 801 further includes prompt information 863, and the prompt information 863 may be used to prompt the user to select a target parking space, and get off the vehicle at a position corresponding to the elevator identifier. The vehicle 200 automatically proceeds to the target parking space. For example, the prompt information 863 may be text prompt information: "Select a target parking space and get off the vehicle at the marked elevator. The vehicle will automatically proceed to the target parking space".

Optionally, the display region 801 may further include a depart control 864 and a cancel control 865.

The depart control 864 may be used to trigger the terminal 100 to notify the vehicle 200 to autonomously drive to the target parking space. The cancel control 865 may be used to trigger the terminal 100 to notify the vehicle 200 to cancel proceeding to the target parking space. In this way, after getting off the vehicle, the user may tap the depart control 864 to control the vehicle 200 to proceed to the target parking space, thereby avoiding a case in which the user is carried to the target parking space. After getting off the vehicle, the user may make the vehicle 200 stop moving by using the cancel control 865. After the vehicle 200 stops moving, the user may select another vacant parking space identifier, so that the vehicle 200 proceeds to another vacant parking space. This is convenient for the user to change the target parking space.

Optionally, the interface 800 shown in FIG. 23A may further include a display region 806, and a control 806B is in a selected state.

In some other examples, the terminal 100 displays the interface 800 shown in FIG. 21A. After receiving a vacant parking space identifier (for example, the vacant parking space identifier 803B) corresponding to a vacant parking space selected by the user for performing the automatic parking assist operation, the terminal 100 may display the parking prompt information and the automatic parking assist control in the interface 800 shown in FIG. 21A. The parking prompt information is used to prompt the user to get off the vehicle at the elevator 31 near the vehicle identifier 803A. The automatic parking assist control may be used to trigger the terminal 100 to notify the vehicle 200 to autonomously drive to the vacant parking space corresponding to the vacant parking space identifier 803B.

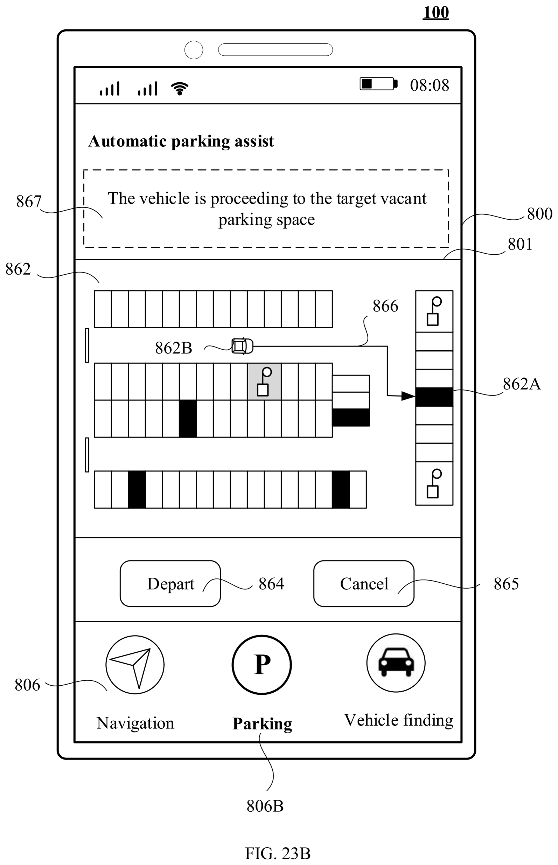

After receiving an input of the user for the vacant parking space identifier 862A shown in FIG. 23A, the terminal 100 may receive an input of the user for the depart control 864. The terminal 100 may display, in response to the input for the depart control 864, an interface 800 shown in FIG. 23B.

As shown in FIG. 23B, the display region 862 includes a trajectory 866, and the trajectory 866 points from a position of the vehicle 200 to a position of the vacant parking space corresponding to the vacant parking space identifier 862A. The trajectory 866 may indicate the vehicle 200 to proceed to the vacant parking space corresponding to 862A. Herein, the vehicle 200 may determine the position of the vehicle 200 based on a radio signal fingerprint collected within a preset range of the elevator 31 and a traveling trajectory of the vehicle 200 departing from the elevator 31. The display region 801 may further include prompt information 867, and the prompt information 867 may be used to prompt the user that the vehicle 200 is proceeding to the target parking space. For example, the prompt information 867 may be text prompt information: "The vehicle is proceeding to the target vacant parking space". Specifically, for some descriptions of the interface 800, refer to the embodiment shown in FIG. 23A. Details are not described herein again.

In some other examples, after receiving the input of the user for the vacant parking space identifier 862A shown in FIG. 23A, the terminal 100 may detect that the user gets off the vehicle, and display the interface 800 shown in FIG. 23B.

In some other examples, the terminal 100 may not display the interface 800 shown in FIG. 23B, and only notify the vehicle 200 to proceed to the target parking space.

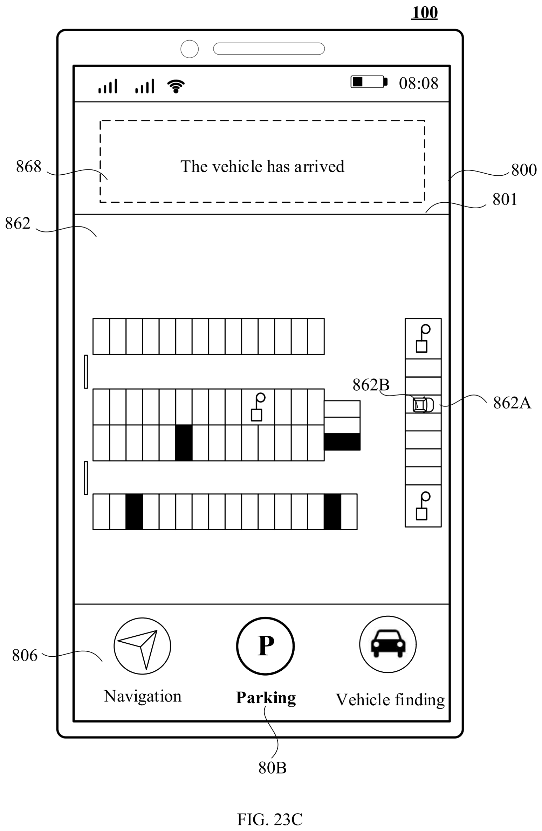

Then, the terminal 100 detects that a distance between the position of the vehicle 200 and the position corresponding to the vacant parking space identifier 862A is less than a preset distance difference (for example, 1 meter), and the terminal 100 may display an interface 800 shown in FIG. 23C.

As shown in FIG. 23C, the vehicle identifier 862B overlaps the vacant parking space identifier 862A in the display region 862. The display region 801 may further include prompt information 868, used to prompt that the vehicle 200 has been parked in the target parking space. For example, the prompt information 868 may be text prompt information: "The vehicle has arrived". Specifically, for some descriptions of the interface 800, refer to the embodiment shown in FIG. 23A. Details are not described herein again.

In a possible implementation, after receiving an input of the user for vehicle finding (or searching for the vehicle), the terminal 100 may display the parking lot map and the parking position in response to the input. In this way, after the user returns to the floor on which the vehicle is parked, the user may find, based on the content displayed on the terminal 100, the position at which the vehicle is parked. Even if the user forgets the parking position, the user does not need to search for the parking position of the vehicle in the parking lot, thereby saving time for the user in vehicle finding.

In some examples, when displaying the parking lot map and the parking position, the terminal 100 may further display a trajectory from the position of the terminal 100 to the parking position. In this way, the user may proceed to the parking position along the trajectory. Optionally, the terminal 100 may further display prompt information used to prompt the user to proceed to the parking position along the trajectory.

After the terminal 100 receives the input of the user for vehicle finding, for a description of a display interface of the terminal 100, refer to the embodiments shown in FIG. 22A to FIG. 22C. Details are not described herein again. A difference between an interface displayed after the terminal 100 receives the input for vehicle finding and the interfaces shown in FIG. 22A to FIG. 22C lies in that destination positions are different. The destination position in the interfaces shown in FIG. 22A to FIG. 22C is the elevator position, and the destination position of the terminal 100 herein is the parking position.

In a possible implementation, the terminal 100 may display the parking lot map and the parking position. After receiving the input of the user for vehicle finding, the terminal 100 may notify the vehicle 200 to proceed to the position of the terminal 100 from the parking position based on the parking lot map. In this way, when the user proceeds to the floor on which the vehicle is parked, the user may summon the vehicle 200 by using the terminal 100, so that the user does not need to walk to the parking position, thereby saving time in vehicle finding.

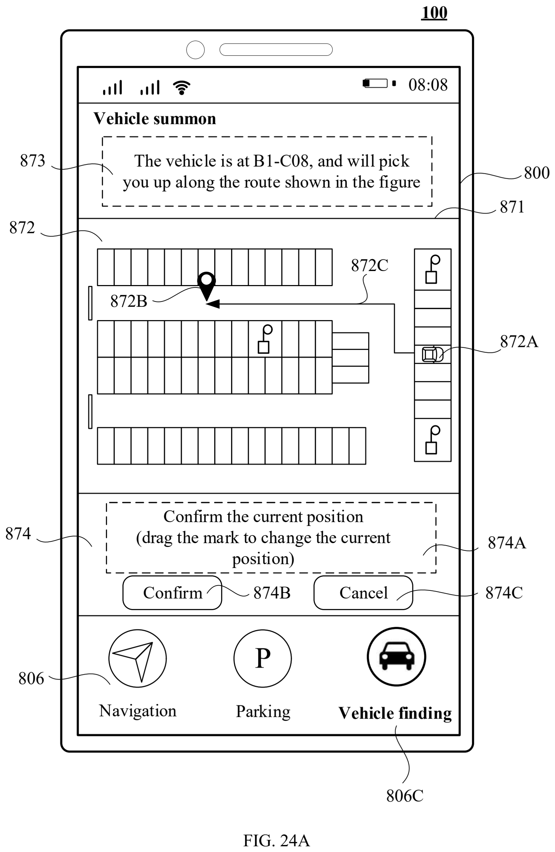

For example, the terminal 100 stores the parking lot map and the position information of the parking position. The terminal 100 displays the desktop 701 shown in FIG. 7A. After receiving an input of the user for the parking application icon 702, the terminal 100 may display an interface 800 shown in FIG. 24A.

As shown in FIG. 24A, the interface 800 includes a display region 871, and the display region 871 is used to display the display content of the vehicle finding function. The display region 871 includes a display region 872, and the parking lot map is displayed in the display region 872. The display region 872 further includes a vehicle identifier 872A, and the vehicle identifier 872A indicates the position of the vehicle 200. The display region 872 further includes a positioning identifier 872B, and the positioning identifier 872B indicates a destination address to which the vehicle 200 proceeds. In some examples, a position corresponding to the positioning identifier 872B is the position of the terminal 100.

Optionally, the display region 872 may further include a trajectory 872C, and the trajectory 872C is a route obtained by the terminal 100 through planning based on the parking position, the destination position, and the road network of the parking lot. The vehicle 200 may proceed to the destination position based on the route indicated by the trajectory 872C.

Optionally, the display region 871 may further include prompt information 873, used to prompt the user to proceed to the destination position based on the trajectory 872C. For example, the prompt information 873 may be text prompt information: "The vehicle is at B1-C08, and will pick you up along the route shown in the figure".

Optionally, the display region 871 may further include a prompt bar 874. The prompt bar 874 includes prompt information 874A, a confirm control 874B, and a cancel control 874C. The prompt information 874A may be used to prompt the user to drag the positioning identifier 872B to change the destination position. The confirm control 874B may be used to trigger the terminal 100 to notify the vehicle 200 to proceed to a target position corresponding to the positioning identifier 872B. The cancel control 874C may be used to trigger the terminal 100 to notify the vehicle 200 to pause moving. Then, the terminal 100 may receive an input of dragging the positioning identifier 872B by the user, and change the target position.

Optionally, the display region 871 may further include a display region 806. The control 806C is in a selected state. For a description of the display region 806, refer to the embodiment shown in FIG. 21A. Details are not described herein again.

Optionally, after receiving the input of the user for the parking application icon 702 shown in FIG. 7A, the terminal 100 may display, in response to the input, the interface 711 shown in FIG. 13A. After receiving the input for the control 743 shown in FIG. 13A, the terminal 100 may display, in response to the input, an interface 800 shown in FIG. 24A.

In some other examples, the terminal 100 displays the interface 800 shown in FIG. 21C, or the interface 800 shown in FIG. 22A, or the interface 800 shown in FIG. 22B, or the interface 800 shown in FIG. 22C, or the interface 800 shown in FIG. 22C. After receiving the input for the control 806C, the terminal 100 may display, in response to the input, the interface 800 shown in FIG. 24A.

In some other examples, the terminal 100 displays the interface 800 shown in FIG. 21C, or the interface 800 shown in FIG. 22A, or the interface 800 shown in FIG. 22B, or the interface 800 shown in FIG. 22C, or the interface 800 shown in FIG. 22C. After receiving the input for the control 806C, the terminal 100 may display, in response to the input, the interface 711 shown in FIG. 13A. After receiving the input for the control 743 shown in FIG. 13A, the terminal 100 may display, in response to the input, the interface 800 shown in FIG. 24A.

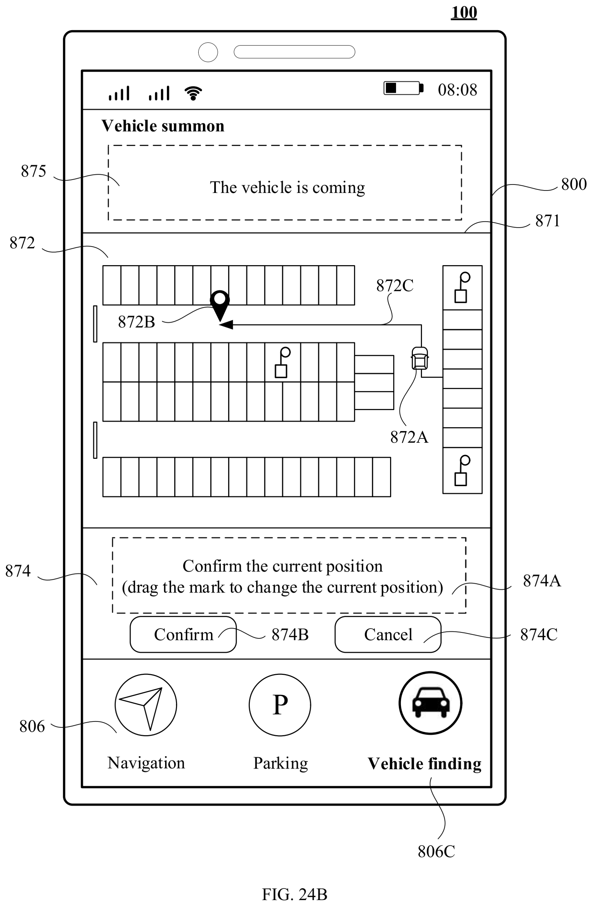

After receiving the input of the user for the confirm control 874B shown in FIG. 24A, the terminal 100 may display, in response to the input, prompt information 875 shown in FIG. 24B. The prompt information 875 may be used to prompt the user that the vehicle 200 is proceeding to the destination position. For example, the prompt information 875 may be text prompt information: "The vehicle is coming". A position of the vehicle identifier 872A shown in FIG. 24B is different from a position of the vehicle identifier 872A shown in FIG. 24A.

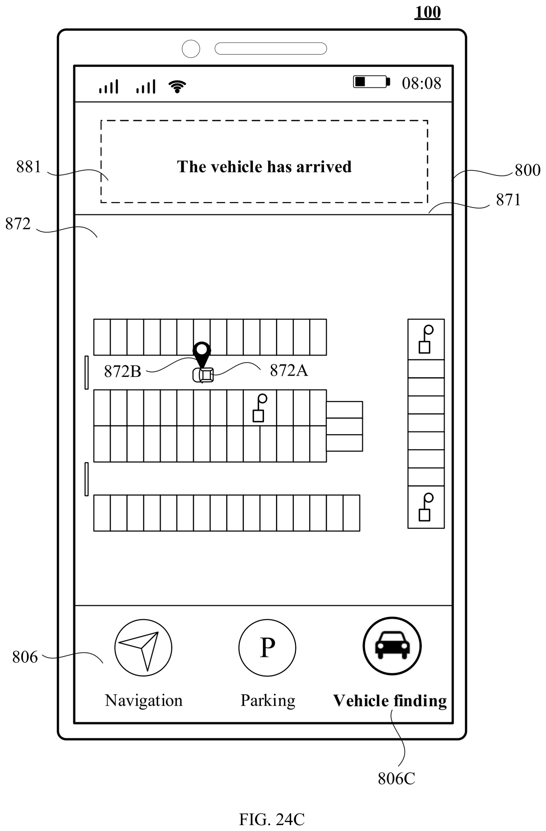

When detecting that the distance between the position of the vehicle 200 and the destination position is less than the preset distance difference (for example, 1 meter), the terminal 100 may determine that the vehicle 200 arrives at the destination position, and the terminal 100 may display an interface 800 shown in FIG. 24C.

As shown in FIG. 24C, the vehicle identifier 872A and the positioning identifier 872B are located at a same position. The display region 871 may further include prompt information 881, and the prompt information 881 may be used to prompt the user that the vehicle 200 arrives at the destination position. For example, the prompt information 881 may be text prompt information: "The vehicle has arrived".

It should be noted that, in the foregoing embodiments, the terminal 100 is used as an example to describe the positioning method provided in embodiments of this application. This is not limited to the terminal 100. The vehicle 200 may also perform some of the foregoing steps, for example, collecting the traveling trajectory and the radio signal fingerprints, obtaining the parking lot map from the server 300, and displaying the parking lot map including the mark of the vacant parking space. The vehicle 200 may provide the parking function for the user. After the vehicle 200 detects that the user gets off the vehicle, the vehicle 200 may send the parking lot map including the parking position to the terminal 100. The terminal 100 may provide the navigation function and the vehicle finding function for the user based on the received parking lot map including the parking position.

In some examples, the user tends to park the vehicle near the elevator, or tends to park the vehicle at a position not near the entry. Therefore, before arriving at the preset range of the elevator, the vehicle 200 may have collected position information of one or more vacant parking spaces. When the server 300 determines, based on the traveling trajectory of the vehicle 200 and the radio signal fingerprints at the plurality of positions on the traveling trajectory, that all parking spaces other than the vacant parking spaces collected by the vehicle 200 are non-vacant parking spaces, the server 300 may send identifiers of the vacant parking spaces or position information of the vacant parking spaces collected by the vehicle 200 to the terminal 100 or the vehicle 200. After receiving the identifiers or the position information of the vacant parking spaces sent by the server 300, the terminal 100 or the vehicle 200 may display prompt information used to prompt the user to search for a vacant parking space or return to a vacant parking space that the user previously passed by.

It should be noted that, in the process in which the vehicle 200 travels in the parking lot, the traveling trajectory of the vehicle 200 and the position information of the vacant parking spaces may be collected, to update vacant parking spaces stored in the server 300. In the process in which the vehicle 200 travels away from the parking lot from the parking position, a traveling trajectory of the vehicle 200 and position information of vacant parking spaces near the traveling trajectory may be collected. The vacant parking spaces collected by the vehicle 200 includes a parking space in which the vehicle 200 is parked. The server 300 may determine, based on the collected traveling trajectory and the position information of the vacant parking spaces, whether the stored vacant parking space is occupied by another vehicle. Based on this, the server 300 may cancel storage of position information of an occupied vacant parking space, and add position information of a new vacant parking space. In this way, the server 300 may collect the position information of the vacant parking spaces in the parking lot based on all vehicles leaving the parking lot, to help a vehicle that subsequently enters the parking lot quickly find a vacant parking space.

In some examples, the terminal 100 may display a parking widget. The parking widget may display function information of the parking function, the navigation function, and the vehicle finding function. The function information may include but is not limited to the prompt information prompting the user to proceed to the vacant parking space, the prompt information prompting the user to proceed to the elevator, and/or the prompt information prompting the user to proceed to the parking position. The terminal 100 may display an interface of the parking application in full screen (for example, the interfaces 711 shown in FIG. 7A to FIG. 7D, FIG. 9A to FIG. 9C, FIG. 13A to FIG. 13C, FIG. 15A to FIG. 15C, FIG. 21A to FIG. 21C, FIG. 22A to FIG. 22E, FIG. 23A to FIG. 23C, and FIG. 24A to FIG. 24C) in response to an input (for example, tapping) of the user for the parking widget. A vehicle finding widget may be displayed on the desktop (for example, the desktop 701 shown in FIG. 7A) or another specified shortcut interface (for example, a leftmost screen or a service center), and the vehicle finding widget may be added or deleted by the user. In some examples, a card may be referred to as a widget (widget). The vehicle finding widget may be a widget provided by the parking application, or a widget of a parking service provided by the terminal 100. The parking application may be an application corresponding to the parking application icon 702, or may be a cloud application obtained by the terminal 100 by using the server 300. The application corresponding to the parking application icon 702 is an application installed on the terminal 100. The cloud application is an application that is not downloaded and installed on the terminal 100.

The following describes the terminal 100 provided in embodiments of this application.

The terminal 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device (for example, a sports band, a smart watch, or a smart eye), a vehicle-mounted device, a router, a smart home device, and/or a smart city device. A specific type of the electronic device is not specially limited in embodiments of this application.

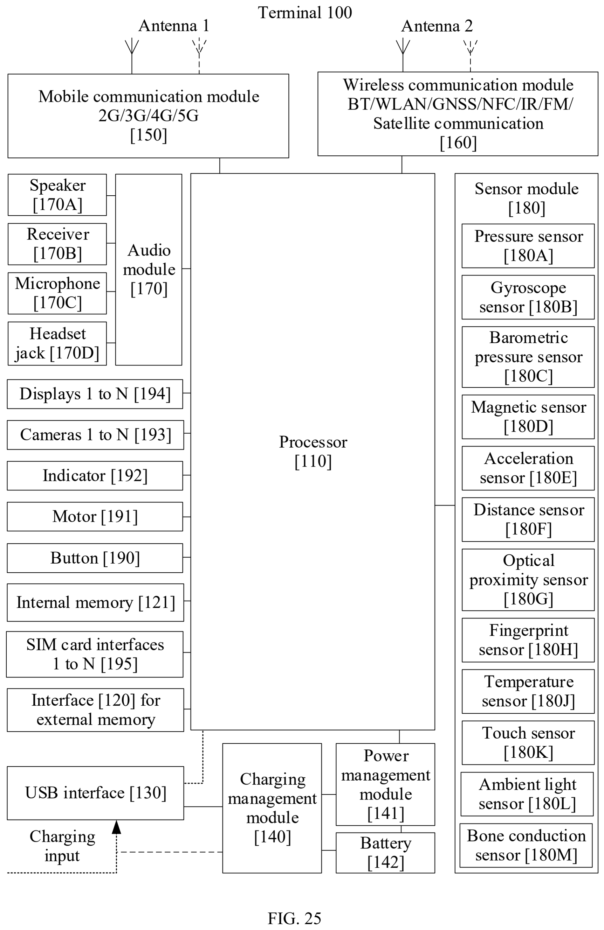

FIG. 25 is a diagram of a hardware structure according to an embodiment of this application.

The following specifically describes embodiments by using the terminal 100 as an example. It should be understood that the terminal 100 shown in FIG. 25 is merely an example, and the terminal 100 may have more or fewer components than those shown in FIG. 25, two or more components may be combined, or there may be a different component configuration. Various components shown in FIG. 25 may be implemented by hardware including one or more signal processing and/or application-specific integrated circuits, software, or a combination of hardware and software.

The terminal 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that an illustrated structure in this embodiment of the present invention does not constitute a specific limitation on the terminal 100. In some other embodiments of this application, the terminal 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment of the present invention is merely an example for description, and does not constitute a limitation on the structure of the terminal 100. In some other embodiments of this application, the terminal 100 may alternatively use an interface connection manner different from that in the foregoing embodiment, or may use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the terminal 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the terminal 100 The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution that is applied to the terminal 100 and that includes wireless communication such as a wireless local area network (wireless local area network, WLAN) (for example, a Wi-Fi network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the terminal 100, the antenna 1 and the mobile communication module 150 are coupled, and the antenna 2 and the wireless communication module 160 are coupled, so that the terminal 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system GPS, a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

In embodiments of this application, the wireless communication module 160 of the terminal 100 may be configured to: receive a communication signal sent by a nearby radio access device, and obtain a radio signal fingerprint based on the communication signal. The terminal 100 may determine, based on communication signals and the elevator zone fingerprint library provided by the server 300, one or more positions near the elevator. The one or more positions may be used to determine the parking position of the user vehicle.

The terminal 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the terminal 100 may include one or N displays 194, where N is a positive integer greater than 1.

The terminal 100 may implement a photographing function by using the ISP, the camera 193, the video codec, the GPU, the display 194, the application processor, and the like. The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the terminal 100 may include one or N cameras 193, where N is a positive integer greater than 1.

The digital signal processor is configured to process a digital signal, and may process another digital signal in addition to the digital image signal. For example, when the terminal 100 selects a frequency, the digital signal processor is configured to perform Fourier transformation on frequency energy.

The video codec is configured to compress or decompress a digital video. The terminal 100 may support one or more video codecs. In this way, the terminal 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, and quickly processes input information by drawing on a structure of a biological neural network, for example, a transfer mode between human brain neurons, and may further continuously perform self-learning. Applications such as intelligent cognition of the terminal 100 may be implemented through the NPU, for example, image recognition, facial recognition, speech recognition, and text understanding.

The interface 120 for external memory may be configured to connect to an external memory card, for example, a micro SD card, to extend a storage capability of the terminal 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The processor 110 runs the instructions stored in the internal memory 121, to implement various function applications and data processing of the terminal 100. The internal memory 121 may include a program storage region and a data storage region. The program storage region may store an operating system, an application required by at least one function (for example, a voice playing function or an image playing function), and the like. The data storage region may store data (for example, audio data and a phone book) and the like created when the terminal 100 is used. In addition, the internal memory 121 may include a high-speed random access memory, or may include a nonvolatile memory, for example, at least one magnetic disk storage device, a flash memory, or a universal flash storage (universal flash storage, UFS).

The terminal 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. The speaker 170A, also referred to as a "loudspeaker", is configured to convert an audio electrical signal into a sound signal. The terminal 100 may be configured to listen to music or answer a call in a hands-free mode over the speaker 170A. In embodiments of this application, the terminal 100 may broadcast, over the speaker 170A, the prompt information used to prompt the user to proceed to the position of the user vehicle. The receiver 170B, also referred to as an "earpiece", is configured to convert an electrical audio signal into a sound signal. The microphone 170C, also referred to as a "mike" or a "mic", is configured to convert a sound signal into an electrical signal. The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal.

The gyroscope sensor 180B may be configured to determine a moving posture of the terminal 100. In some embodiments, angular velocities of the terminal 100 around three axes (namely, x, y, and z axes) may be determined by using the gyroscope sensor 180B.

The barometric pressure sensor 180C is configured to measure barometric pressure.

The magnetic sensor 180D includes a Hall sensor.

The acceleration sensor 180E may detect magnitudes of accelerations of the terminal 100 in various directions (usually on three axes).

In embodiments of this application, the terminal 100 may collect inertia data by using the gyroscope sensor 180B and the acceleration sensor 180E. The terminal 100 may obtain a pedestrian moving trajectory through calculation based on inertia data by using an algorithm (for example, a PDR algorithm), or obtain a vehicle traveling trajectory through calculation by using an algorithm (for example, a VDR algorithm).

Optionally, this is not limited to the gyroscope sensor 180B and the acceleration sensor 180E. The terminal 100 may not include the gyroscope sensor 180B and the acceleration sensor 180E, and includes only an inertia measurement unit (not shown in FIG. 10). The inertia measurement unit may be configured to detect and measure acceleration and rotation motion, and obtain inertia data. The inertia measurement unit may include an accelerometer, an angular velocity meter (or referred to as a gyroscope), a magnetometer, and the like.

The terminal 100 may determine, by using the wireless communication module 160 and/or the pedometer (not shown in FIG. 10), whether the user gets off the vehicle. In some examples, the terminal 100 does not include a pedometer, and may determine, by using the gyroscope sensor 180B, the acceleration sensor 180E, or the inertia measurement unit, whether the user gets off the vehicle. For details, refer to the foregoing embodiments. Details are not described herein again.

The terminal 100 may further determine, by using the barometric pressure sensor 180C, the magnetic sensor 180D, the gyroscope sensor 180B, the acceleration sensor 180E, or the inertia measurement unit, whether the user takes the elevator. The barometric pressure sensor 180C may be configured to detect an altitude of the terminal 100. The terminal 100 may detect, within preset duration by using the barometric pressure sensor 180C, a height change difference of the terminal 100, to determine whether the user takes the elevator. The magnetic sensor 180D may be configured to detect a geomagnetic change near the terminal 100. When the terminal 100 passes through an inter-floor partition along with the elevator, a specified geomagnetic change feature appears. The terminal 100 may determine whether the user takes the elevator by detecting whether the specified geomagnetic change feature appears by using the magnetic sensor 180D within the preset duration. The terminal 100 may obtain, by using the gyroscope sensor 180B and the acceleration sensor 180E, a speed or an acceleration value of the user in an elevator ascending/descending direction, and determine, based on this, whether the user takes the elevator. The terminal 100 may obtain, by using the inertia measurement unit, the speed or the acceleration of the user in the elevator ascending or descending direction, and determine, based on this, whether the user takes the elevator.

It should be noted that, when taking the elevator, the user tends to keep in a static state. Therefore, when detecting, by using the pedometer, the gyroscope sensor 180B, the acceleration sensor 180E, or the inertia measurement unit, that a step quantity of the user does not increase, the terminal 100 may further determine that the terminal 100 does not have displacement in a horizontal direction, that is, the user does not walk. Then, the terminal 100 may detect, by using the foregoing sensor, whether the user takes the elevator. In this way, a determining result can be accurate. It should be further noted that the terminal may determine, in one or more of the foregoing plurality of manners, whether the user takes the elevator, thereby increasing accuracy of the determining result.

In some examples, the terminal 100 may process, by using the NPU, sensor data obtained by the sensor, to obtain a moving trajectory of the user or a traveling trajectory of the vehicle. In some examples, the terminal 100 may alternatively obtain, by using the NPU, a similarity degree between a received radio signal fingerprint and a radio signal fingerprint in the elevator zone fingerprint library provided by the server 300.

The distance sensor 180F is configured to measure a distance. The optical proximity sensor 180G may include, for example, a light-emitting diode (LED) and an optical detector, for example, a photodiode. The terminal 100 detects infrared reflected light from a nearby object by using the photodiode. When sufficient reflected light is detected, the terminal 100 may determine that there is an object near the terminal 100. When insufficient reflected light is detected, the terminal 100 may determine that there is no object near the terminal 100. The terminal 100 may detect, by using the optical proximity sensor 180G, that the user holds the terminal 100 close to an ear for a call, to automatically turn off a screen for power saving. The ambient light sensor 180L is configured to sense ambient light brightness. The fingerprint sensor 180H is configured to collect a fingerprint. The temperature sensor 180J is configured to detect a temperature. The touch sensor 180K is also referred to as a touch panel. The touch sensor 180K may be disposed in the display 194, and the touch sensor 180K and the display 194 form a touchscreen, which is also referred to as a "touchscreen". The touch sensor 180K is configured to detect a touch operation performed on or near the touch sensor. The touch sensor may transfer the detected touch operation to the application processor to determine a type of the touch event. A visual output related to the touch operation may be provided through the display 194. The bone conduction sensor 180M may obtain a vibration signal. The button 190 includes a power button, a volume button, and the like. The button 190 may be a mechanical button, or may be a touch button. The terminal 100 may receive a button input, and generate a button signal input related to a user setting and function control of the terminal 100. The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card.

It should be noted that, for a hardware structure of the head unit terminal of the vehicle 200, refer to the description of the hardware structure of the terminal 100. Details are not described herein again.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A positioning method, applied to a terminal, wherein the method comprises:

   displaying a first control, first prompt information, and a first traveling trajectory when it is detected that a vehicle travels to a first elevator in a parking lot, wherein the first traveling trajectory indicates the vehicle to travel into a first vacant parking space, and the first prompt information is used to prompt a user to get off the vehicle at the first elevator;
   receiving a first input for the first control; and
   sending a first message to the vehicle in response to the first input, wherein the first message indicates the vehicle to travel into the first vacant parking space based on the first traveling trajectory.

2. The method according to claim 1, wherein after sending the first message to the vehicle, the method further comprises:

   receiving a second message of the vehicle, wherein the second message indicates that the vehicle has traveled into the first vacant parking space; and
   displaying second prompt information in response to the second message, wherein the second prompt information is used to prompt that the vehicle is parked in the first vacant parking space.

3. The method according to claim 2, wherein after sending the first message to the vehicle, the method further comprises:

   obtaining a second traveling trajectory along which the vehicle departs from the first elevator;
   determining a position of the vehicle based on the second traveling trajectory; and
   displaying the first traveling trajectory and a vehicle identifier based on the position of the vehicle, wherein the vehicle identifier indicates the position of the vehicle on the first traveling trajectory.

4. The method according to claim 2 or 3, wherein after displaying the second prompt information, the method further comprises:

   receiving a second input; and
   displaying a position of the first elevator, the first vacant parking space, and the first traveling trajectory in response to the second input.

5. The method according to claim 4, wherein displaying the position of the first elevator, the first vacant parking space, and the first traveling trajectory in response to the second input specifically comprises: when it is detected that a distance between the terminal and the first elevator is less than a preset distance, displaying the position of the first elevator, the first vacant parking space, and the first traveling trajectory in response to the second input.

6. The method according to claim 4 or 5, wherein the method further comprises: displaying third prompt information, wherein the third prompt information is used to prompt the user to proceed from the first elevator to the first vacant parking space based on the first traveling trajectory.

7. The method according to claim 4, wherein after displaying the position of the first elevator, the first vacant parking space, and the first traveling trajectory, the method further comprises:

   receiving a third input for a first position on the first traveling trajectory; and
   in response to the third input, displaying a positioning identifier at the first position on the first traveling trajectory, and sending a third message to the vehicle, wherein the third message is used to notify the vehicle to travel from the first vacant parking space to the first position based on the first traveling trajectory.

8. The method according to claim 2 or 3, wherein the method further comprises:

    receiving a fourth input; and
    sending a fourth message to the vehicle in response to the fourth input, wherein the fourth message is used to notify the vehicle to travel from the first vacant parking space to a position of the first elevator based on the first traveling trajectory.

9. The method according to claim 8, wherein after sending the fourth message to the vehicle, the method further comprises:

    receiving a fifth message of the vehicle, wherein the fifth message indicates that the vehicle has arrived at the first elevator; and
    displaying fourth prompt information in response to the fifth message, wherein the fourth prompt information is used to prompt that the vehicle arrives at the first elevator.

10. The method according to any one of claims 1 to 3, wherein the method further comprises:

    receiving a fifth input; and
    displaying an identifier of an elevator in the parking lot, a user identifier, and an identifier of the first vacant parking space in response to the fifth input, wherein the user identifier indicates a position of the terminal.

11. The method according to any one of claims 1 to 10, wherein before displaying the first control, the first prompt information, and the first traveling trajectory, the method further comprises:

    when it is detected that the vehicle travels into the parking lot, obtaining a third traveling trajectory along which the terminal departs from an entry of the parking lot, and collecting radio signal fingerprints at a plurality of positions on the third traveling trajectory;
    sending the third traveling trajectory and the radio signal fingerprints at the plurality of positions on the third traveling trajectory to a server, wherein the server is configured to determine, based on the radio signal fingerprints at the plurality of positions, one or more traveling trajectories that intersect or overlap the third traveling trajectory, wherein the one or more traveling trajectories are used to guide the vehicle to travel into one or more vacant parking spaces, and the one or more traveling trajectories comprise the first traveling trajectory; and
receiving the one or more traveling trajectories sent by the server.

12. The method according to claim 11, wherein the one or more traveling trajectories further comprise a fourth traveling trajectory; and when displaying the first control, the first prompt information, and the first traveling trajectory, the method further comprises:

    displaying the fourth traveling trajectory; and
    before receiving the first input for the first control, the method further comprises:
    receiving a sixth input of selecting the first traveling trajectory.

13. The method according to any one of claims 1 to 12, wherein before displaying the first control, the first prompt information, and the first traveling trajectory, the method further comprises:

    receiving parking information that is of the first vacant parking space and that is sent by the server, wherein the parking information comprises reporting time, a quantity of reporting times, and vacancy density; and
    calculating a confidence of the first vacant parking space based on the parking information of the first vacant parking space, wherein the confidence is used to determine whether the vehicle supports autonomous driving into the first vacant parking space; and
    displaying the first control, the first prompt information, and the first traveling trajectory specifically comprises:
    displaying the first control, the first prompt information, and the first traveling trajectory when it is determined that the confidence of the first vacant parking space is greater than a preset confidence.

14. The method according to any one of claims 1 to 13, wherein the method further comprises:
obtaining, by the terminal, position information that is of a vacant parking space and that is collected by the vehicle in a traveling process, and sending the position information of the vacant parking space to the server, wherein the position information of the vacant parking space indicates a relative position relationship between a traveling trajectory of the vehicle and the vacant parking space.

15. A positioning method, applied to a server, wherein the method comprises:

    receiving a first traveling trajectory and radio signal fingerprints at a plurality of positions on the first traveling trajectory that are sent by a terminal;

determining, based on the radio signal fingerprints at the plurality of positions, one or more traveling trajectories that intersect or overlap the first traveling trajectory, wherein the one or more traveling trajectories are used to guide a vehicle to travel into vacant parking spaces in a parking lot; and

sending the one or more traveling trajectories to the terminal.

16. The method according to claim 15, wherein determining the one or more traveling trajectories that intersect or overlap the first traveling trajectory specifically comprises:

determining, based on a plurality of elevator zone fingerprint libraries, that radio signal fingerprints at N positions in the plurality of positions on the first traveling trajectory match an elevator zone fingerprint library of a first elevator, wherein N is greater than or equal to 1, and the elevator zone fingerprint library comprises a correspondence between position information within a preset range of an elevator and a radio signal fingerprint;

determining a position relationship between the first traveling trajectory and an elevator in the parking lot based on the N positions; and

determining, based on the position relationship, the one or more traveling trajectories that intersect or overlap the first traveling trajectory.

17. The method according to claim 15 or 16, wherein the method further comprises:

obtaining a traveling trajectory, radio signal fingerprints at a plurality of positions on the traveling trajectory, and position information of a vacant parking space that are collected by the terminal, wherein the position information of the vacant parking space indicates a relative position relationship between the vacant parking space and the traveling trajectory;

determining position information of the traveling trajectory based on the radio signal fingerprints at the plurality of positions on the traveling trajectory and the elevator zone fingerprint library, wherein the position information of the traveling trajectory indicates a relative position relationship between the traveling trajectory and an elevator in the parking lot; and

storing the position information of the traveling trajectory and the position information of the vacant parking space.

18. A terminal, comprising one or more processors, one or more memories, and a transceiver, wherein the transceiver and the one or more memories are coupled to the one or more processors, the transceiver is configured to collect a radio signal fingerprint, the one or more memories are configured to store a computer-executable program, and when the one or more processors execute the computer-executable program, the terminal is enabled to perform the method according to any one of claims 1 to 14.

19. A computer-readable storage medium, wherein the computer-readable storage medium stores a computer-executable program, and when the computer-executable program runs on a computer, the computer is enabled to perform the method according to any one of claims 1 to 14.

Building 10

Floor 12

Floor 11

FIG. 1

**Communication system 20**

One or more terminals

A plurality of radio access devices

Terminal 100

...

Server 300

FIG. 2

FIG. 3

S401: A terminal 100 detects traveling into a parking lot of a building 10, and collects a traveling trajectory of the terminal 100 that departs from an entry of the parking lot, radio signal fingerprints at a plurality of positions on the traveling trajectory of the terminal 100, and a vacant parking space near the traveling trajectory of the terminal 100

S402: The terminal 100 obtains, from a server 300 based on collected data, one or more traveling trajectories indicating a vehicle 200 to proceed to vacant parking spaces in the building 10

S403: The terminal 100 displays the one or more traveling trajectories that are provided by the server 300 and that indicate the vehicle 200 to proceed to the vacant parking spaces, position information of the vacant parking spaces, and vacant parking space prompt information, where the vacant parking space prompt information is used to prompt a user to proceed to the vacant parking space based on the traveling trajectory

FIG. 4

FIG. 5

42    44

Intersection    Traveling
point    trajectory 2

Traveling trajectory 1

Elevator 31

43    45

41

46

FIG. 6

**100**

Gallery    Settings    Weather    Parking

702

701

Phone    Messages    Contacts    Camera

FIG. 7A

FIG. 7B

FIG. 7C

**100**

FIG. 7D

Elevator 31

Parking space 41

FIG. 8

**100**

731A — Automatic parking assist — 711

731B — Already arrived at the elevator hall, and you can get off the vehicle here. Select a vacant parking space after getting off the vehicle, and touch the "Automatic parking assist" button. The vehicle will automatically proceed to the vacant parking space for parking

731 — 712

713B

713C

713 — 713A

Vehicle

Vacant parking space

Elevator

713F

713D

715 — Navigation    Parking    Vehicle finding

715A    715B    715C

FIG. 9A

**100**

FIG. 9B

100

Parked

733

711

712

713B

713G

713D

713

713F

Vehicle

Vacant parking space

Elevator

715

Navigation

Parking

Vehicle finding

715A

715B

715C

FIG. 9C

FIG. 10

S1101: A terminal 100 receives an input of a user for vehicle finding

S1102: In response to the input of the user for vehicle finding, the terminal 100 obtains a traveling trajectory 3 based on a traveling trajectory 1 collected when a vehicle 200 is on the way to a vacant parking space, where the traveling trajectory 1 includes a parking position and an elevator position, and the traveling trajectory 3 is used by the vehicle 200 to return from the parking position to the elevator position

S1103: The terminal 100 determines that a confidence of the traveling trajectory 3 is greater than a preset trajectory confidence threshold, and notifies the vehicle 200 to proceed from the parking position to the elevator position based on the traveling trajectory 3

FIG. 11

Backtracked vehicle pickup route

Elevator position

VDR trajectory for parking

Parking position

FIG. 12

**100**

FIG. 13A

FIG. 13B

FIG. 13C

Elevator 31

Parking space 41

FIG. 14

FIG. 15A

**100**

Select a target position on the route. The vehicle will automatically proceed to the target position

711

771

741

772D

772E 773

772

772A

772C

772B

○ Target position

⊠ Elevator

▣ Parking position

▼ My position

772F

715

Navigation

Parking

**Vehicle finding**

715A

715B

715C

FIG. 15B

**100**

The vehicle is proceeding to the target position

711

781

741

772

772D

772E

783

772A

772B

○ Target position

⊠ Elevator

Parking position

📍 My position

772F

Navigation

Parking

**Vehicle finding**

715

715A

715B

715C

FIG. 15C

FIG. 16

FIG. 17

FIG. 18

FIG. 19

| ‖ | Entry/<br>Exit | ▯ | Parking<br>space | Elevator | – – ▶ | Direction of road travel |

FIG. 20

**100**

FIG. 21A

**100**

Navigating. Proceed to the parking space along the route shown in the figure

811

800

801

812

803B

803A

803

806

Navigation

**Parking**

Vehicle finding

806A

806B

806C

FIG. 21B

**100**

FIG. 21C

**100**

Tap an elevator hall identifier to
select a target elevator hall

823

824

My position — 824A

— 824B

800

821

822D

822C

822A

822B

822

822E

806

P

Navigation    Parking    Vehicle finding

806A    806B    806C

FIG. 22A

FIG. 22B

**100**

FIG. 22C

**100**

842 — Proceed to the target elevator hall based on the route prompt shown in the figure

843 — Tap a corresponding parking space identifier to mark a vacant parking space on the way to the elevator hall, thank you

My position — 824A

Elevator 31 — 824B

824

800

821

844

822D

822C

822B

822A

841

822

822E

806

Navigation      P Parking      Vehicle finding

806A

FIG. 22D

FIG. 22E

**100**

**Automatic parking assist**

863 — Select a target parking space and get off the vehicle at the marked elevator. The vehicle will automatically proceed to the target parking space

800

801

862

862B    862C

862A

Depart    864    Cancel    865

806

Navigation    **Parking**    Vehicle finding

806B

FIG. 23A

**100**

FIG. 23B

**100**

868 — The vehicle has arrived — 800

801

862

862B

862A

806 — Navigation

**P**

**Parking**

Vehicle finding

80B

FIG. 23C

**100**

**Vehicle summon**

873 — The vehicle is at B1-C08, and will pick you up along the route shown in the figure

800

871

872

872C

872B

872A

874 — Confirm the current position
(drag the mark to change the current position)

874A

Confirm — 874B    Cancel — 874C

806 — Navigation    Parking    **Vehicle finding**

806C

FIG. 24A

**100**

FIG. 24B

FIG. 24C

Terminal 100

Antenna 1    Antenna 2

| Mobile communication module 2G/3G/4G/5G [150] | Wireless communication module BT/WLAN/GNSS/NFC/IR/FM/ Satellite communication [160] |

Speaker [170A]

Receiver [170B]

Audio module [170]

Microphone [170C]

Headset jack [170D]

Displays 1 to N [194]

Cameras 1 to N [193]

Indicator [192]

Motor [191]

Button [190]

Internal memory [121]

SIM card interfaces 1 to N [195]

Interface [120] for external memory

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [130]

Charging input

Charging management module [140]

Power management module [141]

Battery [142]

FIG. 25

## INTERNATIONAL SEARCH REPORT

| International application No. |
|---|
| **PCT/CN2024/109831** |

**A. CLASSIFICATION OF SUBJECT MATTER**

B60W 50/14(2020.01)i; G08G1/14(2006.01)i; G08G1/017(2006.01)i; G08G1/137(2006.01)i

According to International Patent Classification (IPC) or to both national classification and IPC

**B. FIELDS SEARCHED**

Minimum documentation searched (classification system followed by classification symbols)

IPC:B60W G08G

Documentation searched other than minimum documentation to the extent that such documents are included in the fields searched

Electronic data base consulted during the international search (name of data base and, where practicable, search terms used)

CNABS, CNTXT, DWPI, ENTXT, CNKI: 商场, 电梯, 车位, 地图, 路径, 自动, 泊车, 找车, mall, elevator, parking palce, map, route, auto parking, find, search

**C. DOCUMENTS CONSIDERED TO BE RELEVANT**

| Category* | Citation of document, with indication, where appropriate, of the relevant passages | Relevant to claim No. |
|---|---|---|
| X | CN 116403433 A (XI'AN UNIVERSITY OF ARCHITECTURE AND TECHNOLOGY) 07 July 2023 (2023-07-07) <br> description, paragraphs 0049-0089, and figures 1-5 | 1-19 |
| A | CN 105469625 A (CHENGDU MANMIAO TECHNOLOGY CO., LTD.) 06 April 2016 (2016-04-06) <br> entire document | 1-19 |
| A | CN 105741600 A (SHANDONG ALADING INFORMATION TECHNOLOGY CO., LTD.) 06 July 2016 (2016-07-06) <br> entire document | 1-19 |
| A | CN 114495552 A (SOUTHEAST UNIVERSITY CHENGXIAN COLLEGE) 13 May 2022 (2022-05-13) <br> entire document | 1-19 |
| A | CN 115171424 A (HOZON NEW ENERGY AUTOMOBILE CO., LTD.) 11 October 2022 (2022-10-11) <br> entire document | 1-19 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 October 2024** | **11 November 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/109831** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2021237717 A1 (BEIJING BAIDU NETCOM SCIENCE AND TECHNOLOGY CO., LTD.) 05 August 2021 (2021-08-05)<br>    entire document | 1-19 |

Form PCT/ISA/210 (second sheet) (July 2022)

**INTERNATIONAL SEARCH REPORT**
Information on patent family members

International application No.

**PCT/CN2024/109831**

| Patent document cited in search report | | | Publication date (day/month/year) | Patent family member(s) | | | Publication date (day/month/year) |
|---|---|---|---|---|---|---|---|
| CN | 116403433 | A | 07 July 2023 | None | | | |
| CN | 105469625 | A | 06 April 2016 | None | | | |
| CN | 105741600 | A | 06 July 2016 | None | | | |
| CN | 114495552 | A | 13 May 2022 | None | | | |
| CN | 115171424 | A | 11 October 2022 | None | | | |
| US | 2021237717 | A1 | 05 August 2021 | KR | 20210089602 | A | 16 July 2021 |
| | | | | KR | 102564430 | B1 | 08 August 2023 |
| | | | | JP | 2021140822 | A | 16 September 2021 |
| | | | | JP | 7204823 | B2 | 16 January 2023 |
| | | | | EP | 3893148 | A1 | 13 October 2021 |

Form PCT/ISA/210 (patent family annex) (July 2022)

**REFERENCES CITED IN THE DESCRIPTION**

**Patent documents cited in the description**

- CN 202310990651